# NEUE EUROPÄISCHE PATENTSCHRIFT

(11) **EP 3 395 875 B2**
(45) Veröffentlichungstag und Bekanntmachung des Hinweises auf die Entscheidung über den Einspruch: **25.01.2023**
(45) Hinweis auf die Patenterteilung: 08.04.2020
(21) Anmeldenummer: 17167701.6
(22) Anmeldetag: 24.04.2017
(51) Int. Cl.: C08K 5/18, C08K 5/3437, C08K 5/3445, C08K 5/3465, C08K 5/375, G01S 7/481, G01S 17/93

(54) **LASERSTRAHL-DURCHLÄSSIGES SUBSTRATMATERIAL FÜR SENSORANWENDUNGEN**
LASER BEAM-PERMEABLE SUBSTRATE MATERIAL FOR SENSOR APPLICATIONS
MATÉRIAU MATRICIEL TRANSPARENT AU RAYON LASER POUR APPLICATIONS DE DÉTECTION

(43) Veröffentlichungstag der Anmeldung: 31.10.2018
(73) Patentinhaber: Covestro Deutschland AG, 51373 Leverkusen (DE)
(72) Erfinder: Grosser, Ulrich, 51515 Kürten (DE); Meyer, Alexander, 40489 Düsseldorf (DE); Klein, Andreas, 51371 Leverkusen (DE)
(74) Vertreter: Levpat

(56) Entgegenhaltungen:
- WO-A1-2013/079477
- WO-A1-2014/095967
- WO-A1-2016/164131
- WO-A2-2008/127752
- WO-A2-2012/153309
- DE-A1-102006 022 925
- GB-A- 2 287 817
- Anonymous: "Materials inspiring future electric, autonomous vehicle design", Covestro, 1 March 2017 (2017-03-01), pages 1-2,
- Anonymous: "Polycarbonate-Blends in Automotive", Bayer, 1 January 2010 (2010-01-01), pages 1-74,

## Beschreibung

Die Erfindung betrifft ein Fahrzeug, umfassend einen LiDAR-Sensor, der Laserpulse mit einer Wellenlänge im Bereich von 800 nm bis 2500 nm emittiert, und eine Abdeckung für diesen LiDAR-Sensor aus einer thermoplastischen Zusammensetzung. Die Erfindung betrifft außerdem die Verwendung eines Formteils mit einer Substratschicht umfassend einen Bereich aus einer thermoplastischen Zusammensetzung zur teilweisen oder vollständigen Abdeckung eines LiDAR-Sensors, der Laserpulse mit einer Wellenlänge im Bereich von 800 nm bis 2500 nm zur Abtastung der Umgebung emittiert.

Auf thermoplastischem Material basierende Bauteile bieten für den Einsatz im Fahrzeugbereich viele Vorteile gegenüber herkömmlichen Materialien wie z.B. Glas. Hierzu zählen z.B. erhöhte Bruchsicherheit und/oder Gewichtsersparnis, die im Fall von Automobilen eine höhere Insassensicherheit bei Verkehrsunfällen und einen niedrigeren Kraftstoffverbrauch ermöglichen. Schließlich lassen Werkstoffe, die thermoplastische Polymere enthalten, aufgrund der einfacheren Formbarkeit eine wesentlich größere Designfreiheit zu.

Fahrerassistenzsysteme wie Notbremsassistenten, Spurverlassenswarner, Verkehrszeichenerkennungssysteme, adaptive Geschwindigkeitssteuerungssysteme und Abstandshalter sind bekannt und werden in heutigen Fahrzeugen eingesetzt. Für die Umsetzung der genannten Funktionen werden Umgebungserfassungssensoren, die sich i.d.R. auf Radar-, LiDAR- und Kamerasensoren stützen, eingesetzt. Die in der vorliegenden Erfindung beschriebenen Substratmaterialien sind insbesondere für LiDAR-Sensoren geeignet.

LiDAR (Abkürzung für engl. Light detection and ranging) oder auch LaDAR (Laser detection and ranging), ist eine dem Radar verwandte Methode zur optischen Abstands- und Geschwindigkeitsmessung. Statt der Radiowellen beim Radar werden Laserstrahlen verwendet.

Im Bereich der Fahrerassistenzsysteme haben sich vor allem Radarsensoren z.B. für die adaptive Geschwindigkeitsregelung (ACC) durchgesetzt. Für weitere Systeme wie Spurwechselassistent, Stauassistent, Totwinkelüberwachung, Kreuzungsassistent und Precrashsensorik werden Sensoren benötigt, die bei großem horizontalen Erfassungsbereich (bis zu 180°) auch eine gute Winkelauflösung aufweisen, den Nahbereich < 20 m abdecken, eine hohe Datenwiederholrate haben und kostengünstig darstellbar sind. Für diese Anwendungen bietet sich die LiDAR-Sensorik an.

Aufgabe der hier vorliegenden Erfindung war es, ein Fahrzeug bzw. eine Vorrichtung für ein Fahrzeug bereitzustellen mit einer Kombination aus einem LiDAR-Sensor, welcher in einem Wellenlängenbereich von 800 bis 2500 nm arbeitet, und einer geeigneten Abdeckung aus einem thermoplastischen Substratmaterial, welche zur Umgebungsüberwachung von Fahrzeugen eingesetzt wird.

Da thermoplastische Materialien i.d.R. durchlässig für IR-Strahlung sind, sollten diese prinzipiell für derartige Sensorsysteme geeignet sein. Überraschenderweise eignen sich jedoch die meisten herkömmlichen Thermoplasten, welche im Automobilaußenbereich eingesetzt werden, nicht für derartige Sensoren. So ließ sich zeigen, dass schon geringe Wandstärken von weniger als 1 mm bei vielen Thermoplasten genügen, die Signalstärke eines LiDAR-Sensors derart deutlich herabsetzen, dass sie für solche Systeme ungeeignet sind. Hierzu zählen z.B. Polyolefine, Polyamide, ABS, PC/ABS-Blends und weitere im Automobilaußenbereich gängig eingesetzte thermoplastische Materialien. Dieses war überraschend und aus dem vorliegenden Stand der Technik nicht ableitbar. Gerade Abdeckungen aus dunklem, eingefärbten Material wären jedoch interessant, da der LiDAR-Sensor hinter ihnen verborgen werden könnte.

Im Stand der Technik sind verschiedene thermoplastische Systeme beschrieben, die prinzipiell eine Durchlässigkeit für elektromagnetische Wellen aufweisen.

In CN 105400189 A wird ein Laserstrahlen-durchlässiges opakes Substratmaterial auf Basis eines Polyurethan-Polyester-Systems beschrieben. Es werden spezielle Farbmittelkombinationen aufgeführt, die für diese Polyurethan-Polyester-basierten Systeme geeignet sind und für Laserstrahlen. Derartige Zusammensetzungen sind insbesondere für das Laserschweißen geeignet. Substratmaterialien auf Basis von Polycarbonat sind nicht beschrieben. Sensor-geeignete Substratmaterialien sind ebenfalls nicht beschrieben.

In der WO 2016/037865 A1 sind Automobilaußenteile in glasartiger Optik beschrieben. Substratmaterialien, die für LiDAR-Systeme geeignet sind, werden hier nicht beschrieben.

In der WO 2008/12775 A1 werden Radarsensoren für Automobilanwendungen beschrieben. Diese Sensoren arbeiten jedoch im Bereich von 20 - 25 GHz und lassen keinen Rückschluss auf geeignete Substratmaterialien für Laser-gestützte Systeme im IR-Bereich zu.

In der WO 2008/149093 A1 werden laminierte und pigmentierte Glassysteme beschrieben, die unter anderem für LiDAR-Sensoren geeignet sind. Es konnte gezeigt werden, dass die Pigmente in einer Polycarbonatzusammensetzung die Laserstrahlendurchlässigkeit signifikant behindern. Damit ist aus diesem Dokument keine Lösung für Polycarbonat-basierte Substratmaterialien abzuleiten.

Die WO 2007/131491 A2 beschreibt Fahrzeugbauteile mit verdeckt angeordneten Sensoren. In dieser Anmeldung wird die Konstruktion derartiger Bauteile, insbesondere die Halterung der Sensoren, beschrieben. Spezielle Zusammensetzungen für Polycarbonat-haltige Substratmaterialien werden nicht beschrieben.

Die EP 1772667 A2 beschreibt Kunststoffbauteile mit verdeckt angeordneten Lichtelementen. Das Kunststoffbauteil verdeckt dabei das Lichtelement, ist aber für die entsprechende Strahlung transparent oder semitransparent. Um dies zu erreichen, enthält das Substrat Effektpigmente. Derartige Pigmente sind für Laser-gestützte Systeme ungeeignet, da sie zu Streuung führen.

In der JP 2003-004942 A werden Mehrschichtkörper beschrieben, welches aus verschiedenen Lagen von Materialien bestehen, die einen unterschiedlichen Brechungsindex aufweisen. Diese Systeme sind für IR-Strahlung durchlässig. Allerdings werden an Materialien für Abdeckungen für Laser-gestützte IR-Sensoren deutlich höhere Anforderungen gestellt. Es werden keine Lasergestützten Sensoren beschrieben.

Die US 2016/0291134 A1 berichtet über den Einsatz von LiDAR-Sensoren im Automobilbereich zum autonomen bzw. teilautonomen Fahren. Auf geeignete Substratmaterialien zur Abdeckung oder Einhausung von LiDAR-Sensoren wird nicht eingegangen.

Im Stand der Technik sind somit für IR-Strahlung durchlässige Systeme, die auf thermoplastischen Substraten bestehen, beschrieben. Derartige Substrate sind z.B. für Infrarotkameras oder zum Laserschweißen geeignet. Allerdings ergibt sich daraus keine Lehre zum Handeln, da Laser-gestützte Sensor-Systeme, die im IR-Bereich arbeiten, eine deutlich erhöhte Empfindlichkeit aufweisen. So führen geringste Streuungen zu Fehlern in der Sensorik und machen damit entsprechende Substratmaterialien unbrauchbar. Es konnte ferner gezeigt werden, dass eine Vielzahl von Substratmaterialien, die eine Durchlässigkeit für IR-Strahlung aufweisen, nicht für LiDAR-Sensoren geeignet sind. Ferner wird im Stand der Technik schon gar nicht auf genaue Polycarbonatzusammensetzungen eingegangen, so dass der Fachmann hieraus keine Informationen entnehmen konnte, um für LiDAR-Sensoren geeignete Polycarbonat-haltige Substratmaterialien bereitzustellen.

Opake thermoplastische Materialien, insbesondere solche auf der Basis von aromatischem Polycarbonat, welche für Kfz-, Schienenfahrzeug- und Luftfahrzeug-Außenteile etc. einsetzbar sind und zur Umgebungsüberwachung für Fahrzeuge durch LiDAR-Sensoren geeignet sind, sind somit nicht beschrieben.

Kfz-Außenteile aus thermoplastischem Material, die im Kraftfahrzeug-, Schienenfahrzeug- und Luftfahrzeug- bzw. im Infrastrukturbereich eingesetzt werden, sollten zudem möglichst eine lange Lebensdauer aufweisen und während dieser nicht verspröden, d.h. sie sollten möglichst witterungsstabil sein. Auch Farbe und Oberfläche (Glanzeffekt) sollten sich nach Möglichkeit nur geringfügig verändern. Ferner sollten die thermoplastischen Teile möglichst über eine ausreichende Kratzfestigkeit verfügen.

Aufgabe der hier vorliegenden Erfindung war es somit, entsprechende Fahrzeuge bereitzustellen, die eine Kombination zur Umgebungsüberwachung aus einer Abdeckung aus einem geeigneten thermoplastischen Substratmaterial und einen LiDAR-Sensor, der im IR-Bereich von 800 nm bis 2500 nm arbeitet, aufweisen. Dabei sollte möglichst noch mindestens eine der weiteren vorgenannten Anforderungen erfüllt bzw. Nachteile überwunden werden.

Überraschend wurde gefunden, dass die Aufgabe durch den Gegenstand nach Anspruch 1 bzw. durch ein Fahrzeug, umfassend ein solches System, gelöst wird.

Dabei wird "System" nicht nur im engen Sinne eines Paketes aus mechanisch verbundenen Einzelteilen verstanden, sondern auch breiter als bloße Kombination (lediglich) funktionell zu einer Einheit verbundener Einzelteile. Der LiDAR-Sensor kann separat in das jeweilige Fahrzeug eingebracht werden und die Abdeckung für eine gewünschte Stelle im Fahrzeug, durch welche die Pulse des LiDAR-Sensors gehen sollen, vorgesehen sein. Ebenso kann es sich aber um eine mechanisch verbundene Kombination handeln.

"Auf Basis von" bedeutet hierbei, dass die Zusammensetzung dieses Polymer als Hauptkomponente enthält, in einem Anteil von mindestens 70 Gew.-%, bevorzugt mindestens 80 Gew.-%, weiter bevorzugt mindestens 84 Gew.-%, noch weiter bevorzugt mindestens 90 Gew.-%, besonders bevorzugt mindestens 95 Gew.-% des jeweiligen Polymers, jeweils bezogen auf die Gesamtzusammensetzung der thermoplastischen Zusammensetzung.

"Transmission im Bereich von 800 nm bis 2500 nm" bedeutet eine gemittelte Transmission über diesen Bereich, gemittelt über alle Wellenlängen in diesem Bereich.

"Abdeckung" bzw. "Verwendung zur Abdeckung" bedeutet erfindungsgemäß, dass die Abdeckung aus bzw. mit dem Teilbereich aus der beschriebenen thermoplastischen Zusammensetzung verwendet wird, um vor den LiDAR-Sensor gesetzt zu werden, um diesen gegen Stoß, Verschmutzung, etc. zu schützen. Eine Abdeckung im erfindungsgemäßen Sinn kann dabei ein den LiDAR-Sensor vollständig oder annähernd vollständig - von Kabelführungen etc. abgesehen- umhüllendes Gehäuse sein. Eine solche Kombination aus Gehäuse und LiDAR-Sensor ist neben dem übergeordneten System des Fahrzeugs gleichfalls ein erfindungsgemäßer Gegenstand. Alle Ausführungsformen und als bevorzugt beschriebenen Gestaltungen gelten selbstverständlich auch für diese Kombination alleine. Ebenso kann die Abdeckung aber auch nur ein Element sein, das den LiDAR-Sensor zur Fahrzeugaußenhaut hin, bevorzugt als Fahrzeugaußenhaut, vorgesetzt ist. Eine solche Abdeckung ist beispielsweise ein Frontpanel oder ein Stoßfänger, bevorzugt ein Frontpanel. Unter einem Frontpanel wird erfindungsgemäß ein Fahrzeugkarosserieteil verstanden, welches als Teil der Außenhülle im vorderen Bereich am Fahrzeug angebracht wird. Dabei kann es sich um einen formgebenden Bestandteil der Fahrzeugfront handeln oder um ein Designelement, welches an der Front des Fahrzeuges angebracht wird. Unter einem "Frontpanel" wird ferner z.B. ein Ersatzteil für einen Kühlergrill verstanden. Durch neue Mobilitätsformen, wie z.B. die Elektromobilität, ist ein Kühlergrill, bestehend aus einer Vielzahl von Öffnungen, nicht mehr nötig. Deshalb ist ein Frontpanel bevorzugt eine in sich geschlossene Frontabdeckung oder ein Karosserieteil, welches ggf. nur vereinzelt Lüftungsschlitze aufweist oder eine Kühlergrilloptik nur noch aus Designgründen beinhaltet und verschiedene Funktionen in sich vereint. Ein derartiges Bauteil kann nahtlos integriert werden und ermöglicht somit ein fugenloses Design zwischen Kotflügel, Motorhaube und ggf. anderen Karosserieteilen. Dabei ist der Bereich der Abdeckung aus der thermoplastischen Zusammensetzung das Element, das von den Laserpulsen des LiDAR-Sensors zur Erfassung der Umgebung durchstrahlt wird. Erfindungsgemäße Abdeckungen sind auch Seitenpanels, z.B. Türelemente, oder Heckpanels, die eine Abdeckung von ggf. erforderlichen seitlichen Sensoren oder am Heck angebrachten Sensoren ermöglichen.

"Substratschicht, umfassend einen Bereich aus einer thermoplastischen Zusammensetzung" ist so zu verstehen, dass der wesentliche Teil der Substratschicht, nämlich der, der vor dem LiDAR-Sensor angeordnet ist, d.h. den LiDAR-Sensor zur Fahrzeugumgebung hin abdeckt, aus einer solchen thermoplastischen Zusammensetzung besteht, d.h. die Substratschicht umfasst einen Bereich, welcher aus einer solchen thermoplastischen Zusammensetzung besteht, wobei dieser Bereich vor dem LiDAR-Sensor, also in dem Bereich, durch den die Signalpulse des LiDAR-Sensors geschickt werden, angeordnet ist. Die Substratschicht kann jedoch auch andere Teilbereiche aus einer anderen thermoplastischen Zusammensetzung, welche nicht die erfindungsgemäßen Merkmale aufweist, aufweisen. Bei einem Frontpanel beispielsweise können dieses Bereiche für Scheinwerferabdeckungen sein, die nicht z.B. schwarz, d.h. opak, sondern transparent sind. Derartige Abdeckungen sind insbesondere im Zwei- oder Mehrkomponenten-Spritzgussverfahren herstellbar. Ebenso kann die Abdeckung Teilbereiche aus unterschiedlichen Zusammensetzungen aufweisen, welche die erfindungsgemäßen Merkmale aufweisen. Erfindungsgemäß bevorzugt besteht die Substratschicht jedoch aus der thermoplastischen Zusammensetzung.

"Bis zu" bedeutet einschließlich des genannten Wertes. Bei "bis zu 20 %" sind somit auch "20 %" umfasst und ebenso im Rundungsbereich liegende Werte, z.B. "20,3 %".

"Substratschicht in dem Bereich aus der thermoplastischen Zusammensetzung in seiner jeweiligen Dicke eine Durchlässigkeit für IR-Strahlung ... von ... aufweist" bedeutet hierbei, dass die IR-Durchlässigkeit an dem jeweiligen Formteil zu bestimmen ist. Die tatsächliche Durchlässigkeit des Bauteils für die IR-Strahlung im Bereich von 800 bis 2500 nm wird hier betrachtet.

Die beschriebenen thermoplastischen Zusammensetzungen sind ausreichend durchlässig für die Laserpulse des LiDAR-Sensors.

Bevorzugt ist erfindungsgemäß ein
Fahrzeug, umfassend
a) einen LiDAR-Sensor, der Laserpulse mit einer Wellenlänge im Bereich von 800 bis 2500 nm aussendet, und
b) eine den LiDAR-Sensor teilweise oder ganz umgebende Abdeckung mit einer Substratschicht, umfassend einen Bereich aus einer thermoplastischen Zusammensetzung auf Basis von aromatischem Polycarbonat und/oder Polyestercarbonat
   wobei die Zusammensetzung eine Lichttransmission im Bereich von 380 bis 780 nm von bis zu 20 %, bevorzugt weniger als 5,0 %, weiter bevorzugt weniger als 1,0 %, noch weiter bevorzugt weniger als 0,1 %, bestimmt bei einer Schichtdicke von 4 mm nach DIN ISO 13468-2: 2006 (D65, 10°), aufweist
   und wobei der Bereich der Substratschicht aus der thermoplastischen Zusammensetzung in seiner jeweiligen Dicke eine Durchlässigkeit für IR-Strahlung im Bereich von 800 nm bis 2500 nm von mindestens 50 %, bestimmt nach DIN ISO 13468-2: 2006, aufweist,
   und wobei die thermoplastische Zusammensetzung
      i) mindestens 70 Gew.-% thermoplastisches Polymer aus der Gruppe, bestehend aus aromatischem Polycarbonat und/oder Polyestercarbonat
      ii) mindestens ein grunes und/oder ein blaues Farbmittel, ausgewählt aus der Gruppe, bestehend aus den Farbmitteln der Formeln (1), (2a-c), (3), (4a), (4b), (5) und/oder (6) 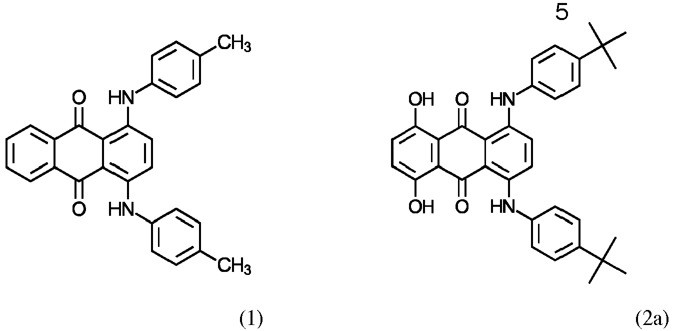 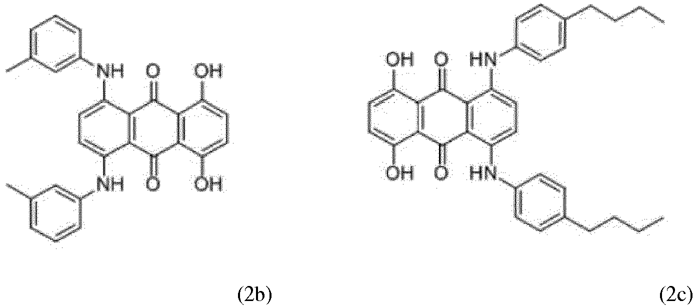 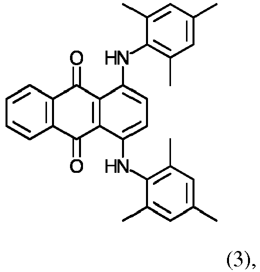 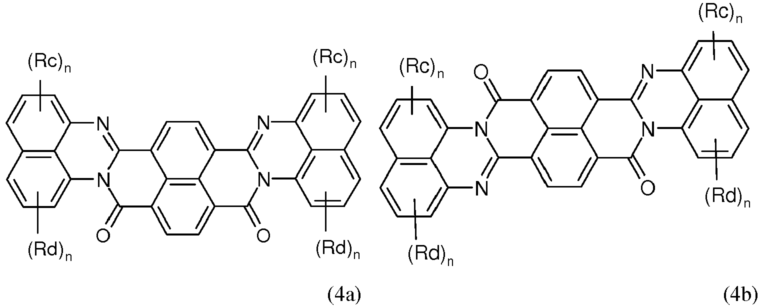 wobei
         - Rc und Rd unabhängig voneinander für einen linearen oder verzweigten Alkylrest oder Halogen stehen,
         - n unabhängig vom jeweiligen R für eine natürliche Zahl zwischen 0 und 3 steht, wobei der Rest für n=0 Wasserstoff ist, 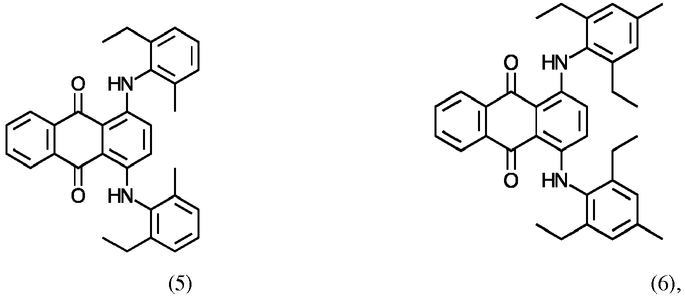 und
      iii) mindestens ein rotes und/oder violettes Farbmittel, ausgewählt aus der Gruppe, bestehend aus den Farbmitteln der Formeln (7), (8), (9), (10), (11), (12a), (12b) und/oder (13) 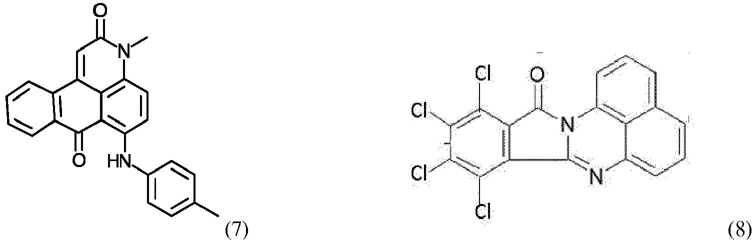 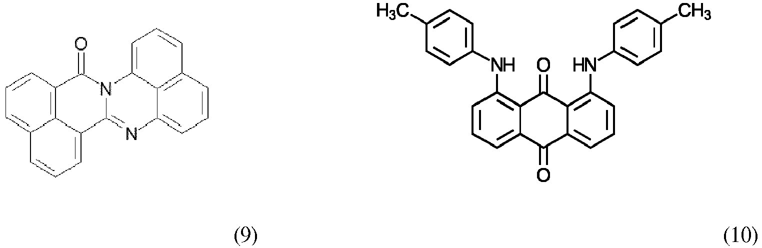 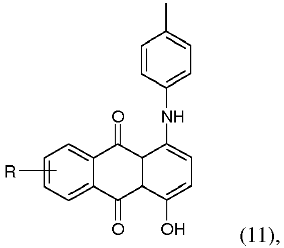 wobei R ausgewählt ist aus der Gruppe, die aus H und p-Methylphenylamin-Rest besteht, 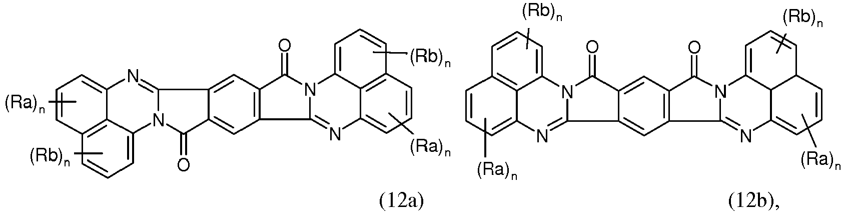 wobei
         - Ra und Rb unabhängig voneinander für einen linearen oder verzweigten Alkylrest oder Halogen stehen,
         - n unabhängig vom jeweiligen R für eine natürliche Zahl zwischen 0 und 3 steht, wobei der Rest für n=0 Wasserstoff ist, 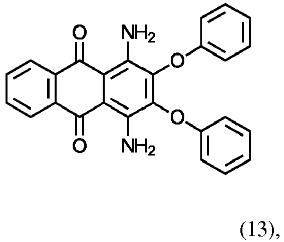
      iv) optional weitere Farbmittel, ausgewählt aus der Gruppe, bestehend aus den Farbmitteln der Formeln (14), (15), (16), (17) und/oder (18) 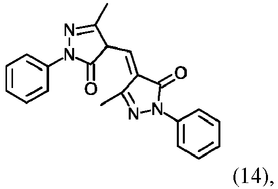 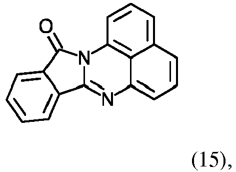 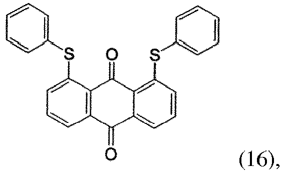 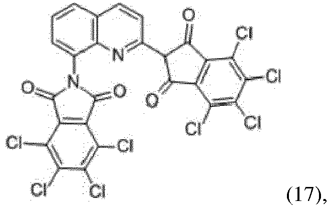 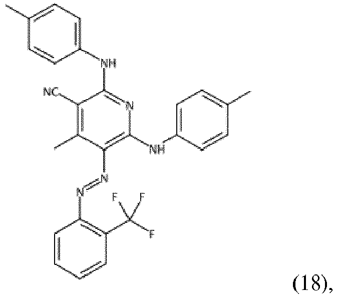
         und 0 bis weniger als 30,0 Gew.-%, bevorzugt weniger als 20,0 Gew.-%, weiter bevorzugt weniger als 10,0 Gew.-%, besonders bevorzugt weniger als 5,0 Gew.-.% weitere thermoplastische Polymere , ausgenommen Polymethylmethacrylat,
         und 0 bis weniger als 0,02 Gew.-%, bevorzugt weniger als 0,0005 Gew.-%, Ruß,
         weniger als 0,1 Gew.-% weitere Farbmittel - von den Farbmitteln der Gruppen ii) bis iv) verschiedene Farbmittel - und weniger als 0,1 Gew.-% Titandioxid, bevorzugt weniger als 0,1 Gew.-% Weißpigment insgesamt, enthält,
         wobei die Summe der Farbmittel ii), iii) und ggf. iv) in der thermoplastischen Zusammensetzung > 0,05 Gew.-% beträgt
         und wobei die Dicke des Bereichs der Substratschicht aus der thermoplastischen Zusammensetzung 1,0 bis 7,0 mm, bevorzugt 1,5 bis 6,0 mm, weiter bevorzugt 2 bis 4 mm, besonders bevorzugt 2,0 bis 4,0 mm, beträgt.

Besonders bevorzugt ist ein
Fahrzeug, umfassend
a) einen LiDAR-Sensor, der Laserpulse mit einer Wellenlänge im Bereich von 800 bis 2500 nm aussendet, und
b) eine den LiDAR-Sensor teilweise oder ganz umgebende Abdeckung mit einer Substratschicht und ggf. einer Schutzschicht, insbesondere einer Kratzfestbeschichtung, wobei die Substratschicht einen Bereich aus einer thermoplastischen Zusammensetzung umfasst, aufweisend eine Lichttransmission im Bereich von 380 bis 780 nm von weniger als 5,0 %, weiter bevorzugt weniger als 1,0 %, noch weiter bevorzugt weniger als 0,1 %, bestimmt bei einer Schichtdicke von 4 mm nach DIN ISO 13468-2: 2006 (D65, 10°), und wobei der Bereich der Substratschicht aus der thermoplastischen Zusammensetzung in seiner jeweiligen Dicke eine Durchlässigkeit für IR-Strahlung im Bereich von 800 nm bis 2500 nm von mindestens 50 %, bestimmt nach DIN ISO 13468-2:2006, aufweist und die thermoplastische Zusammensetzung aus
   i) mindestens 85 Gew.-%, weiter bevorzugt mindestens 95 Gew.-% thermoplastischem Polymer aus der Gruppe bestehend aus aromatischem Polycarbonat und/oder Polyestercarbonat weiter bevorzugt aromatischem Polycarbonat,
   ii) mindestens einem grünen und/oder einem blauen Farbmittel, ausgewählt aus der Gruppe, bestehend aus den Farbmitteln der Formeln (1), (2a-c), (3), (4a), (4b), (5) und/oder (6) 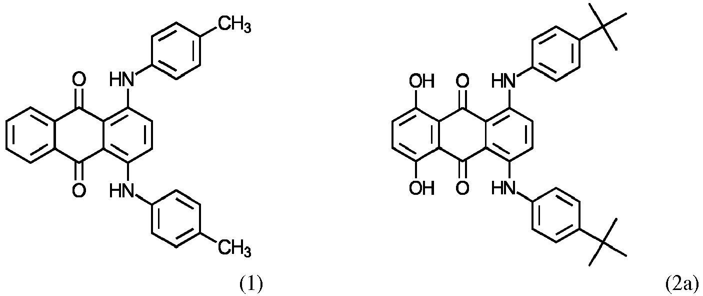 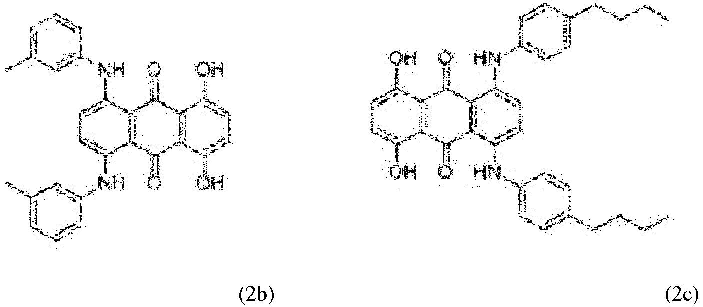 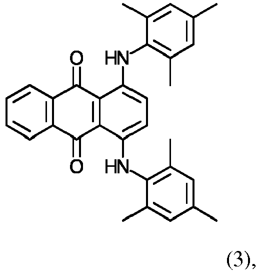 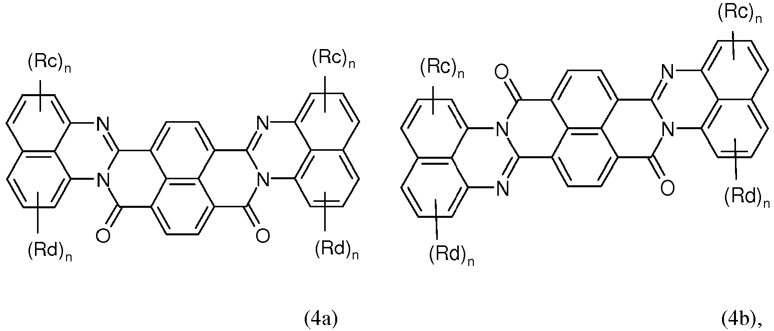 wobei
      - Rc und Rd unabhängig voneinander für einen linearen oder verzweigten Alkylrest oder Halogen stehen,
      - n unabhängig vom jeweiligen R für eine natürliche Zahl zwischen 0 und 3 steht, wobei der Rest für n=0 Wasserstoff ist, 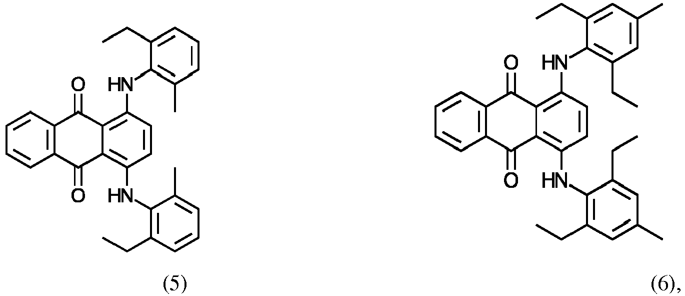 und
   iii) mindestens einem roten und/oder violetten Farbmittel, ausgewählt aus der Gruppe, bestehend aus den Farbmitteln der Formeln (7), (8), (9), (10), (11), (12a), (12b) und/oder (13) 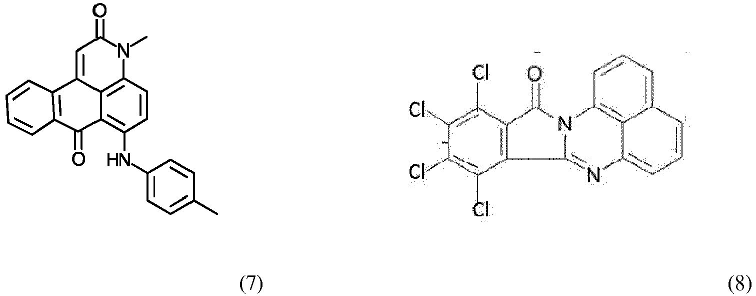 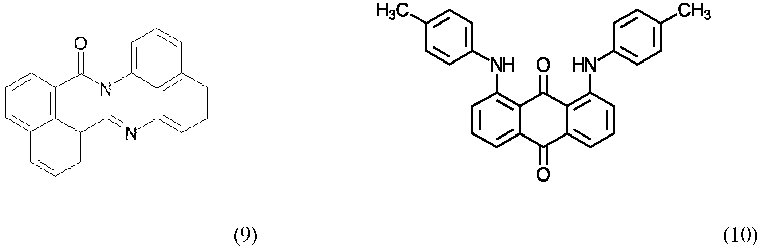 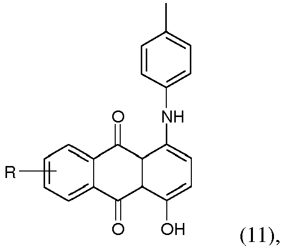 wobei R ausgewählt ist aus der Gruppe, die aus H und p-Methylphenylamin-Rest besteht, 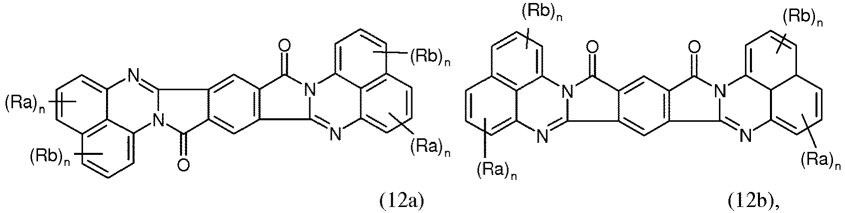 wobei
      - Ra und Rb unabhängig voneinander für einen linearen oder verzweigten Alkylrest oder Halogen stehen,
      - n unabhängig vom jeweiligen R für eine natürliche Zahl zwischen 0 und 3 steht, wobei der Rest für n=0 Wasserstoff ist, 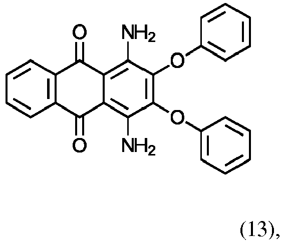
   iv) optional weiteren Farbmitteln, ausgewählt aus der Gruppe, bestehend aus den Farbmitteln der Formeln (14), (15), (16), (17) und/oder (18),
   v) optional Thermostabilisatoren, Entformungsmitteln, UV-Absorbern, Flammschutzmitteln, Antistatika und/oder Fließverbesserern, bevorzugt in einer Menge von 0 bis 10 Gew.-%, weiter bevorzugt 0 bis 3 Gew.-%,
   vi) 0 bis weniger als 30,0 Gew.-%, weiter bevorzugt 0 bis weniger als 5,0 Gew.-%, weiteren thermoplastischen Polymeren, ausgenommen Polymethylmethacrylat,
   vii) 0 bis weniger als 0,02 Gew.-%,weiter bevorzugt weniger als 0,0005 Gew.-%, Ruß,
      weniger als 0,1 Gew.-% weiteren - von den Farbmitteln der Gruppen ii) bis iv) verschiedenen- Farbmitteln und weniger als 0,1 Gew.-% Weißpigment
         besteht,
      wobei die Summe der Farbmittel ii) bis iv) > 0,05 Gew.-%, weiter bevorzugt ≥ 0,10 Gew.-%, noch weiter bevorzugt > 0,12 Gew.-% beträgt,
      und wobei die Dicke des Bereichs der Substratschicht aus der thermoplastischen Zusammensetzung 1,0 bis 6,0 mm, bevorzugt 2 bis 4 mm, weiter bevorzugt 2,0 bis 4,0 mm, beträgt.

Ganz besonders bevorzugt ist ein
Fahrzeug, umfassend
a) einen LiDAR-Sensor, der Laserpulse mit einer Wellenlänge im Bereich von 800 bis 2500 nm aussendet, und
b) eine den LiDAR-Sensor teilweise oder ganz umgebende Abdeckung mit einer Substratschicht und ggf. einer Schutzschicht, insbesondere einer Kratzfestbeschichtung, wobei die Substratschicht einen Bereich aus einer thermoplastischen Zusammensetzung umfasst, aufweisend eine Lichttransmission im Bereich von 380 bis 780 nm von weniger als 0,1 %, bestimmt bei einer Schichtdicke von 4 mm nach DIN ISO 13468-2: 2006 (D65, 10°), und wobei der Bereich der Substratschicht in seiner jeweiligen Dicke eine Durchlässigkeit für IR-Strahlung im Bereich von 800 nm bis 2500 nm von mindestens 50 %, bestimmt nach DIN ISO 13468-2:2006, aufweist,
   wobei die thermoplastische Zusammensetzung aus
   i) mindestens 85 Gew.-%, weiter bevorzugt mindestens 95 Gew.-% thermoplastischem Polymer aus der Gruppe, bestehend aus aromatischem Polycarbonat und/oder Polyestercarbonat weiter bevorzugt aromatischem Polycarbonat,
   ii) mindestens einem grünen und/oder einem blauen Farbmittel, ausgewählt aus der Gruppe, bestehend aus den Farbmitteln der Formeln (1), (2a-c), (3), (4a), (4b), (5) und/oder (6) 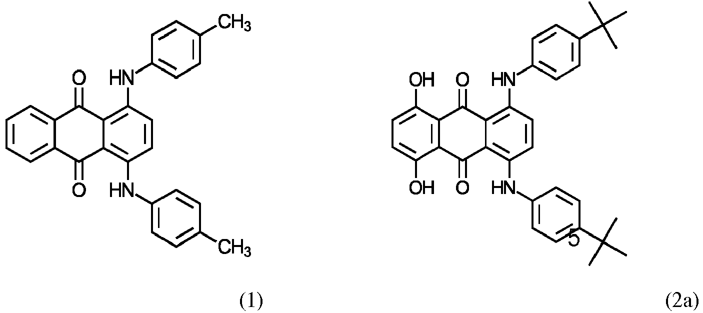 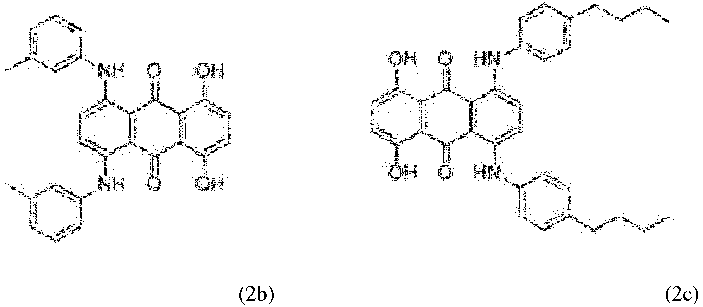 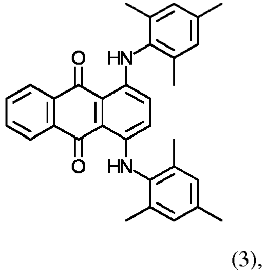 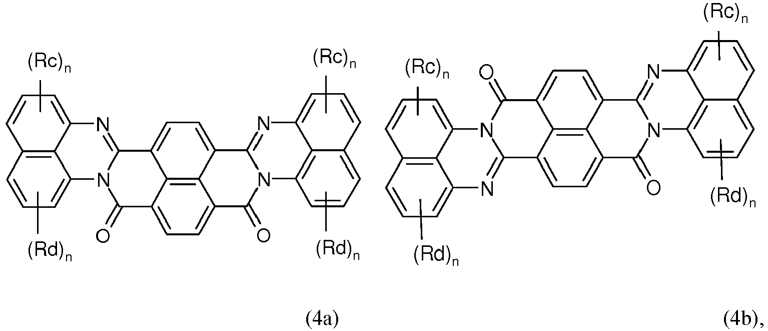 wobei
      - Rc und Rd unabhängig voneinander für einen linearen oder verzweigten Alkylrest oder Halogen stehen,
      - n unabhängig vom jeweiligen R für eine natürliche Zahl zwischen 0 und 3 steht, wobei der Rest für n=0 Wasserstoff ist, 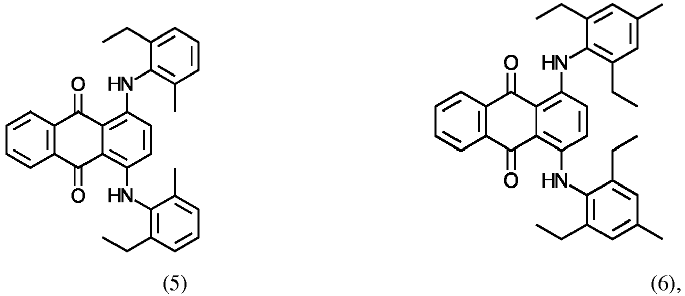
      und
   iii) mindestens einem roten und/oder violetten Farbmittel, ausgewählt aus der Gruppe, bestehend aus den Farbmitteln der Formeln (7), (8), (9), (10), (11), (12a), (12b) und/oder (13) 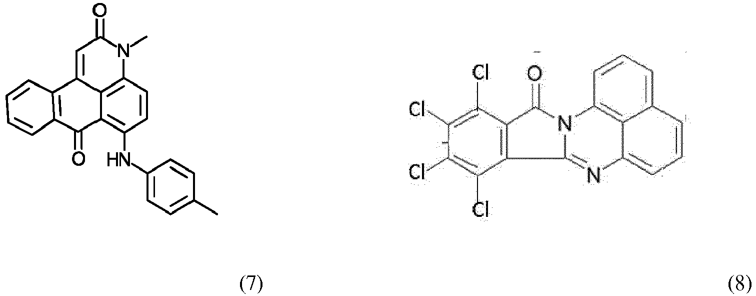 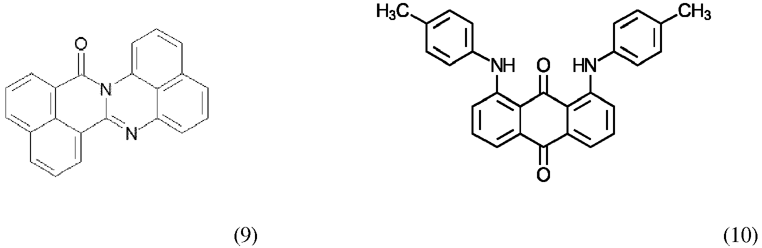 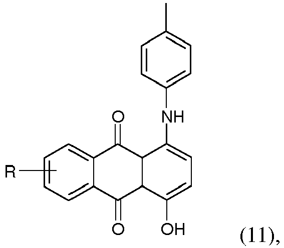 wobei R ausgewählt ist aus der Gruppe, die aus H und p-Methylphenylamin-Rest besteht, 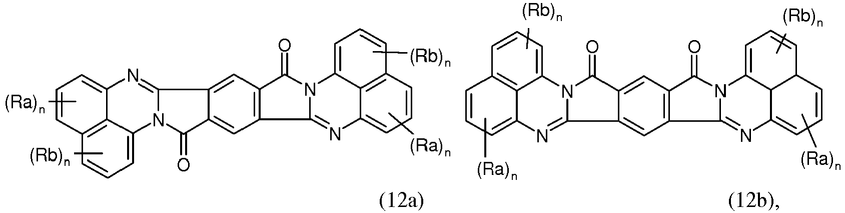 wobei
      - Ra und Rb unabhängig voneinander für einen linearen oder verzweigten Alkylrest oder Halogen stehen,
      - n unabhängig vom jeweiligen R für eine natürliche Zahl zwischen 0 und 3 steht, wobei der Rest für n=0 Wasserstoff ist, 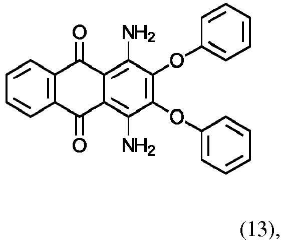
   iv) optional weiteren Farbmitteln, ausgewählt aus der Gruppe, bestehend aus den Farbmitteln der Formeln (14), (15), (16), (17) und/oder (18),
   v) optional Thermostabilisatoren, Entformungsmitteln, UV-Absorbern, Flammschutzmitteln, Antistatika und/oder Fließverbesserern, bevorzugt in einer Menge von 0 bis 3 Gew.-%,
   vi)0 bis weniger als 30,0 Gew.-%, bevorzugt 0 bis weniger als 5,0 Gew.-%, weiteren thermoplastischen Polymeren, ausgenommen Polymethylmethacrylat,
   vii) 0 bis weniger als 0,02 Gew.-%, weiter bevorzugt 0 bis weniger als 0,0005 Gew.-%, Ruß
      weniger als 0,1 Gew.-% weiteren Farbmitteln - von den Farbmitteln der Gruppen ii) bis iv) verschiedenen Farbmitteln - und weniger als 0,1 Gew.-% Titandioxid besteht,
      wobei die Summe der Farbmittel ii) bis iv) > 0,10 Gew.-%, noch weiter bevorzugt > 0,12 Gew.-% beträgt,
      und wobei die Dicke des Bereichs der Substratschicht aus der thermoplastischen Zusammensetzung 1,0 bis 6,0 mm, bevorzugt 2 bis 4 mm, weiter bevorzugt 2,0 bis 4,0 mm, beträgt.

Dabei ist die Kratzfestbeschichtung bevorzugt so beschaffen, dass sie die Durchlässigkeit der Abdeckung für die Strahlung des LiDAR-Sensors nicht signifikant verringert. "Nicht signifikant" bedeutet eine Reduzierung der Intensität der durch die Abdeckung gegangenen Laser-IR-Strahlung im Bereich von 800 nm bis 2500 nm , bestimmt nach DIN ISO 13468-2:2006, um bis zu 8%, bevorzugt bis zu 5%, besonders bevorzugt bis zu 2 %, gegenüber derselben Abdeckung ohne Kratzfestbeschichtung. Sofern anstatt oder neben der/den Kratzfestbeschichtung/en zusätzlich zu der Substratschicht noch weitere Schichten vorhanden sind, führen diese insgesamt, ggf. zusammen mit einer oder mehrere Kratzfestbeschichtung/en, bevorzugt maximal zu einer Reduzierung der Intensität der durch die Abdeckung gegangenen Laser-IR-Strahlung im Bereich von 800 nm bis 2500 nm, bestimmt nach DIN ISO 13468-2:2006, um bis zu 8 %, bevorzugt bis zu 5%, besonders bevorzugt bis zu 2 %, gegenüber derselben Abdeckung ohne Kratzfestbeschichtung.

Hinsichtlich weiter bevorzugter Ausführungsformen gelten die an anderen Stellen beschriebenen Merkmale.

Gegenstand der Erfindung ist außerdem die Verwendung eines Formteils mit einer Substratschicht umfassend einen Bereich aus einer thermoplastischen Zusammensetzung auf Basis von aromatischem Polycarbonat und/oder Polyestercarbonat mit einer Dicke von 1,0 bis 7,0 mm, bevorzugt 1,0 bis 6,0 mm, wobei die Zusammensetzung eine Lichttransmission im Bereich von 380 bis 780 nm von weniger als 25,0 %, bevorzugt bis zu 20 %, weiter bevorzugt weniger als 5,0 %, noch weiter bevorzugt weniger als 1,0 %, besonders bevorzugt weniger als 0,1 %, bestimmt bei einer Schichtdicke von 4 mm nach DIN ISO 13468-2: 2006 (D65, 10°), aufweist und wobei der Bereich der Substratschicht aus der thermoplastischen Zusammensetzung in seiner jeweiligen Dicke eine Durchlässigkeit für IR-Strahlung im Bereich von 800 nm bis 2500 nm von mindestens 50 %, bestimmt nach DIN ISO 13468-2: 2006, aufweist, zur teilweisen oder vollständigen Abdeckung eines LiDAR-Sensors, der Laserpulse mit einer Wellenlänge im Bereich von 800 bis 2500 nm aussendet.

Es versteht sich, dass die als bevorzugt für das Fahrzeug beschriebenen Merkmalsvarianten ebenso für die genannte Verwendung gelten.

Bevorzugt weisen die Abdeckungen, insbesondere die Substratschicht, einen schwarzen Farbeindruck auf. Grundsätzlich sind auch farbige Abdeckungen realisierbar, d.h. etwa rote, grüne oder blaue.

Die Abdeckungen aus bzw. umfassend Bereiche aus den beschriebenen Zusammensetzungen, zeigen in diesen Bereichen außerdem folgende positive Eigenschaften:
- eine glasartige Optik;
- ein geringes Gewicht im Vergleich zu Stahl oder Glas, was wichtig ist, um das Gewicht des Fahrzeugs möglichst gering halten zu können;
- sie werden den Anforderungen hinsichtlich der Sicherheit der Fahrzeuginsassen ebenso wie der anderer Verkehrsteilnehmer, insbesondere Fußgänger, gerecht, und zeigen dabei insbesondere eine ausreichende Elastizität und Verformbarkeit, aber auch geringe Neigung zum Splittern;
- sie ermöglichen die Integration elektrotechnischer, elektronischer, elektrooptischer und optischer Funktionselemente, ohne deren Funktion, sowohl in Bezug auf das Fahrzeug und dessen Insassen als auch in Bezug auf die Außenwelt, nennenswert einzuschränken;
- sie ermöglichen das Abdecken elektrotechnischer, elektronischer, elektrooptischer und optischer Funktionselementen, ohne deren Funktion, sowohl in Bezug auf das Fahrzeug und dessen Insassen als auch in Bezug auf die Außenwelt, nennenswert einzuschränken;
- sie können ein ansprechendes Design aufweisen, insbesondere durchgängig und fugenlos ausgebildet sein, und dabei möglichst in zwei, bevorzugt allen drei Raumrichtungen verformt sein;
- sie können einfach, insbesondere mit möglichst wenigen Fertigungsschritten, hergestellt werden, wobei insbesondere alle Fertigungsschritte nebst Integration zumindest eines Teils der Funktionselemente in einem Werkzeug realisierbar sind und ein nachträgliches Anbringen und Abdichten der Funktionselemente entfällt;
- sie können - in Bereichen, die vor dem LiDAR-Sensor liegen, mit den beschriebenen thermoplastischen Zusammensetzungen und in Bereichen, die nicht vor dem LiDAR-Sensor liegen, auch mit anderen thermoplastischen Zusammensetzungen hinterspritzt werden;
- sie können zumindest zur Außenseite des Fahrzeugs hin eine ansprechende und gegen Umwelteinflüsse, beispielsweise Witterung, aber auch Steinschlag, widerstandsfähige Oberfläche aufweisen.

Eine entsprechende Abdeckung ist darüber sehr einfach herstellbar, wobei alle Fertigungsschritte nebst Integration der Funktionselemente in einem Werkzeug realisierbar sind und ein nachträgliches Anbringen und Abdichten der Funktionselemente entfällt.

Neben dem LiDAR-Sensor kann die Abdeckung weiterer Funktionselemente und Geräte erfolgen, z.B. von Abstandssensoren, beispielsweise als Einparkhilfe, Bewegungssensoren, mit deren Hilfe beispielsweise die Motorhaube geöffnet werden kann, Lichtleisten, Scheinwerfern, Blinkern, Kameras und Bildschirmen. Wie zuvor beschrieben, kann die Abdeckung, auch die Substratschicht, dafür auch transparente Bereiche aufweisen. Ferner ist diese Lösung grundsätzlich auch für Radargestützte Sensoren geeignet.

Unter Fahrzeug werden erfindungsgemäß alle Transportmittel, von Gütern und/oder Personen, verstanden, d.h. sowohl Land-, Wasser- als auch Luftfahrzeuge.

Die Abdeckung ist bevorzugt ein Formteil, das im Front- oder Heckbereich eines Fahrzeugs eingesetzt wird, z.B. ein Stoßfänger, Kühlergrill, Frontpanel oder ein Heckpanel, insbesondere ein Frontpanel für ein Kfz-Fahrzeug, kann aber ebenso ein Fahrzeugseitenteil sein. Die Abdeckung kann aber auch ebenso ein Dach oder Dachmodul für ein Kfz-Fahrzeug sein. Besonders bevorzugt liegen zwischen der Abdeckung und dem LiDAR-Sensor keine weiteren Elemente auf dem Weg des Strahlenganges, welche die Arbeit des LiDAR-Sensors beeinträchtigen.

Der erfindungsgemäß eingesetzte LiDAR-Sensor sendet Laserpulse im Bereich von 800 bis 2500 nm, bevorzugt im Bereich von 820 bis 1500 nm, besonders bevorzugt im Bereich von 850 bis 1300 nm, ganz besonders bevorzugt im Bereich 880 nm bis 930 nm, aus.

Der Abstand des LiDAR-Sensors zur Abdeckung beträgt bevorzugt 0,1 bis 1000 mm, bevorzugt 1 bis 500 mm, weiter bevorzugt 10 bis 300 mm, besonders bevorzugt 50 bis 300 mm. Der gewählte Abstand ist im Wesentlichen konstruktionsbedingt zu sehen, da er so gewählt werden sollte, dass der Sensor ausreichend vor Impactereignissen geschützt ist.

Die Positionierung des LiDAR-Sensors wird vorzugsweise so gewählt, dass der Sensor in Eckbereichen des Fahrzeuges angeordnet wird, da der Sensor auf diese Weise am meisten "sieht".

Die Substratschicht der erfindungsgemäß beschriebenen Abdeckungen im Bereich der beschriebenen thermoplastischen Zusammensetzungen, bevorzugt im gesamten Bereich der Substratschicht, weist bevorzugt eine Dicke von 1,0 bis 7,0 mm, bevorzugt 1,6 bis 6,0 mm, besonders bevorzugt eine Dicke von 2,0 bis 4,0 mm auf. Dabei ist die Dicke der Substratschicht in dem Bereich die Dicke an dem dicksten Punkt des Bereiches der Substratschicht aus der thermoplastischen Zusammensetzung, durch welchen das Signal des LiDAR-Sensors geht.

Die thermoplastische Zusammensetzung ist vorzugsweise ein opakes Material, wobei unter "opak" ein Material mit einer Lichttransmission im Bereich von 380 bis 780 nm, d.h. im VIS-Bereich, von weniger als 5,0 %, bevorzugt weniger als 1,0 %, weiter bevorzugt weniger als 0,1 %, besonders bevorzugt 0%, bestimmt bei einer Schichtdicke von 4 mm nach DIN ISO 13468-2:2006 (D65, 10°), verstanden wird. Bevorzugt beträgt dabei der T_{DS}-Wert, bestimmt nach ISO 13837:2008 bei einer Schichtdicke von 4 mm, weniger als 40%. Solche Materialien zeigen visuell keine Transparenz, d.h. bilden den Hintergrund nicht ab und werden als schwarz wahrgenommen.

Als thermoplastisches Polymer für die Bereiche der Substratschicht aus der beschriebenen Zusammensetzung werden aromatisches Polycarbonat und/oder Polyestercarbonat eingesetzt, wobei aromatisches Polycarbonat besonders bevorzugt ist.

Bezüglich der Polyestercarbonate sind Typen bevorzugt, welche aus den Rohstoffen Hydrochinon und/oder Terephthalsäure und/oder Isophthalsäure aufgebaut sind. Bezüglich der aromatischen Polycarbonate sind alle bekannten aromatischen Polycarbonate geeignet. Dies schließt Homopolycarbonate und Copolycarbonate ein. Sofern im Rahmen der vorliegenden Erfindung von "Polycarbonat" an irgendeiner Stelle gesprochen wird, sind insbesondere aromatische Polycarbonate gemeint.

Erfindungsgemäß geeignete Polycarbonate haben bevorzugt mittlere Molekulargewichte M_{w} von 10.000 bis 50.000 g/mol, weiter bevorzugt von 14.000 bis 40.000 g/mol und besonders bevorzugt von 16.000 bis 32.000 g/mol, ermittelt durch Gelpermeationschromotographie nach DIN 55672-1:2007-08, kalibriert gegen Bisphenol A-Polycarbonat Standards unter Verwendung von Dichlormethan als Elutionsmittel, Kalibrierung mit linearen Polycarbonaten (aus Bisphenol A und Phosgen) bekannter Molmassenverteilung der PSS Polymer Standards Service GmbH, Deutschland, Kalibrierung nach der Methode 2301-0257502-09D (aus dem Jahre 2009 in deutscher Sprache) der Currenta GmbH & Co. OHG, Leverkusen. Das Elutionsmittel ist Dichlormethan. Säulenkombination aus vernetzten Styrol-Divinylbenzolharzen. Durchmesser der analytischen Säulen: 7,5 mm; Länge: 300 mm. Partikelgrößen des Säulenmaterials: 3 µm bis 20 µm. Konzentration der Lösungen: 0,2 Gew.-%. Flussrate: 1,0 ml/min, Temperatur der Lösungen: 30°C. Detektion mit Hilfe eines Brechungsindex(R1)-Detektors.

Die Herstellung der Polycarbonate erfolgt vorzugsweise nach dem Phasengrenzflächenverfahren oder dem Schmelze-Umesterungsverfahren, welche vielfach in der Literatur beschrieben werden.

Zum Phasengrenzflächenverfahren sei beispielhaft auf H. Schnell, "Chemistry and Physics of Polycarbonates", Polymer Reviews, Vol. 9, Interscience Publishers, New York 1964 S. 33 ff., auf Polymer Reviews, Vol. 10, "Condensation Polymers by Interfacial and Solution Methods", Paul W. Morgan, Interscience Publishers, New York 1965, Kap. VIII, S. 325, auf Dres. U. Grigo, K. Kircher und P. R- Müller "Polycarbonate" in Becker/Braun, Kunststoff-Handbuch, Band 3/1, Polycarbonate, Polyacetale, Polyester, Celluloseester, Carl Hanser Verlag München, Wien 1992, S. 118-145 sowie auf EP 0 517 044 A1 verwiesen.

Das Schmelze-Umesterungsverfahren ist beispielsweise in der "Encyclopedia of Polymer Science", Vol. 10 (1969), Chemistry and Physics of Polycarbonates, Polymer Reviews, H. Schnell, Vol. 9, John Wiley and Sons, Inc. (1964) sowie in den Patentschriften DE 10 31 512 A und US 6,228,973 B1 beschrieben.

Die Polycarbonate werden bevorzugt durch Reaktionen von Bisphenolverbindungen mit Kohlensäureverbindungen, insbesondere Phosgen, oder beim Schmelzeumesterungsprozess von Diphenylcarbonat bzw. Dimethylcarbonat dargestellt.

Hierbei sind Homopolycarbonate auf Basis von Bisphenol-A und Copolycarbonate auf der Basis der Monomere Bisphenol-A und 1,1-Bis-(4-hydroxyphenyl)-3,3,5-trimethylcyclohexan, z.B. Apec^{®} der Covestro Deutschland AG, besonders bevorzugt.

Diese und weitere Bisphenol- bzw. Diolverbindungen, die sich für die Polycarbonatsynthese einsetzen lassen, sind unter anderem beschrieben in WO 2008/037364 A1 (s.7, Z. 21 bis s. 10, Z. 5), EP 1 582 549 A1 ([0018] bis [0034]), WO 2002/026862 A1 (S. 2, Z. 20 bis S. 5, Z. 14) und WO 2005/113639 A1 (S. 2, Z.1 bis S. 7, Z. 20).

Die Polycarbonate können linear oder verzweigt sein. Es können auch Mischungen aus verzweigten und unverzweigten Polycarbonaten eingesetzt werden.

Geeignete Verzweiger für die Herstellung von verzweigten Polycarbonaten sind aus der Literatur bekannt und beispielsweise beschrieben in den Patentschriften US 4,185,009 B und DE 25 00 092 A1 (3,3-Bis-(4-hydroxyaryl-oxindole, s. jeweils gesamtes Dokument), DE 42 40 313 A1 (s. S. 3, Z. 33 bis 55), DE 19 943 642 A1 (s. S. 5, Z. 25 bis 34) und US 5,367,044 B sowie in hierin zitierter Literatur.

Darüber hinaus können die verwendeten Polycarbonate auch intrinsisch verzweigt sein, wobei hier kein Verzweiger im Rahmen der Polycarbonatherstellung zugegeben wird. Ein Beispiel für intrinsische Verzweigungen sind sogenannte Fries-Strukturen, wie sie für Schmelzepolycarbonate in der EP 1 506 249 A1 beschrieben sind.

Zudem können bei der Polycarbonat-Herstellung Kettenabbrecher eingesetzt werden. Als Kettenabbrecher werden bevorzugt Phenole wie Phenol, Alkylphenole wie Kresol und 4-tert.-Butylphenol, Chlorphenol, Bromphenol, Cumylphenol oder deren Mischungen verwendet.

Grundsätzlich kann die beschriebene Zusammensetzung der Substratschicht neben den genannten thermoplastischen Polymeren aromatisches Polycarbonat, Polyestercarbonat weitere, d.h. andere als aromatisches Polycarbonat, Polyestercarbonat, thermoplastische Polymerer, ausgenommen Polymethylmethylacrylat, enthalten. Solche thermoplastischen Polymere sind Polystyrol, Styrol-Copolymere, cyclisches Polyolefin, Copolymere mit Styrol wie z.B. transparentes Polystyrolacrylnitril (PSAN), thermoplastische Polyurethane, Polymere auf Basis von zyklischen Olefinen (z.B. TOPAS^{®}, ein Handelsprodukt der Firma Ticona), Polycarbonat-Blends mit olefinischen Copolymeren oder Pfropfpolymeren, wie beispielsweise Styrol/Acrylnitril-Copolymeren.

Dabei darf nur so viel weiteres thermoplastisches Polymer enthalten sein, dass die Durchlässigkeit für die Laserpulse des LiDAR-Sensors nicht so stark gestört wird, dass die Funktionsfähigkeit des Systems nicht mehr gegeben ist. Die Substratschicht enthält daher 0 bis weniger als 30,0 Gew.-%, bevorzugt 0 bis weniger als 20,0 Gew.-%, weiter bevorzugt 0 bis weniger als 10,0 Gew.-%, besonders bevorzugt 0 bis weniger als 5,0 Gew.-%, ganz besonders bevorzugt 0 bis weniger als 1,0 Gew.-% weiteres thermoplastisches Polymer, ganz besonders bevorzugt gar kein weiteres thermoplastisches Polymer. "Weniger als" bedeutet erfindungsgemäß, dass die jeweilige Komponente auch gar nicht enthalten sein kann.

Die Zusammensetzung enthält ein grünes und/oder ein blaues Farbmittel (Komponente ii) sowie ein rotes und/oder violettes Farbmittel (Komponente iii): mindestens ein Farbmittel der Formeln (1), (2a-c), (3), (4), (5) oder (6) (Gruppe ii), insbesondere bevorzugt (1), (2a-c), (3) oder (4), mit mindestens einem Farbmittel, ausgewählt aus den Farbmitteln der Formeln (7) bis (13) (Gruppe iii), bevorzugt ausgewählt aus den Formeln (7), (11), oder (12). Optional können weitere Farbmittel (Komponente iv) verwendet werden - darunter insbesondere bevorzugt gelbe Farbmittel.

Optionale weitere Farbmittel der Gruppe iv sind ausgewählt aus den Farbmitteln der Formeln (14) bis (18), insbesondere bevorzugt ausgewählt aus den Farbmittel der Formeln (14) und (15).

Grüne Farbmittel sind insbesondere bevorzugt Farbmittel der Formeln (1) und (2a/2b/2c):

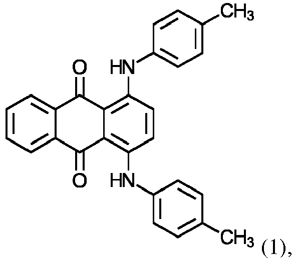

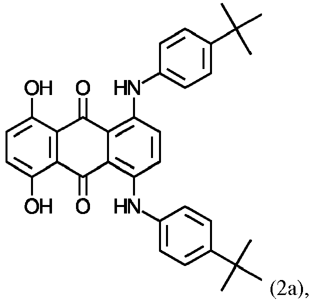

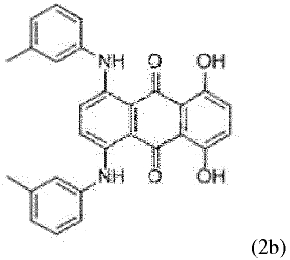

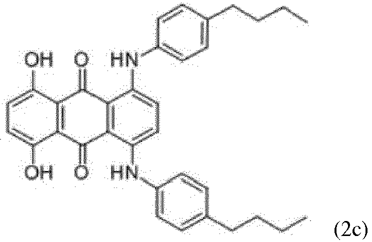

Das Farbmittel der Formel (1) ist unter dem Namen Macrolex Grün 5B der Firma Lanxess Deutschland GmbH bekannt, Color Index-Nummer 61565, CAS-Nummer: 128-90-3, und ist ein Anthrachinonfarbstoff.

Farbmittel der Formeln (2a), (2b) und (2c) sind unter dem Namen Macrolex Grün G (Solvent Green 28) bekannt.

Blaue Farbmittel, die eingesetzt werden, sind bevorzugt Farbmittel der Formeln (3) und/oder (4a/4b): 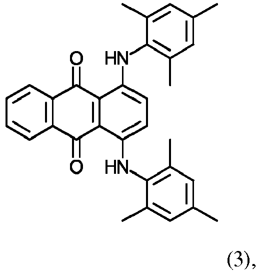 erhältlich unter dem Namen "Keyplast Blue KR", CAS-Nummer 116-75-6, 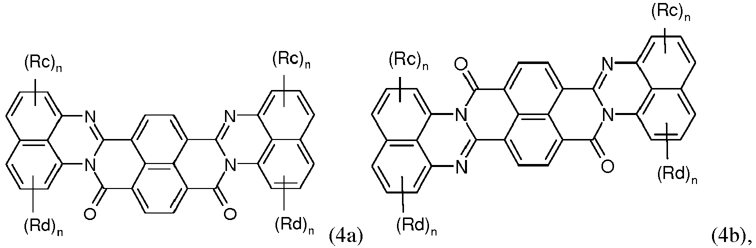 wobei
- Rc und Rd unabhängig voneinander für einen linearen oder verzweigten Alkylrest oder Halogen stehen, bevorzugt für Methyl, Ethyl, Propyl, Isopropyl, Butyl, Isobutyl, tert.-Butyl, Pentyl, Neopentyl, Hexyl, Thexyl oder Cl, weiter bevorzugt für Methyl, Cl und besonders bevorzugt für Cl steht,
- n steht unabhängig vom jeweiligen R für eine natürliche Zahl zwischen 0 und 3, wobei der Rest für n=0 Wasserstoff ist.

In einer bevorzugten Ausführungsform sind Rc und/oder Rd Cl und stehen in o und/oder p-Positionen zu den Kohlenstoffatomen, welche die Aminfunktionalitäten tragen, wie z.B. diorthochlornapthalino-, di-ortho, mono-para-chlornaphthalino, sowie mono-ortho-naphthalino. Ferner stellen in einer bevorzugten Ausführungsform Rc und Rd jeweils einen tert-Butylrest dar, welcher sich bevorzugt in meta-Position zu den Kohlenstoffatomen, welche die Stickstofffunktionalitäten tragen, befindet.

In einer besonders bevorzugten Ausführungsform ist in allen Ringen n=0, so dass alle Rc und Rd = H sind.

Ferner können als blaue Farbmittel eingesetzt werden:
Farbmittel der Formel (5), erhältlich unter dem Namen "Macrolex Blue 3R Gran" 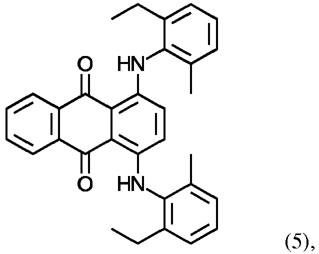 und/oder Farbmittel der Formel (6), erhältlich unter dem Namen "Macrolex Blue RR" (CAS 32724-62-2; Solvent Blue 97; C.I. 615290),

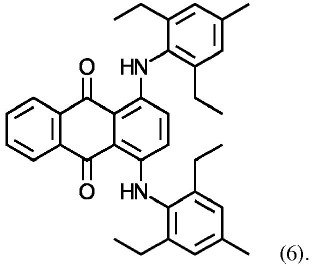

Als rotes Farbmittel wird bevorzugt ein Farbmittel der Formel (7), erhältlich unter dem Namen "Macrolex Red 5B", mit der CAS-Nummer 81-39-0, eingesetzt:

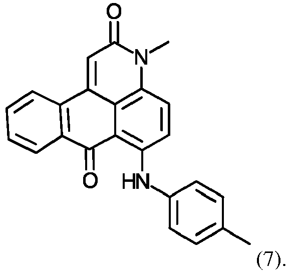

Weiterhin können Farbmittel der Formeln (8) mit der CAS-Nummer 71902-17-5 und (9) mit der CAS-Nummer 89106-94-5 eingesetzt werden:

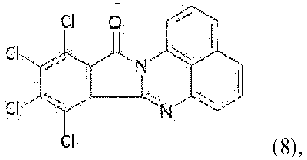

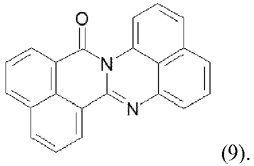

Als violette Farbmittel werden bevorzugt Farbmittel der Formeln (10) mit der CAS-Nummer 61951-89-1, (11), erhältlich unter dem Namen "Macrolex Violet B" von der Lanxess AG, mit der CAS-Nummer 81-48-1 oder (12a/12b), erhältlich unter dem Namen Amaplast Violet PK, eingesetzt: 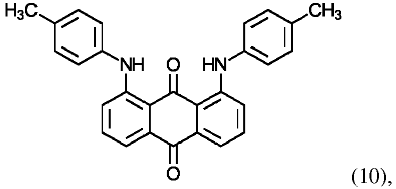 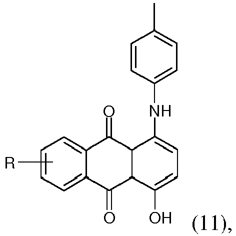 wobei R ausgewählt ist aus der Gruppe, die aus H und p-Methylphenylamin-Rest besteht; bevorzugt ist R = H; 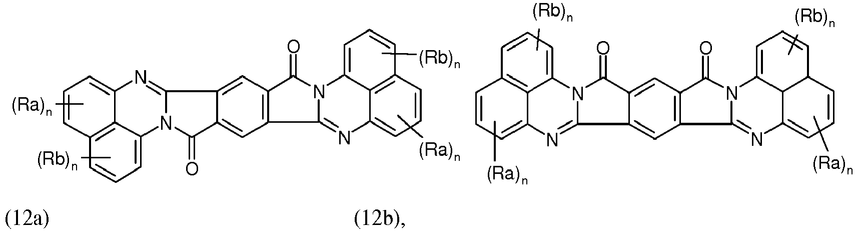 wobei
- Ra und Rb unabhängig voneinander für einen linearen oder verzweigten Alkylrest oder Halogen stehen, bevorzugt für Methyl, Ethyl, Propyl, Isopropyl, Butyl, Isobutyl, tert.-Butyl, Pentyl, Neopentyl, Hexyl, Thexyl, oder Cl, weiter bevorzugt für Methyl, Cl und besonders bevorzugt für Cl steht,
- n steht unabhängig vom jeweiligen R für eine natürliche Zahl zwischen 0 und 3, wobei der Rest für n=0 Wasserstoff ist.

In einer bevorzugten Ausführungsform sind Ra und/oder Rb Cl und stehen in o und/oder p-Positionen zu den Kohlenstoffatomen, welche die Aminfunktionalitäten tragen, wie z.B. diorthochlornapthalino-, di-ortho, mono-para-chlornaphthalino, sowie mono-ortho-naphthalino. Ferner stellen in einer bevorzugten Ausführungsform Ra und Rb jeweils einen tert.-Butylrest dar, welcher sich bevorzugt in meta-Position zu den Kohlenstoffatomen, welche die Stickstofffunktionalitäten tragen, befindet.

In einer besonders bevorzugten Ausführungsform ist in allen Ringen n=0, so dass alle Ra und Rb = H sind.

Ferner können Farbmittel eingesetzt werden, die der Formel (13), erhältlich unter dem Namen "Macrolex RedViolet R", CAS-Nummer 6408-72-6, entsprechen:

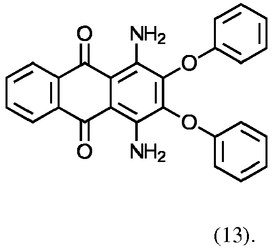

Als gelbe Farbmittel werden bevorzugt Farbmittel der Formeln (14), erhältlich unter dem Namen "Macrolex Gelb 3G", mit der CAS-Nummer 4702-90-3 und/oder (15), erhältlich unter dem Namen "Macrolex Orange 3G" (CAS-Nummer 6925-69-5, C.I. 564100) eingesetzt:

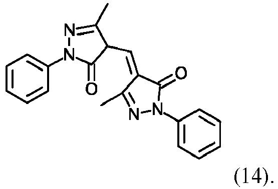

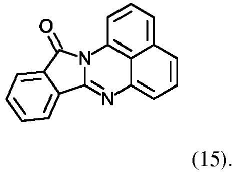

Ferner ist es möglich, Farbmittel der Formeln (16), erhältlich unter dem Namen "Oracet Yellow 180" mit der CAS-Nummer 13676-91-0, (17) mit der CAS-Nummer 30125-47-4 und/oder (18), erhältlich unter dem Namen "Oracet Orange 220; Solvent Orange 116" mit der CAS-Nummer 669005-94-1, einzusetzen.

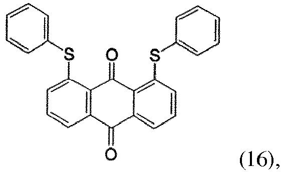

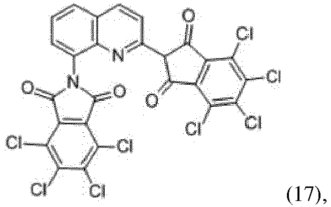

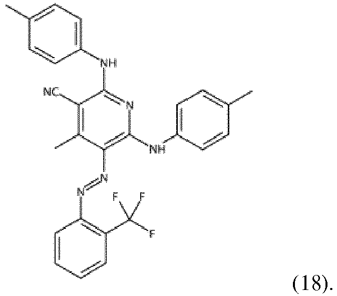

Neben den Farbmitteln der Gruppen ii), iii) und ggf. iv) enthält die Zusammensetzung weniger als 0,1 Gew.-%, weiter bevorzugt weniger als 0,05 Gew.-%, an weiteren Farbmitteln. Die Gruppe iv) der "weiteren" Farbmittel besteht nur aus Farbmitteln der Strukturen (14) bis (18).

Grundsätzlich können aber neben den oben beschriebenen Farbmitteln der Gruppen ii) bis iv) ggf. zusätzlich weitere Farbmittel eingesetzt werden. Diese sind bevorzugt auf Anthrachinonbasis, auf Perinonbasis, auf Phthalocyaninbasis oder von diesen Strukturen abgeleitete Farbmittel. Besonders bevorzugte Farbmittel sind in WO 2012/080395 A1 beschrieben. Weiterhin können als Farbmittel Amaplast Gelb GHS (CAS 13676-91-0; Solvent Yellow 163; C:I: 58840); Keyplast Blau KR (CAS 116-75-6; Solvent Blue 104; C.I. 61568), Heliogen Blau-Typen (z.B. Heliogen Blau K 6911; CAS 147-14-8; Pigment Blue 15:1; C.I. 74160) sowie Heliogen Grün Typen (wie z.B. Heliogen Grün K 8730; CAS 1328-53-6; Pigment Green 7; C.I. 74260) verwendet werden.

Bevorzugt aber sind die Farbmittel der thermoplastischen Zusammensetzung der/des Teilbereiches der Substratschicht ausschließlich aus den Farbmitteln der Formeln (1) bis (18) ausgewählt.

Bei einer Lichttransmission von mindestens 5% im Bereich von 380 bis 780 nm, bestimmt bei einer Schichtdicke von 4 mm nach DIN ISO 13468-2: 2006 (D65, 10°), beträgt die Summe aller Farbmittel bevorzugt > 0,005 Gew.-%, insbesondere bevorzugt > 0,01 % Gew.-%, bezogen auf die Gesamtzusammensetzung, wobei die Gesamtmenge aller Farbmittel hierbei bevorzugt < 0,05 Gew.-% und insbesondere < 0,04 Gew.-% ist.

Bei einer Lichttransmission im Bereich von 380 bis 780 nm, bestimmt bei einer Schichtdicke von 4 mm nach DIN ISO 13468-2: 2006 (D65, 10°), von weniger als 5 % : Die Summe aller Farbmittel der Komponenten ii, iii und iv beträgt > 0,05 Gew.-%, bevorzugt > 0,08 Gew.-%, weiter bevorzugt ≥ 0,10 Gew.-%, besonders bevorzugt > 0,11 Gew.-% und ganz besonders bevorzugt > 0,12 Gew.-%, bezogen auf die Gesamtzusammensetzung des Substratmaterials.

Die Zusammensetzung enthält besonders bevorzugt weniger als 0,0005 Gew.-% Ruß, ganz besonders bevorzugt ist sie frei von Ruß.

Die genannte geringe Transmission ergibt sich beispielsweise für Zusammensetzungen, enthaltend die Farbmittelkombination
Macrolex Violett 3R der Firma Lanxess AG (CAS 61951-89-1, Solvent Violet 36, Color-Index-Nummer 61102), ein Anthrachinonfarbstoff: 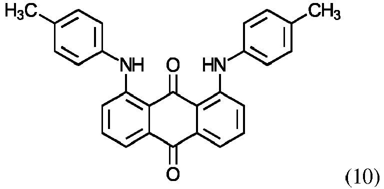 und Macrolex Grün 5B der Firma Lanxess AG (CAS 128-80-3, Solvent Green 3, Color Index-Nummer 61565), ebenfalls ein Anthrachinonfarbstoff: 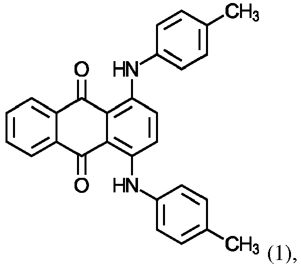 beispielsweise jeweils 0,1 Gew.-% von beiden dieser Farbmittel, bezogen auf die Gesamtzusammensetzung.

Die Zusammensetzung für das Substratschichtmaterial sollte möglichst bei den für Thermoplaste üblichen Temperaturen, d.h. bei Temperaturen oberhalb von 300 °C, wie z.B. 350 °C, verarbeitbar sein, ohne dass sich bei der Verarbeitung die optischen Eigenschaften, z.B. der Tiefenglanz, oder die mechanischen Eigenschaften deutlich verändern.

Die Zusammensetzungen, welche Bereiche der bzw. die Substratschicht formen und auf einem thermoplastischen Polymer, bevorzugt auf aromatischem Polycarbonat, basieren, enthalten neben den Farbmitteln bevorzugt ein oder mehrere weitere, übliche Additive. Solche sind z.B. in EP-A 0 839 623, WO-A 96/15102, EP-A 0 500 496 oder "Plastics Additives Handbook", Hans Zweifel, 5th Edition 2000, Hanser Verlag, München beschriebenen üblichen Additive, wie z.B. Entformer, UV-Absorber, Thermostabilisatoren, Flammschutzmittel, Antistatika und/oder Fließverbesserer.

Auch hier gilt, dass den Zusammensetzungen grundsätzlich zugesetzt werden kann, was die Funktionsfähigkeit des Sensorsystems nicht signifikant beeinträchtigt.

Besonders bevorzugt enthalten die Zusammensetzungen weniger als 0,1 Gew.-%, ganz besonders bevorzugt sind die Zusammensetzungen der Substratschicht frei von Streuadditiven, z.B. solchen auf Basis von Acrylat-, Polyethylen-, Polypropylen-, Polystyrol-, Glas-, Aluminiumoxid und/oder Siliciumdioxid. Ferner enthält die Zusammensetzung besonders bevorzugt weniger als in Summe 0,1 Gew.-%, weiter bevorzugt weniger als 0,05 Gew.-%, ganz besonders bevorzugt ist sie frei von Weißpigmenten, d.h. o.ä. Pigmenten wie z.B. Titandioxid, Kaolin, Bariumsulfat, Zinksulfid, Aluminiumoxid, Aluminiumhydroxid, Quarzmehl,von Interferenzpigmenten und/oder Perlglanzpigmenten, d.h. plättchenförmigen Partikeln wie Glimmer, Graphit, Talk, SiO₂, Kreide und/oder Titandioxid, beschichtet und/oder unbeschichtet. Ferner enthält die Zusammensetzung in Summe besonders bevorzugt weniger als 0,1 Gew.-%, ganz besonders bevorzugt ist die Zusammensetzung frei von nanopartikulären Systemen wie Ruß, Nanotubes, Metallpartikeln, Metalloxidpartikeln. Bevorzugt enthält die Zusammensetzung auch weniger als 0,1 Gew.-%, besonders bevorzugt ist sie frei von Pigmenten auf Basis von unlöslichen Pigmenten, wie sie z.B. in DE 10057165 A1 und in WO 2007/135032 A2 beschrieben sind.

Besonders bevorzugt umfasst die Zusammensetzung keine Flammschutzmittel außer
a) Mono- und/oder oligomeren Phosphor- bzw. Phosphonsäureestern, d.h. Phosphorverbindungen der allgemeinen Formel (V) 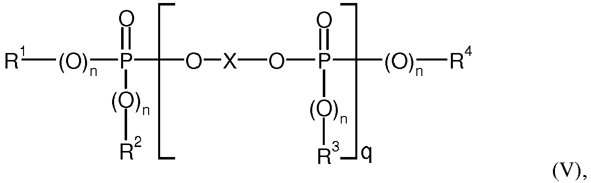 worin
   R¹, R², R³ und R⁴ unabhängig voneinander C₁- bis C₈-Alkyl, jeweils gegebenenfalls halogeniert und jeweils verzweigt oder unverzweigt, und/oder C₅- bis C₆-Cycloalkyl, C₆- bis C₂₀-Aryl oder C₇-bis C₁₂-Aralkyl, jeweils gegebenenfalls durch verzweigtes oder unverzweigtes Alkyl, und/oder Halogen, vorzugsweise Chlor und/oder Brom, substituiert,
   n unabhängig voneinander 0 oder 1,
   q einen ganzzahligen Wert von 0 bis 30 und
   X einen ein- oder mehrkernigen aromatischen Rest mit 6 bis 30 C-Atomen, oder einen linearen oder verzweigten aliphatischen Rest mit 2 bis 30 C-Atomen, der jeweils substituiert oder unsubstituiert, verbrückt oder unverbrückt sein kann, bedeuten.

Bevorzugt stehen R¹, R², R³ und R⁴ unabhängig voneinander für verzweigtes oder unverzweigtes C₁- bis C₄-Alkyl, Phenyl, Naphthyl oder mit C₁- bis C₄-Alkyl substituiertes Phenyl. Im Falle aromatischer Gruppen R¹, R², R³ und/oder R⁴ können diese ihrerseits mit Halogen- und/oder Alkylgruppen, vorzugsweise Chlor, Brom und/oder C₁- bis C₄-Alkyl, verzweigt oder unverzweigt, substituiert sein. Besonders bevorzugte Aryl-Reste sind Kresyl, Phenyl, Xylenyl, Propylphenyl oder Butylphenyl sowie die entsprechenden bromierten und chlorierten Derivate davon.

X in der Formel (V) leitet sich bevorzugt von Diphenolen ab.

n in der Formel (V) ist vorzugsweise gleich 1.

q steht bevorzugt für 0 bis 20, besonders bevorzugt 0 bis 10, im Falle von Mischungen für Durchschnittswerte von 0,8 bis 5,0, bevorzugt 1,0 bis 3,0, weiter bevorzugt 1,05 bis 2,00 und besonders bevorzugt von 1,08 bis 1,60.

Als Phosphorverbindung der allgemeinen Formel V ist eine Verbindung der Formel I bevorzugt: 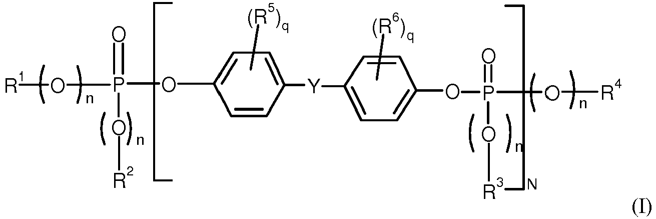 worin
R¹, R², R³ und R⁴ jeweils unabhängig voneinander lineares oder verzweigtes C₁- bis C₈-Alkyl und/oder gegebenenfalls durch lineares oder verzweigtes Alkyl-substituiertes C₅- bis C₆-Cycloalkyl, C₆- bis C₁₀-Aryl oder C₇- bis C₁₂-Aralkyl,
n unabhängig voneinander 0 oder 1,
q unabhängig voneinander 0, 1, 2, 3 oder 4,
N eine Zahl zwischen 1 und 30,
R₅ und R₆ unabhängig voneinander lineares oder verzweigtes C₁- bis C₄-Alkyl, vorzugsweise Methyl, und
Y lineares oder verzweigtes C₁- bis C₇-Alkyliden, lineares oder verzweigtes C₁- bis C₇-Alkylen, C₅- bis C₁₂-Cycloalkylen, C₅- bis C₁₂-Cycloalkyliden, -O-, -S-, -SO-, SO₂ oder -CO- bedeuten,
enthalten ist.
X in Formel V steht besonders bevorzugt für 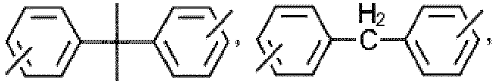 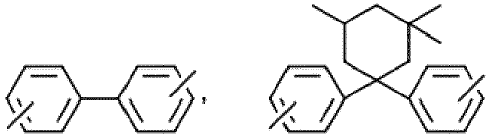 oder deren chlorierte und/oder bromierte Derivate. Bevorzugt leitet sich X (mit den angrenzenden Sauerstoffatomen) von Hydrochinon, Bisphenol A oder Diphenylphenol ab. Ebenfalls bevorzugt leitet sich X von Resorcin ab. Besonders bevorzugt leitet sich X von Bisphenol A ab.

Phosphorverbindungen der Formel (V) sind insbesondere Tributylphosphat, Triphenylphosphat, Trikresylphosphat, Diphenylkresylphosphat, Diphenyloctylphosphat, Diphenyl-2-ethyl-kresylphosphat, Tri-(isopropylphenyl)-phosphat, Resorcin verbrücktes Oligophosphat und Bisphenol A verbrücktes Oligophosphat. Der Einsatz von oligomeren Phosphorsäureestern der Formel (V), die sich vom Bisphenol A ableiten, ist insbesondere bevorzugt.

Höchst bevorzugt als Komponente C ist Bisphenol-A basierendes Oligophosphat gemäß Formel (Va).

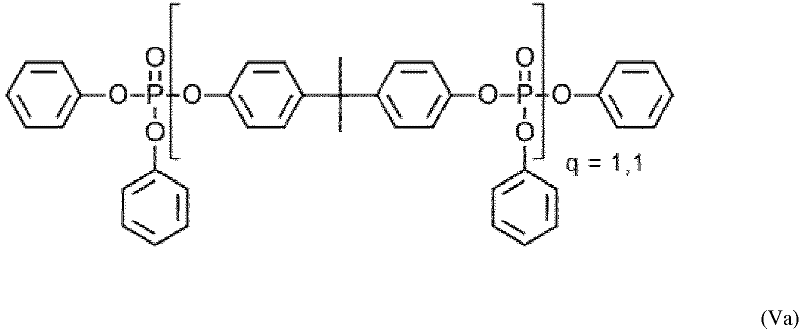

Besonders bevorzugt sind außerdem Oligophosphate analog der Formel (Va), bei denen q zwischen 1,0 und 1,2 liegt.

Vorzugsweise werden Mischungen mit gleicher Struktur und unterschiedlicher Kettenlänge verwendet, wobei es sich bei dem angegebenen q-Wert um den mittleren q-Wert handelt. Der mittlere q-Wert wird bestimmt, indem mittels High Pressure Liquid Chromatography (HPLC) bei 40°C in einem Gemisch aus Acetonitril und Wasser (50:50) die Zusammensetzung des Phosphorverbindungsgemisches (Molekulargewichtsverteilung) bestimmt wird und daraus die Mittelwerte für q berechnet werden.

Ganz besonders bevorzugt enthält die Zusammensetzung keine Flammschutzmittel und keine Antidrippingmittel.

Besonders bevorzugt enthalten die Zusammensetzungen Entformungsmittel auf Basis eines Fettsäureesters, bevorzugt eines Stearinsäureesters, insbesondere bevorzugt auf Pentaerythritbasis. Bevorzugt werden Pentaerythrittetrastearat (PETS) und/oder Glycerinmonostearat (GMS) eingesetzt.

Optional enthält die für Bereiche der bzw. für die Substratschicht eingesetzte Zusammensetzung weiterhin einen Ultraviolett-Absorber. Geeignete Ultraviolett-Absorber sind Verbindungen, die eine möglichst geringe Transmission unterhalb 400 nm und eine möglichst hohe Transmission oberhalb von 400 nm besitzen. Derartige Verbindungen und deren Herstellung sind literaturbekannt und sind beispielsweise in EP 0 839 623 A1, WO 1996/15102 A2 und EP 0 500 496 A1 beschrieben. Für den Einsatz in der erfindungsgemäßen Zusammensetzung besonders geeignete Ultraviolett-Absorber sind Benzotriazole, Triazine, Benzophenone und/oder arylierte Cyanoacrylate.

In einer besonders bevorzugten Ausführungsform enthält die für die Substratschicht eingesetzte Zusammensetzung UV-Absorber.

Folgende Ultraviolett-Absorber sind beispielsweise geeignet: Hydroxy-Benzotriazole, wie 2-(3',5'-Bis-(1,1-dimethylbenzyl)-2'-hydroxy-phenyl)-benzotriazol (Tinuvin^{®} 234, BASF AG. Ludwigshafen), 2-(2'-Hydroxy-5'-(tert.-octyl)-phenyl)-benzotriazol (Tinuvin^{®} 329, BASF AG. Ludwigshafen), 2-(2'-Hydroxy-3'-(2-butyl)-5'-(tert.butyl)-phenyl)-benzotriazol (Tinuvin^{®} 350, BASF AG. Ludwigshafen), Bis-(3-(2H-benztriazolyl)-2-hydroxy-5-tert.-octyl)methan, (Tinuvin^{®} 360, BASF AG. Ludwigshafen), (2-(4,6-Diphenyl-1,3,5-triazin-2-yl)-5-(hexyloxy)-phenol (Tinuvin^{®} 1577, BASF AG. Ludwigshafen), die Benzophenone 2,4-Dihydroxy-benzophenon (Chimasorb^{®} 22 , BASF AG. Ludwigshafen) oder 2-Hydroxy-4-(octyloxy)-benzophenon (Chimassorb^{®} 81, BASF AG. Ludwigshafen), 2-Cyano-3,3-diphenyl-2-propensäure, 2,2-Bis[[(2-cyano-1-oxo-3,3-diphenyl-2-propenyl)oxy]-methyl]-1,3-propandiylester (9CI) (Uvinul^{®} 3030, BASF AG Ludwigshafen), 2-[2-Hydroxy-4-(2-ethylhexyl)oxy]phenyl-4,6-di(4-phenyl)phenyl-1,3,5-triazin (CGX UVA 006, BASF AG. Ludwigshafen) oder Tetraethyl-2,2'-(1,4-phenylen-dimethyliden)-bismalonat (Hostavin^{®} B-Cap, Clariant AG). Es können auch Mischungen dieser Ultraviolett-Absorber eingesetzt werden.

Weiter bevorzugt enthalten die thermoplastischen Zusammensetzungen außerdem mindestens einen Thermo- bzw. Verarbeitungsstabilisator.

Als solche bevorzugt sind Phosphite und Phosphonite sowie Phosphine. Beispiele sind Triphenylphosphit, Diphenylalkylphosphit, Phenyldialkylphosphit, Tris(nonylphenyl)phosphit, Trilaurylphosphit, Trioctadecylphosphit, Distearylpentaerythritoldiphosphit, Tris(2,4-di-tert-butylphenyl)phosphit, Diisodecylpentaerythritoldiphosphit, Bis(2,4-di-tert-butylphenyl)pentaerythritoldiphosphit, Bis(2,4-di- cumylphenyl)pentaerythritoldiphosphit, Bis(2,6-di-tert-butyl-4-methylphenyl)penta-erythritol-diphosphit, Diisodecyloxypentaerythritoldiphosphit, Bis(2,4-di-tert-butyl-6-methylphenyl)-pentaerythritoldiphosphit, Bis(2,4,6-tris(tert-butylphenyl)pentaerythritoldiphosphit, Tristearylsorbitoltriphosphit, Tetrakis(2,4-di-tert-butylphenyl)-4,4'-biphenylendiphosphonit, 6-Isooctyloxy-2,4,8,10-tetra-tert-butyl-12H-dibenz[d,g]-1,3,2-dioxaphosphocin, Bis(2,4-di-tert-butyl-6-methylphenyl)methylphosphit, Bis(2,4-di-tert-butyl-6-methylphenyl)ethylphosphit, 6-Fluoro-2,4,8,10-tetra-tert-butyl-12-methyl-dibenz[d,g]-1,3,2-dioxaphosphocin, 2,2',2"-Nitrilo-[triethyltris(3,3',5,5'-tetra-tert-butyl-1,1'-biphenyl-2,2'-diyl)phosphit], 2-Ethylhexyl(3,3',5,5'-tetra-tert-butyl-1,1'-biphenyl-2,2'-diyl)phosphit, 5-Butyl-5-ethyl-2-(2,4,6-tri-tert-butylphenoxy)-1,3,2-dioxaphosphiran, Bis(2,6-di-ter-butyl-4-methylphenyl)pentaerythritol-diphosphit, Triphenylphosphin (TPP), Trialkylphenylphosphin, Bisdiphenylphosphino-ethan oder ein Trinaphthylphosphin. Insbesondere bevorzugt werden Triphenylphosphin (TPP), Irgafos^{®} 168 (Tris(2,4-di-tert-butyl-phenyl)-phosphit) oder Tris(nonylphenyl)phosphit oder deren Mischungen eingesetzt. Ferner können Alkylphosphate z. B. Mono-, Di- und Trihexylphosphat, Triisoctylphosphat und Trinonylphosphat eingesetzt werden.

Ferner können phenolische Antioxidantien wie alkylierte Monophenole, alkylierte Thioalkylphenole, Hydrochinone und alkylierte Hydrochinone eingesetzt werden. Besonders bevorzugt werden Irganox^{®} 1010 (Pentaerythrit- 3-(4-hydroxy-3,5-di-tert-butylphenyl)propionat; CAS: 6683-19-8) und/oder Irganox 1076^{®} (2,6-Di-tert-butyl-4-(octadecanoxycarbonylethyl)phenol) eingesetzt.

Die Zusammensetzungen enthalten bevorzugt auch keine Impact Modifier.

Die Farbmittel und sonstigen Additive können beispielsweise in die Zusammensetzung eingebracht werden, indem 2 bis 5 Gew.-%, bezogen auf die Gesamtzusammensetzung, Polycarbonat-Pulver enthaltend die Farbmittel und sonstigen Additive, mit einem Polycarbonat-Basismaterial vermischt wird, wobei das Polycarbonat in Pulverform eine andere MVR ausweisen kann als das Basismaterial.

Da die Abdeckungen für den Infrastruktur- oder Transportbereich relativ groß sein können und eine komplexe Geometrie aufweisen können, sollte die für die Substratschicht verwendete thermoplastische Zusammensetzung möglichst eine ausreichende Fließfähigkeit aufweisen, um im Spritzgussprozess, wie z.B. speziell dem Spritzprägeverfahren, zu entsprechenden Formkörpern verarbeitet werden zu können. Die Schmelzevolumenfließrate MVR beträgt daher bevorzugt 7 bis 20 cm³/(10 min), weiter bevorzugt 9 bis 19 cm³/(10 min), bestimmt nach ISO 1133-1:2011 bei 300 °C und 1,2 kg Belastung.

Bevorzugt umfasst die Abdeckung neben der Substratschicht noch eine Schutzschicht. Diese Schutzschicht ist auf der Seite der Abdeckung aufgebracht, die dazu bestimmt ist, auf der Außenseite der im Fahrzeug verbauten Abdeckung zu liegen, d.h. auf der Seite, die zur Umwelt hin orientiert ist. Die Abdeckung kann zusätzlich/alternativ aber auch eine Schutzschicht auf der gegenüberliegenden Seite aufweisen, also auf der Seite, die dazu bestimmt ist, zum Inneren des Fahrzeugs hin orientiert zu sein.

Die Schutzschicht umfasst bevorzugt, insbesondere besteht bevorzugt aus einen/m Kratzfest-Lack (Hard-Coat, Decklack). Dieser ist bevorzugt ein Polysiloxanlack, hergestellt nach dem Sol-Gel-Prozess. Die Schutzschicht enthält besonders bevorzugt außerdem mindestens einen UV-Absorber. Die Schutzschicht weist eine hohe Abrieb- und Kratzfestbeständigkeit auf und erfüllt damit insbesondere die Funktion einer Kratzfestbeschichtung.

Kommerziell erhältliche Systeme sind z.B. AS4000, SHC5020 und AS4700 von Momentive Performance Materials. Derartige Systeme sind z.B. in US 5,041,313 A, DE 3,1213,85 A1, US 5,391,795 A und WO 2008/109072 A1 beschrieben. Die Synthese dieser Materialien erfolgt üblicherweise über Kondensation von Alkoxy- und/oder Alkylalkoxysilanen unter Säure- oder Basenkatalyse. Optional können Nanopartikel eingearbeitet werden. Bevorzugte Lösemittel sind Alkohole wie Butanol, Isopropanol, Methanol, Ethanol und deren Mischungen.

Es sind verschiedene Methoden bekannt, um eine Kratzfestbeschichtung auf Kunststoffartikeln herzustellen. Diese Systeme können beispielsweise über Tauchverfahren, Spincoating, Sprühverfahren oder eine Fließbeschichtung, bevorzugt über Tauch- oder Fließverfahren, aufgebracht werden. Die Aushärtung kann thermisch oder mittels UV-Bestrahlung erfolgen. Die Kratzfestbeschichtung kann z.B. direkt oder nach Vorbereitung der Substratoberfläche mit einer Grundierung (Primer) aufgetragen werden. Ferner kann eine Kratzfestbeschichtung über Plasma-gestützte Polymerisationsverfahren aufgebracht werden, z.B. über ein SiO₂-Plasma. Antibeschlags- oder Antireflex-Beschichtungen können ebenfalls über Plasmaverfahren hergestellt werden. Weiterhin ist es möglich, über bestimmte Spritzgussverfahren, wie z.B. das Hinterspritzen von oberflächenbehandelten Folien, eine Kratzfestbeschichtung auf den resultierenden Formkörper aufzubringen. In der Kratzfestschicht können verschiedene Additive, wie z.B. UV-Absorber, abgeleitet z.B. von Triazolen oder Triazinen, vorhanden sein.

Die Schutzschicht kann somit ein Ein- oder Mehrschichtsystem sein und somit auch eine Kombination zweier oder mehrerer Schichten a', a" etc. Insbesondere kann die Schutzschicht aus den Schichten Decklackschicht a' und Primer-Schicht a" bestehen, wobei die Primerschicht zwischen Decklackschicht und Substratschicht angeordnet ist.

In einer bevorzugten Ausführungsform, die eine besonders gute Bewitterungsstabilität bewirkt, umfasst die Schutzschicht eine
A) Kratzfestbeschichtung (Schicht a') auf Polysiloxanbasis, enthaltend
   i. mindestens einen UV-Absorber aus der Gruppe der Benzophenone, Resorcine, 2-(2-Hydroxyphenyl-)Bentriazole, Hydroxyphenyl-s-Triazine, 2-Cyanacrylate, Oxalanilide
      und/oder einen UV-Inhibitor aus der Gruppe der sterisch gehinderten Amine (HALS), insbesondere basierend auf 2,2,6,6-Tetramethylpiperidin oder dessen Derivaten;
   ii. mindestens eine Kombination von einem organo-modifizierten Silan mit einem Kiesel-Sol, wobei das organo-modifizierte Silan vorzugsweise ein Methyltrialkoxy- oder Dimethyldialkoxysilan ist;
   und optional, in einer weiter bevorzugten Ausführungsform, zusätzlich eine auf der Substratschicht angeordnete, als Haftvermittler zwischen der Kratzfestbeschichtung auf Polysiloxanbasis und der Substratschicht wirkende, Primerschicht (Schicht a"), enthaltend
   mindestens einen UV-Absorber aus der Gruppe der Benzophenone, der Resorcine, 2-(2-Hydroxyphenyl-)Bentriazole, Hydroxyphenyl-s-Triazine, 2-Cyanacrylate, Oxalanilide und/oder sterisch gehinderten Amine (HALS), insbesondere basierend auf 2,2,6,6-Tetramethylpiperidin sowie dessen Derivaten,
   wobei
   die Dicke der Primerschicht 0,3 µm bis 8 µm, bevorzugt 1,1 µm bis 4,0 µm, beträgt.

Unter "Derivaten" werden erfindungsgemäß solche Verbindungen verstanden, deren Molekülstruktur an der Stelle eines H-Atoms oder einer funktionellen Gruppe ein anderes Atom oder eine andere Atomgruppe besitzt bzw. bei denen ein oder mehrere Atome/Atomgruppen entfernt wurden. Die Stammverbindung ist somit noch weiterhin erkennbar.

Sofern das thermoplastische Polymer, auf dem die für die Substratschicht verwendete Zusammensetzung basiert, ein aromatisches Polycarbonat ist, wird bevorzugt ein UV-Absorber enthaltender Primer eingesetzt, um die Haftung des Kratzfestlackes auf der Substratschicht zu verbessern. Der Primer enthält bevorzugt weitere Stabilisatoren wie z.B. HALS-Systeme (Stabilisatoren auf Basis sterisch gehinderter Amine), Haftvermittler und/oder Fließhilfsmittel. Das jeweilige Harz, welches das Basismaterial der Primerschicht bildet, kann aus einer Vielzahl von Materialien ausgewählt werden und ist beispielsweise in Ullmann's Encylopedia of Industrial Chemistry, 5th Edition, Vol. A18, pp. 368-426, VCH, Weinheim 1991 beschrieben. Es können Polyacrylate, Polyurethane, Phenol-basierte, Melamin-basierte, Epoxy- und Alkyd-Systeme oder Mischungen dieser Systeme eingesetzt werden. Das Harz wird meistens in geeigneten Lösemitteln gelöst - häufig in Alkoholen. Abhängig vom gewählten Harz kann die Aushärtung bei Raumtemperatur oder bei erhöhten Temperaturen erfolgen. Bevorzugt werden Temperaturen zwischen 50 °C und 140 °C eingesetzt - häufig, nachdem ein Großteil des Lösemittels kurzzeitig bei Raumtemperatur entfernt wurde. Kommerziell erhältliche Primer-Systeme sind z.B. SHP470, SHP470-FT2050 und SHP401 der Firma Momentive Performance Materials. Derartige Beschichtungen sind z.B. in US 6,350,512 B1, US 5,869,185 A, EP 1308084 A1 und WO 2006/108520 A1 beschrieben.

Die Polysiloxanschicht enthält bevorzugt siliciumorganische Verbindungen der Formel RₙSiX₄₋ₙ, und/oder partielle Kondensate derselben,
wobei die Reste R gleich oder verschieden sind und für einen linearen oder verzweigten, gesättigten oder ein- oder mehrfach ungesättigten oder aromatischen Kohlenwasserstoffrest stehen,
die Reste X gleich oder verschieden sind und für hydrolysierbare Gruppen oder Hydroxylgruppen stehen, bevorzugt für Halogen, insbesondere Chlor oder Brom, Alkoxygruppen, Alkylcarbonylgruppen oder Acyloxygruppen stehen und n 0, 1, 2 oder 3, bevorzugt 1 oder 2, ganz besonders bevorzugt 1, ist.

R steht bevorzugt für gesättigte, verzweigte oder unverzweigte Alkylreste mit 1 bis 20 Kohlenstoffatomen und/oder für ein- oder mehrfach ungesättigte verzweigte oder unverzweigte Alkenylreste mit 2 bis 20 Kohlenstoffatomen oder aromatische Gruppen mit 6 bis 12 Kohlenstoffatomen. Weiter bevorzugt weisen die Alkyl- bzw. Alkenylreste bis zu 12, noch weiter bevorzugt bis zu 8 Kohlenstoffatome auf. Besonders bevorzugt sind alle Reste Methyl und/oder Phenyl.

Besonders bevorzugt steht X für eine Alkoxygruppe, ganz besonders bevorzugt für eine C₁- bis C₄-Alkoxygruppe, beispielsweise für eine Methoxy- oder eine Ethoxygruppe.

Die Silicium-Verbindungen RₙSiX₄₋ₙ sind über die Reste X hydrolysierbar und kondensierbar. Über diese hydrolytisch kondensierbaren Gruppen wird ein anorganisches Netzwerk mit Si-O-Si-Einheiten aufgebaut. Die Reste R sind unter den üblichen Kondensationsbedingungen im Gegensatz zu den Resten X gegenüber einer Hydrolyse stabil.

Bei Verwendung der vorgenannten Siloxan-basierten Decklacksysteme sind Trockenschichtdicken von 3µm - 20 µm bevorzugt, weiter bevorzugt 5 µm - 15 µm, besonders bevorzugt 6 µm - 12 µm. Unter "Trockenschichtdicke" wird die Schichtdicke des Lackes nach Applikation, Verdampfen des Lösemittels und anschließender thermischer oder UV-Härtung gemeint. Diese Schichtdicke gilt allgemein für bevorzugte Schutzschichten a. Die Schichtdicke kann beispielsweise mittels Weißlichtinterferometrie (z.B. mittels eines Weißlichtinterferometers der Firma Eta Optic; ETA-SST) bestimmt werden, was bevorzugt ist. Ferner kann über Querschnittspräparation und mikroskopische Erfassung (über Lichtmikroskopie oder Rasterelektronenmikroskopie) der Schichten über Materialkontrast die Dicke erfasst werden.

Wie zuvor beschrieben, können anstelle von Primer/Kratzfestbeschichtungs-Kombinationen auch Einkomponenten-Hybrid-Systeme, entweder thermisch- oder UV-härtend, für die Mehrschichtkörper, welche die Abdeckung bilden, eingesetzt werden.

Diese sind z.B. in EP 0570165 A2, WO 2008/071363 A2 oder DE 2804283 A beschrieben. Kommerziell erhältlich Hybrid-Systeme sind z.B. unter den Namen PHC 587, PHC 587C als thermisch härtende oder UVHC 3000 und UVHC 5000 als UV-härtende Lacke der Firma Momentive Performance Materials erhältlich. Weiter erfindungsgemäß grundsätzlich geeignete, kommerziell erhältliche UV-härtende Lacksysteme sind UVT 610 und UVT 820 der Firma Redspot sowie alle Lacke wie sie heute auch auf Kunststoffabdeckscheiben verwendet werden.

In einem besonders bevorzugten Verfahren zur Herstellung der Abdeckungen für die erfindungsgemäßen Fahrzeuge erfolgt die Applikation der Schutzschicht e über das Flutverfahren, da es zu beschichteten Teilen mit hoher optischer Qualität führt.

Das Flutverfahren kann manuell mit Schlauch oder geeignetem Beschichtungskopf oder automatisch im Durchlauf über Flutlackierroboter- und gegebenenfalls Schlitzdüsen erfolgen.

Weitere mögliche Applikationsverfahren sind Tauchen, Rakeln, Walzen, Sprühen oder Spincoating. Hierbei können die Bauteile, sowohl hängend als auch in einem entsprechenden Warenträger gelagert, beschichtet werden.

Bei größeren und/oder 3D-Bauteilen - d.h. Bauteilen mit dreidimensionaler Oberfläche, die also eine von einer Platte abweichende Geometrie aufweisen- wird das zu beschichtende Teil in einen geeigneten Warenträger eingehängt oder aufgesetzt.

Bei Kleinteilen kann die Beschichtung auch per Hand durchgeführt werden. Hierbei wird die zu schichtende flüssige Primer- oder Lacklösung zur Ausbildung der Schutzschicht ausgehend von der oberen Kante des Kleinteiles in Längsrichtung über die Platte gegossen, während gleichzeitig der Ansatzpunkt des Lackes auf der Platte von links nach rechts über die Plattenbreite geführt wird.

Die lackierten Platten werden senkrecht an einer Klammer hängend nach den jeweiligen Herstellervorgaben abgelüftet und gehärtet.

Durch den Einsatz der zuvor beschriebenen Zusammensetzung, insbesondere der Zusammensetzung auf Basis von aromatischem Polycarbonat, werden Abdeckungen für LiDAR-Sensoren zur Verfügung gestellt, mit denen gleichzeitig einerseits verschiedenste elektrotechnische, elektronische, elektrooptische und optische Funktionselemente abgedeckt werden können, ohne dass deren Funktion, sowohl in Bezug auf das Fahrzeug und dessen Insassen als auch in Bezug auf die Außenwelt, so eingeschränkt wird, dass sie nicht mehr bestimmungsgemäß erfüllt wird, andererseits auch für im für den Menschen sichtbaren Spektralbereich des Lichts ansprechende Färbungen erzielbar sind, insbesondere ein glasartiger Schwarzeindruck.

Die Herstellung von drei-dimensional geformten Substratschichten, aber auch plattenförmigen Schichten, ausgehend von der beschriebenen Polymer-Zusammensetzung, enthaltend die oben genannten Komponenten, erfolgt mit gängigen Einarbeitungsverfahren durch Zusammenführung, Vermischen und Homogenisieren, wobei insbesondere die Homogenisierung, bevorzugt in der Schmelze unter Einwirkung von Scherkräften, stattfindet. Dazu werden das thermoplastische Polymer, bevorzugt aromatisches Polycarbonat, und die ggf. weiteren Komponenten der Polymer-Formmasse, bevorzugt der Polycarbonat-Formmasse, auf üblichen Schmelze-Mischaggregaten wie z.B. auf Ein- oder Mehrwellen-Extrudern oder auf Knetern in der Schmelze unter üblichen Bedingungen vermischt, extrudiert und granuliert. Die Additive können entweder separat als Granulate bzw. Pellets über Dosierwaagen oder Seitenfüttereinrichtungen oder auch bei erhöhter Temperatur als Schmelze mittels Dosierpumpen an geeigneter Stelle in den Feststoffförderbereich des Extruders oder in die Polymerschmelze dosiert werden. Die Masterbatches in Form von Granulaten oder Pellets können auch mit anderen partikelförmigen Verbindungen zu einer Vormischung vereinigt und dann gemeinsam über Dosiertrichter oder Seitenfüttereinrichtungen in den Feststoffförderbereich des Extruders oder in die Polymerschmelze im Extruder zugeführt werden. Bei dem Compoundier-Aggregat handelt es sich bevorzugt um einen Zweiwellenextruder, besonders bevorzugt um einen Zweiwellenextruder mit gleichsinnig rotierenden Wellen, wobei der Zweiwellenextruder ein Längen/Durchmesser-Verhältnis der Schneckenwelle bevorzugt von 20 bis 44, besonders bevorzugt von 28 bis 40 aufweist. Ein derartiger Zweiwellenextruder umfasst eine Aufschmelz- und Mischzone oder eine kombinierte Aufschmelz- und Mischzone und optional eine Entgasungszone, an der ein absoluter Druck p von bevorzugt höchstens 800 mbar, weiter bevorzugt höchstens 500 mbar, besonders bevorzugt höchstens 200 mbar eingestellt wird. Die mittlere Verweilzeit der Mischungszusammensetzung im Extruder ist bevorzugt auf maximal 120 s, besonders bevorzugt maximal 80 s, besonders bevorzugt auf max. 60 s begrenzt. Die Temperatur der Schmelze des Polymers beziehungsweise der Polymerlegierung am Austritt des Extruders beträgt in bevorzugter Ausführungsform 200°C bis 400°C.

Neben dem Extrudieren können die für die Substratschicht eingesetzten Zusammensetzungen durch Heißpressen, Spinnen, Blasformen, Tiefziehen oder Spritzgießen in die Substratschicht überführt werden. Bevorzugt ist hierbei das Spritzgießen oder Spritzprägen.

Spritzgießverfahren sind dem Fachmann bekannt und beispielsweise im "Handbuch Spritzgießen", Friedrich Johannnaber/Walter Michaeli, München; Wien: Hanser, 2001, ISBN 3-446-15632-1 oder in "Anleitung zum Bau von Spritzgießwerkzeugen", Menges/Michaeli/Mohren, München; Wien: Hanser, 1999, ISBN 3-446-21258-2 beschrieben.

Spritzguss umfasst hier alle Spritzgießverfahren einschließlich Mehrkomponentenspritzguss und Spritzprägeverfahren.

Spritzprägeverfahren unterscheiden sich von herkömmlichen Spritzgussverfahren dadurch, dass der Einspritz- und/oder Verfestigungsvorgang unter Ausführung einer Formplattenbewegung durchgeführt wird. Beim bekannten Spritzprägeverfahren sind die Formplatten vor dem Einspritzvorgang bereits etwas geöffnet, um die bei der späteren Verfestigung auftretende Schwindung auszugleichen und den benötigten Spritzdruck zu reduzieren. Schon zu Beginn des Einspritzvorganges ist daher eine vorvergrößerte Kavität vorhanden. Tauchkanten des Werkzeuges garantieren auch bei etwas geöffneten Formplatten noch eine ausreichende Dichtigkeit der vorvergrößerten Kavität. Die Kunststoffmasse wird in diese vorvergrößerte Kavität eingespritzt und währenddessen bzw. anschließend unter Ausführung einer Werkzeugbewegung in Schließrichtung verpresst. Insbesondere bei der Herstellung von großflächigen und dünnwandigen Formteilen mit langen Fließwegen ist die aufwändigere Spritzprägetechnik bevorzugt oder ggf. zwingend erforderlich. Nur auf diese Weise wird eine Reduzierung der bei großen Formteilen benötigten Spritzdrücke erreicht. Ferner können Spannungen bzw. Verzug im Spritzgießteil, welche infolge hoher Spritzdrücke auftreten, durch Spritzprägen vermieden werden.

Die Abdeckung wird in die Fahrzeugkarosserie vorzugsweise über nicht IR-transparente Bereiche integriert. "Nicht IR-transparent" bedeutet hierbei eine Transmission im nicht IR-transparenten Bereich in seiner jeweiligen Dicke von weniger als 50% im Bereich von 800 nm bis 2500 nm, bestimmt nach DIN ISO 13468-2:2006. Dieses sind nicht-transparente Schichten, vorzugsweise aus einem Polymerblend, weiter bevorzugt aus einem Polycarbonatblend, bevorzugt mit Polycarbonat als überwiegend vorhandener Komponente, ganz besonders bevorzugt mit einem ABS (AcrylnitrilButadien-Styrol) oder Polyester als Blendpartner. Eine solche nicht-transparente Schicht ist in weiten Bereichen in direktem Kontakt mit dem zuvor beschriebenen Schichtaufbau aus Substratschicht und ggf. vorhandener Schutzschicht.

Bei einer Anformung des nicht IR-transparenten Materials an die erfindungsgemäß eingesetzte Abdeckung liegt der Übergang der Materialien vorzugsweise in Kantenbereichen, so dass eventuell auftretende Unebenheiten kaschiert werden. In jedem Fall gibt es Bereiche, in denen die Substratschicht auf der nicht-IR-transparenten Schicht bzw. die nicht-IR-transparente Schicht auf der Substratschicht liegt. "Auf ...liegt" meint hierbei ein Überlappen der Schichten, wenn man die Abdeckung, senkrecht zur Verbindungsfläche der einzelnen Schichten, blickt. Es versteht sich, dass die nicht IR-transparente Schicht nicht in direktem Kontakt mit der Substratschicht sein muss, nur kann, da sie hinter weiteren Schichten angeordnet sein kann.

Diese nicht IR-transparenten Werkstoffe dienen insbesondere als verstärkende Rahmenelemente. Für die Herstellung von verstärkenden Rahmenelementen werden vorzugsweise thermoplastische Kunststoffe, enthaltend Füll- und/oder Verstärkungsstoffe, verwendet.

Die verwendeten Füll- und/oder Verstärkungsstoffe sind üblicherweise faser-, plättchen-, röhren-, stäbchen- oder kugelförmig bzw. sphärisch oder partikulär. Zu den geeigneten Füll- und Verstärkungsstoffen zählen beispielsweise Talk, Wollastonit, Glimmer, Kaolin, Kieselgur, Calciumsulfat, Calciumcarbonat, Bariumsulfat, Glasfasern, Glas- oder Keramikkugeln, Glashohlkugeln oder Keramikhohlkugeln, Glas- oder Mineralwolle, Kohlefasern oder Carbon-Nanotubes. Bevorzugte Füllstoffe sind Füllstoffe, die ein isotropes Schwindungsverhalten der Zusammensetzung bewirken.

Im Rahmen der vorliegenden Erfindung ist die Verwendung von Talk und Kurzglasfasern besonders bevorzugt.

Glas- oder Keramikkugeln oder -hohlkugeln können dabei die Kratzfestigkeit dieser Oberfläche erhöhen.

In Teilen der Substratschicht, die nicht vor dem LiDAR-Sensor angeordnet sind, d.h. diesen nicht zur Umwelt hin abdecken, kann die Substratschicht auch Materialien umfassen, welche Füll- und Verstärkungsstoffe enthalten. Deren Anteil beträgt bevorzugt 5 Gew.-% bis 40 Gew.-%, vorzugsweise 7 Gew.-% bis 30 Gew.-%, weiter bevorzugt 8 Gew.-% bis 25 Gew.-%, wobei sich die Gewichtsangaben auf die Gesamtzusammensetzung von der Substratschicht beziehen. Die Substratschicht ist im Bereich aus der beschriebenen thermoplastischen Zusammensetzung frei von Füll- und Verstärkungsstoffen.

Die Abdeckungen, umfassend die bzw. aus den opaken Substratschichten - mit ggf. einer Schutzschicht, können im Fahrzeugbau auf beliebige Trägersysteme aus Metall oder Kunststoff aufgebracht werden. Dies kann mittels spezieller Klebesysteme, wie z.B. Polyurethan-basierter Klebesysteme geschehen. Die Kombination aus LiDAR-Sensor und Abdeckung kann als Ganzes in einem Fahrzeug verbaut werden; ebenso können aber auch LiDAR-Sensor und Abdeckung separat verbaut werden. Bevorzugt wird zunächst der LiDAR-Sensor verbaut und dann die Abdeckung, insbesondere ein Frontpanel, nachträglich vor den LiDAR-Sensor gesetzt.

Im Rahmen der vorliegenden Erfindung können bevorzugte Ausführungsformen, die für einzelne Merkmale genannt sind, auch miteinander kombiniert werden, sofern diese nicht widersprüchlich sind.

### Figuren

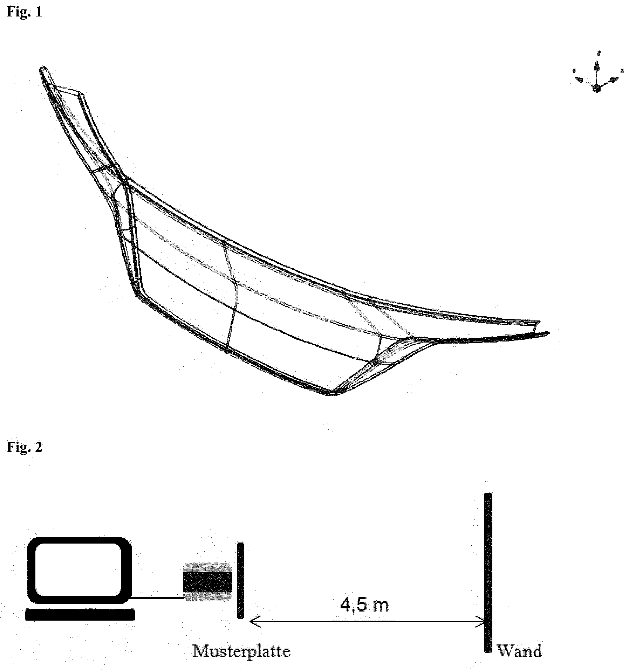

- **Figur 1**: zeigt ein Frontpanel als Beispiel für eine erfindungsgemäße Abdeckung.
- **Figur 2**: zeigt den im Beispielteil verwendeten Versuchsaufbau.

### Beispiele

Im Folgenden wird die Erfindung anhand von Ausführungsbeispielen näher beschrieben, wobei die hier beschriebenen Bestimmungsmethoden für alle korrespondierenden Größen in der vorliegenden Erfindungsbeschreibung zur Anwendung kommen, sofern nichts Gegenteiliges beschrieben worden ist.

Einige der nachfolgend beschriebenen Substratmaterialien enthielten übliche Additive wie Entformungsmittel, Thermostabilisatoren und/oder UV-Absorber. In Vortests wurde geprüft und festgestellt, dass diese Additive keinen Einfluss auf das Signal des LiDAR-Sensors haben.

### Substrat 1: Vergleichsbeispiel

Zusammensetzung, enthaltend 99,99984 Gew.-% Polycarbonat der Firma Covestro Deutschland AG mit einer MVR von ca. 12 cm³/10 min, gemessen bei 300 °C und 1,2 kg Belastung (gemäß ISO 1133-1:2012-03), basierend auf Bisphenol A und terminiert mit Phenol. Die Zusammensetzung enthielt außerdem 0,00006 Gew.-% Macrolex Violett 3R (Farbmittel der Formel (10)) und 0,0001 Gew.-% Macrolex Blau RR (Farbmittel der Formel (6)).

### Substrat 2: Vergleichsbeispiel

Zusammensetzung, enthaltend 99,8 Gew.-% Polycarbonat der Firma Covestro Deutschland AG mit einer MVR von ca. 12 cm³/10 min, gemessen bei 300 °C und 1,2 kg Belastung (gemäß ISO 1133-1:2012-03), basierend auf Bisphenol A und terminiert mit Phenol. Die Zusammensetzung enthielt außerdem 0,1 Gew.-% Solvent Blue 36 und 0,1 Gew.-% Macrolex Grün G (Farbmittel der Formel (2)).

### Substrat 3: Vergleichsbeispiel

Zusammensetzung, enthaltend 99,8000 Gew.-% Polycarbonat der Firma Covestro Deutschland AG mit einer MVR von ca. 12 cm³/10 min, gemessen bei 300 °C und 1,2 kg Belastung (gemäß ISO 1133-1:2012-03), basierend auf Bisphenol A und terminiert mit Phenol. Das Polycarbonat enthält 0,134 Gew.-% Solvent blue 36 (weiteres Farbmittel), 0,044 Gew.-% Macrolex Orange 3G (Farbmittel der Formel (15)) und 0,022 Gew.-% Amaplast Yellow GHS (Solvent Yellow 163, Farbmittel der Formel (16)).

### Substrat 4: Vergleichsbeispiel

Zusammensetzung, enthaltend 99,84 Gew.-% Polycarbonat der Firma Covestro Deutschland AG mit einer MVR von ca. 12 cm³/(10 min), gemessen bei 300 °C und 1,2 kg Belastung (gemäß ISO 1133-1:2012-03), basierend auf Bisphenol A und terminiert mit Phenol. Das Material enthielt 0,16 Gew.-% Ruß.

### Substrat 5: Vergleichsbeispiel

Zusammensetzung, enthaltend 93,195850 Gew.-% Polycarbonat der Firma Covestro Deutschland AG mit einer MVR von ca. 18 cm³/(10 min), gemessen bei 300 °C und 1,2 kg Belastung (gemäß ISO 1133-1:2012-03), basierend auf Bisphenol A und terminiert mit tert-Butylphenol. Die Zusammensetzung enthielt außerdem 6,756 Gew.-% Kronos 2230 (Titandioxid), 0,00006 Gew.-% Macrolex Gelb 3G (Farbmittel der Formel (14)), 0,00009 % Macrolex Violett 3R (Farbmittel der Formel (10)) und 0,054 Gew.-% Tinopal (2,5-Thiophenyldibis(5-tert-butyl-1,3-benzoxazol); Optischer Aufheller).

### Substrat 6: Vergleichsbeispiel

Zusammensetzung, enthaltend 99,435 Gew.-% Polycarbonat der Firma Covestro Deutschland AG mit einer MVR von ca. 12 cm³/10 min, gemessen bei 300 °C und 1,2 kg Belastung (gemäß ISO 1133-1:2012-03), basierend auf Bisphenol A und terminiert mit Phenol. Das Polycarbonat enthielt 0,1 % Kronos 2230 (Titandioxid), 0,03 % Sicotan Gelb K2107 (Pigment Brown 24, CAS 68186-90-3; weiteres Farbmittel), 0,022 % Heucodur Blau 2R der Firma Heubach (Pigment Blue 28, Cobalt-Aluminat-Blau-Spinell, CAS 1345-16-0; weiteres Farbmittel), 0,35 % Macrolex Rot EG (Struktur 8) und 0,063 % Bayferrox 110 M der Firma Lanxess AG (Fe₂O₃; CAS 001309-37-1).

### Substrat 7: Vergleichsbeispiel

Polycarbonat/ABS-Blend der Firma Covestro Deutschland AG mit einem MVR von ca. 17 cm³/10 min, gemessen bei 260 °C und 5,0 kg Belastung (gemäß ISO 1133-1:2012-03), mit einem ABS-Anteil von ca. 30 Gew.-% und einem SAN-Gehalt von ca. 10 Gew.-%. Das Material enthielt keine Farbmittel.

### Substrat 8: Vergleichsbeispiel

Zusammensetzung, enthaltend 99,96 Gew.-% Polycarbonat der Firma Covestro Deutschland AG mit einer MVR von ca. 12 cm³/10 min, gemessen bei 300 °C und 1,2 kg Belastung (gemäß ISO 1133-1:2012-03), basierend auf Bisphenol A und terminiert mit Phenol. Die Zusammensetzung enthielt 0,04 Gew.-% Ruß.

### Substrat 9: Vergleichsbeispiel

Zusammensetzung, enthaltend 99,78 Gew.-% Polycarbonat der Firma Covestro Deutschland AG mit einer MVR von ca. 12 cm³/10 min, gemessen bei 300 °C und 1,2 kg Belastung (gemäß ISO 1133-1:2012-03), basierend auf Bisphenol A und terminiert mit Phenol. Die Zusammensetzung enthielt 0,02 Gew.-% Ruß und 0,2 Gew.-% Macrolex Violet B (Farbmittel der Formel (11)).

### Substrat 10: erfindungsgemäß

Zusammensetzung, enthaltend 99,874 Gew.-% Polycarbonat der Firma Covestro Deutschland AG mit einer MVR von ca. 18 cm³/(10 min), gemessen bei 300 °C und 1,2 kg Belastung (gemäß ISO 1133-1:2012-03), basierend auf Bisphenol A und terminiert mit tert-Butylphenol. Die Zusammensetzung enthielt außerdem 0,048 Gew.-% Macrolex Orange 3G (Farbmittel der Formel (15)), 0,01 Gew.-% Macrolex Violet B (Farbmittel der Formel (11)) und 0,068 Gew.-% Farbmittel der Formel (4a/4b, 1:1).

### Substrat 11: erfindungsgemäß

Zusammensetzung, enthaltend 99,8 Gew.-% Polycarbonat der Firma Covestro Deutschland AG mit einer MVR von ca. 12 cm³/10 min, gemessen bei 300 °C und 1,2 kg Belastung (gemäß ISO 1133-1:2012-03), basierend auf Bisphenol A und terminiert mit Phenol, und enthaltend 0,1 Gew.-% Macrolex Violet 3R (Farbmittel der Formel (10)) und 0,1 Gew.-% Macrolex Grün 5B (Farbmittel der Formel (1)).

### Substrat 12: erfindungsgemäß

Zusammensetzung enthaltend 99,894 Gew.-% Polycarbonat der Firma Covestro Deutschland AG mit einer MVR von ca. 12 cm³/10 min, gemessen bei 300 °C und 1,2 kg Belastung (gemäß ISO 1133-1:2012-03), basierend auf Bisphenol A und terminiert mit Phenol, und enthaltend 0,0360 Gew.-% Macrolex Blau RR (Farbmittel der Formel (6)) und 0,07 Gew.-% Macrolex Violet 3R (Farbmittel der Formel (10))

### Substrat 13: Vergleich

Spritzgegossene Farbmittel- und Ruß-freie Platte aus Polyamid 6,6 mit einer Stärke von 3,0 mm.

### Substrat 14: Vergleich

Acrylnitril-Butadien-Styrol-Copolymer(ABS)-Folie mit einer Stärke von 0,6 mm.

### Substrat 15: Vergleich

Polyethersulfon in Form einer 0,175 mm dicken Ajedium Folie der Firma Solvay Solexis Inc.

### Substrat 16: Vergleich

Polyester aus Cyclohexandimethanol, Terephthalsäure und Tetramethylcyclobutandiol mit dem Handelsnamen Tritan der Firma Eastman Chemical.

### Substrat 17: Vergleich

Siloxan-haltiges Blockcokondensat auf Basis von Bisphenol-A-haltigem Polycarbonat mit einem Siloxangehalt von 5 %, hergestellt wie in EP 3099731 A1 beschrieben.

### Substrat 18: Vergleich

Polypropylenplatte mit einer Stärke von 4 mm.

### Substrat 19: Vergleich

Platte aus Polymethylmethacrylat der Marke Altuglass (Arkema).

### Compoundierung

Die Compoundierung der Komponenten zu den Substraten erfolgte auf einem Zweiwellenextruder der Firma KraussMaffei Berstorff, TYP ZE25, bei einer Gehäusetemperatur von 260°C, beziehungsweise einer Massetemperatur von ca. 280°C und einer Drehzahl von 100 Upm mit den in den Beispielen angegebenen Mengen an Komponenten. Die Zusammensetzungen wurden zu 5 mm dicken spritzgegossenen Polycarbonatplatten verarbeitet.

### Herstellung der Prüfkörper

Es wurden Rundplatten mit den Maßen 80 mm x 2 mm (Durchmesser x Höhe) in optischer Qualität angefertigt. Die Massetemperatur betrug 280°C und die Werkzeugtemperatur 80°C. Das jeweilige Granulat wurde vor Verarbeitung für 5 Stunden im Vakuumtrockenschrank bei 120°C getrocknet.

### Eingesetzter LiDAR-Sensor

Es wurde ein LiDAR-Sensor der Firma Velodyne, Ty Puck VLP 16 eingesetzt. Dieser arbeitet im Wellenlängenbereich von 895 bis 915 nm (Toleranzbereich). Die Nennwellenlänge, d.h. eigentliche Arbeitswellenlänge, liegt bei 903 nm.

Die wesentlichen Eigenschaften dieses Sensors sind:
Erfassungswinkel vertikal -15° bis + 15° mit 2° Abstand zwischen den Scanebenen und horizontal 360°. Die Software beinhaltet eine Multi-Beam-Funktion mit 16 Beams zur Minimierung von Schatteneffekten. Horizontale Auflösung des Lasersystems liegt bei 0,1° bis 0,4°, abhängig von der Rotationsgeschwindigkeit. Die Rotationsgeschwindigkeit der Vertikalerfassung ist einstellbar zwischen 5 bis 20 Hz. Bei einer Datenrate von 2Mbyte / sec werden 300 000 Punkte / Sekunde erfasst. Die erzielte Messgenauigkeit liegt dabei bei ca. +/- 3cm, dies entspricht 1 Sigma. Die erfassbare Messdistanz liegt zwischen 1 mm bis 100 Meter. Der Energiebedarf des Sensorsystems liegt bei 8 Watt elektrische Leistung, entsprechend 0,7A bei 12 Volt. Die Gesamtabmessungen des Sensors sind: Durchmesser 100 mm und Höhe 65mm.

### Messverfahren

Der LiDAR-Sensor (Modell Velodyne LiDAR Typ VLP-16, 16 Laser mit einer Arbeitswellenlänge von 903 nm) wurde in einem Raum positioniert und so ausgerichtet, dass ein Zielobjekt in exakt 4,5 m Entfernung erfasst wurde. Die zugehörige Software (Veloview der Firma Velodyne) wurde auf "intensity Mode" adjustiert. Bei dieser Einstellung wird das Eingangssignal, welches in den Sensor zurückgeworfen wird, entsprechend seiner Intensität in einer Vielfarbendarstellung dargestellt. Die Empfindlichkeit der Darstellung wurde auf 0 - 100 eingestellt. Anschließend wurden in einem Abstand von ca. 100 mm Kunststoffplatten mit der in Tabelle 1 angegebenen Dicke vor den aktiven Sensorbereich positioniert, sodass sowohl das Ausgangssignal als auch das zurückgeworfene Eingangssignal durch die Wanddicke der Prüfplatte dringen musste (Figur X). Anhand der Darstellung des Zielobjektes in der Auswertesoftware ist es möglich, eine eindeutige Zuordnung zwischen der jeweiligen, gemessenen Signaldämpfung der einzelnen Prüflinge (Kunststoffplatten) und der verwendeten Farbrezeptur durchzuführen.

Die gemessenen Intensitäten des wieder aufgenommenen Lasersignals lagen zwischen 0% und 100%. Je geringer die Dämpfung (Abschwächung) des Signals ist, desto geeigneter wird die Rezeptur für LiDAR-gestützte Sensoranwendungen im Automobilbereich eingestuft. Die Durchlässigkeit der jeweiligen Platte für IR-Strahlung im Bereich von 800 nm bis 2500 nm wurde bestimmt gemäß DIN ISO 13468-2:2006. Die Lichttransmission im VIS-Bereich des Spektrums (380 bis 780 nm, Transmissionsgrad Ty) wurde bestimmt nach DIN ISO 13468-2:2006 (D65, 10°, Schichtdicke der Musterplatte: 4 mm). Die Transmissionsmessungen wurden an einem Lambda 950 Spektralphotometer der Firma Perkin Elmer mit Photometerkugel durchgeführt.

Es wurde zudem untersucht, ob sich das Signal des LiDAR-Sensors in Abhängigkeit des Abstandes zwischen Sensor und Abdeckung verändert. In einem untersuchten Abstandsbereich von 5 bis 50 cm erfolgte keine relevante Änderung des Signals des LiDAR-Sensors.

### Ergebnisse

**Tabelle 1: Messergebnisse zur Lichttransmission und LiDAR-Sensor-Eignung**

| **Beispiele** | **Substrat** | **Farbmittel und sonstige Komponenten** | **Gesamtkonzentration Farbmittel** | **Ty** | **Dicke** | **Intensität LiDAR-Signal nach Durchgang durch das Substrat** |
|---|---|---|---|---|---|---|
| | | | | | | |
| **1** Vergleichsbeispiel | Substrat 1 | (6); (10) | 0,00016 Gew.-% | 88,1 % | 5 mm | 70 - 90 % |
| **2** Vergleichsbeispiel | Substrat 2 | (2); weiteres Farbmittel | 0,2 Gew.-% | 0 % | 2 mm | 20 - 25 % |
| **3** Vergleichsbeispiel | Substrat 3 | (15); (16); weiteres Farbmittel | 0,199 Gew.-% | 0 % | 2 mm | 35 - 40 % |
| **4** Vergleichsbeispiel | Substrat 4 | Ruß | 0,16 Gew.-% | 0 % | 5 mm | 0 % |
| **5** Vergleichsbeispiel | Substrat 5 | (14); (10); TiO₂ | 0,00015 Gew.-% | 0 % | 3,2 mm | 0 % |
| **6** Vergleichsbeispiel | Substrat 6 | TiO₂; (8); weitere Farbmittel; Fe₂O₃ | 0,465 Gew.-% | 0 % | 3,2 mm | 0 % |
| **7** Vergleichsbeispiel | Substrat 7 | - | 0 Gew.-% | 23,8 % | 3,2 mm | 0 % |
| **8** Vergleichsbeispiel | Substrat 8 | Ruß | 0,04 Gew.-% | 0 % | 2,0 mm | 0 % |
| **9** Vergleichsbeispiel | Substrat 9 | Ruß; (11) | 0,2 Gew.-% | 0 % | 2,0 mm | 0 % |
| **10** erfindungsgemäß | Substrat 10 | (4a/4b); (11); (15) | 0,126 Gew.-% | 0 % | 2,0 mm | 70 - 90 % |
| **11** erfindungsgemäß | Substrat 11 | (10); (1) | 0,2 Gew.-% | 0 % | 4,0 mm | 50 - 70 % |
| **12** erfindungsgemäß | Substrat 12 | (6); (10) | 0,106 Gew.-% | 0,7 % | 2,0 mm | 70 - 90 % |
| **13** erfindungsgemäß | Substrat 12, zwei 2,0 mm Platten hintereinander | (6); (10) | 0,106 Gew.-% | <0,5 % | 4,0 mm | 70 - 90 % |
| **14** erfindungsgemäß | Substrat 10 | (4a/4b); (11); (15) | 0,126 Gew.-% | 0 % | 3,0 mm | 70 - 90 % |
| **15**Vergleichsbeispiel | Substrat 13 | - | - | 46 % | 3,0 mm | 0 % |
| **16** Vergleichsbeispiel | Substrat 14 | - | - | 40 % | 0,6 mm | 0 % |
| **17** Vergleichsbeispiel | Substrat 15 | - | - | 87 % | 0,175 mm | 5 % |
| **18** Vergleichsbeispiel | Substrat 16 | - | - | 90 % | 2,3 mm | 10 - 20% |
| **19** Vergleichsbeispiel | Substrat 17 | - | - | 23 % | 2,3 mm | 0 % |
| **20** Vergleichsbeispiel | Substrat 18 | - | - | 61 % | 4,0 mm | 0 % |
| **21** Vergleichsbeispiel | Substrat 19 | - | - | 92,5 % | 2,7 mm | 70 - 90 % |

Wie aus Tabelle 1 ersichtlich, sind nur bestimmte Substratmaterialien geeignet. Schon sehr dünne Schichtdicken ungeeigneter Materialien, beispielsweise aus Polypropylen, dämpfen das Sensorsignal so stark, dass im Messaufbau keine Intensität mehr zu messen war. Ebenso war überraschend, dass so unterschiedliche Substrate wie Polyamid (Bsp. 15) und ABS (Bsp. 16) im Messaufbau keine Durchlässigkeit für den LiDAR-Sensor zeigten. Alle diese Thermoplaste sind in relevanten Schichtdicken im IR-Bereich transparent oder zumindest teiltransparent. Überraschenderweise weisen auch völlig amorphe Polymere wie Polyethersulfon und Polyester eine hohe Dämpfung für den LiDAR-Sensor auf.

Selbst modifizierte Polycarbonate wie Siloxan-haltige Polycarbonate sind nicht in geeigneter Weise mit einem LiDAR-Sensor kombinierbar. BPA-haltiges Polycarbonat weist zwar eine gute Durchlässigkeit für den LiDAR-Sensor auf, jedoch reichen Spuren von Pigmenten aus, um die Durchlässigkeit drastisch zu dämpfen. So ist bekannt, dass Ruß über den gesamten Spektralbereich, d.h. auch im IR-Bereich, eine hohe Absorption aufweist; trotzdem weist Polycarbonat, welches Spuren von Ruß enthält immer noch eine Resttransmission auf. Trotzdem sind derartige Zusammensetzungen für eine Kombination mit einem LiDAR-Sensor ungeeignet (Beispiel 9).

Weiterhin war es völlig überraschend, dass auch Kombinationen von in einer Polycarbonatmatrix löslichen Farbmitteln teilweise zu hohen Dämpfungen des LiDAR-Signals führten (Beispiel 2 und 3). Demgegenüber ist die erfinderische Kombination an Farbmitteln in thermoplastischer Matrix wie auf Bisphenol A basierendes Polycarbonat in geeigneter Weise mit einem LiDAR-Sensor verknüpfbar.

Es wurde zudem die Schmelzevolumenfließrate einiger Zusammensetzungen nach ISO 1133-1:2011 bei 300 °C bzw. 320°C und 1,2 kg Belastung über ein gewisses Zeitintervall bestimmt (Tabelle 2). Hieraus ist zu erkennen, dass die Substratmaterialien 2 und 3 der Vergleichsbeispiele deutlich instabiler sind das erfindungsgemäße Substratmaterial 11.

**Tabelle 2: MVR bei 300°C und 320°C, 1,2 kg Belastung für die Substratmaterialien 2, 3 und 11**

| | **Substratmaterial 2** | **Substratmaterial 3** | **Substratmaterial 11** |
|---|---|---|---|
| **300°C** | | | |
| nach 5 min | 12,0 | 12,3 | 12,5 |
| nach 20 min | 12,5 | 13,7 | 13,2 |
| nach 30 min | 13,0 | 15,0 | 13,3 |

| **320°C** | | | |
|---|---|---|---|
| nach 5 min | 21,5 | 22,3 | 21,9 |
| nach 20 min | 24,8 | 30,1 | 23,0 |
| nach 30 min | 26,5 | 34,7 | 23,5 |

## Patentansprüche

1. Fahrzeug, umfassend
a) einen LiDAR-Sensor, der Laserpulse mit einer Wellenlänge im Bereich von 800 bis 2500 nm aussendet, und
b) eine den LiDAR-Sensor teilweise oder ganz umgebende Abdeckung mit einer Substratschicht, umfassend einen Bereich aus einer thermoplastischen Zusammensetzung auf Basis von aromatischem Polycarbonat und/oder Polyestercarbonat,
wobei die Zusammensetzung eine Lichttransmission im Bereich von 380 bis 780 nm von weniger als 25,0 %, bestimmt bei einer Schichtdicke von 4 mm nach DIN ISO 13468-2: 2006 (D65, 10°), aufweist und
der Bereich der Substratschicht aus der thermoplastischen Zusammensetzung in seiner jeweiligen Dicke eine Durchlässigkeit für IR-Strahlung im Bereich von 800 nm bis 2500 nm von mindestens 40 %, bestimmt gemäß DIN ISO 13468-2:2006, aufweist und
wobei die thermoplastische Zusammensetzung der Substratschicht
i) mindestens 70 Gew.-% thermoplastisches Polymer aus der Gruppe, bestehend aus aromatischem Polycarbonat und/oder Polyestercarbonat,
ii) mindestens ein grünes und/oder ein blaues Farbmittel, ausgewählt aus der Gruppe, bestehend aus den Farbmitteln der Formeln (1), (2a-c), (3), (4a), (4b), (5) und/oder (6) 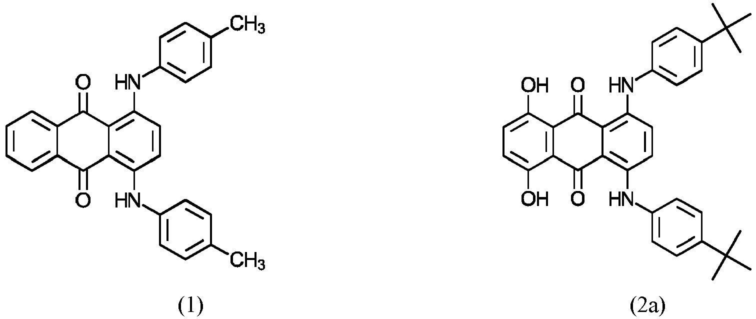 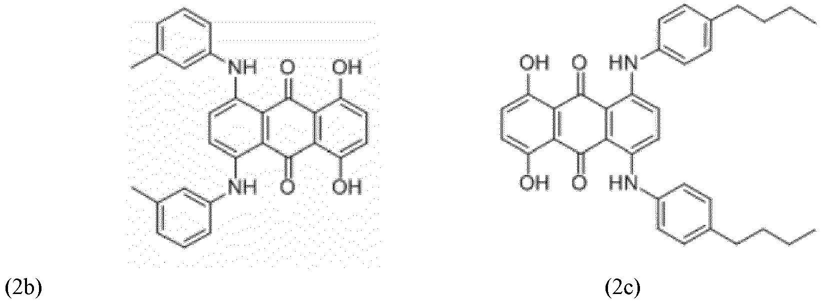 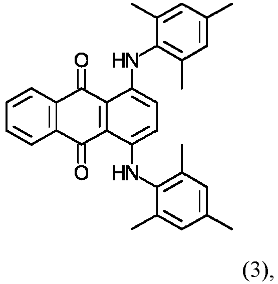 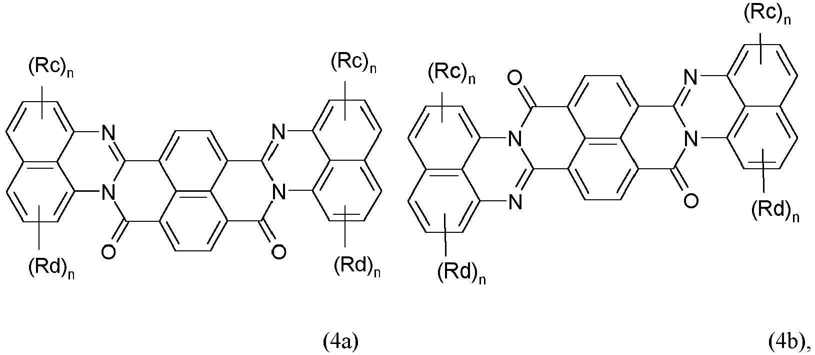 wobei
- Rc und Rd unabhängig voneinander für einen linearen oder verzweigten Alkylrest oder Halogen stehen,
- n unabhängig vom jeweiligen R für eine natürliche Zahl zwischen 0 und 3 steht, wobei der Rest für n=0 Wasserstoff ist, 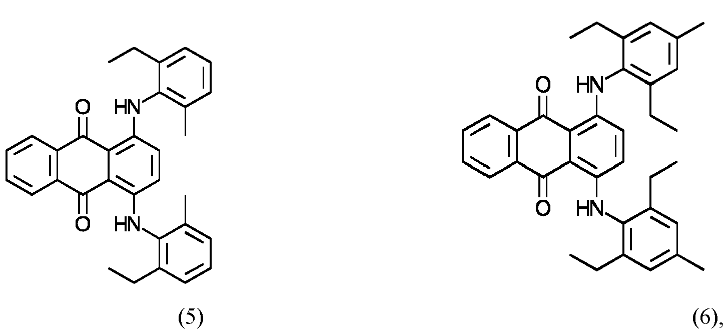
iii) mindestens ein rotes und/oder violettes Farbmittel, ausgewählt aus der Gruppe, bestehend aus den Farbmitteln der Formeln (7), (8), (9), (10), (11), (12a), (12b) und/oder (13) 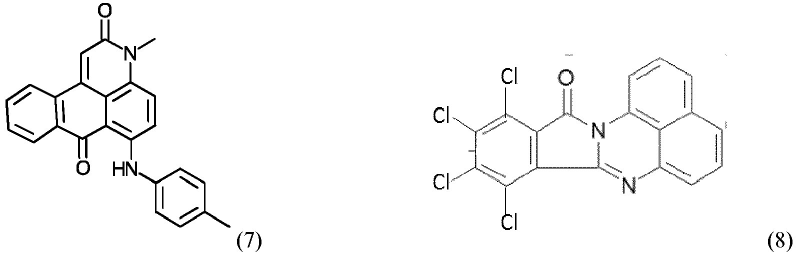 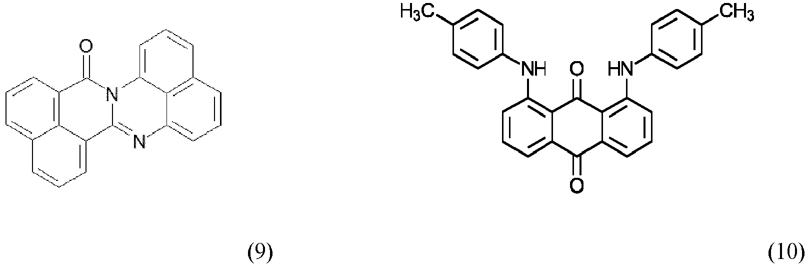 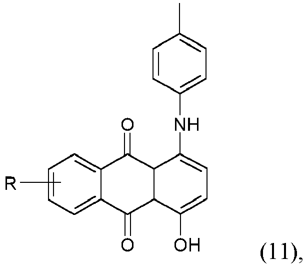
wobei R ausgewählt ist aus der Gruppe, die aus H und p-Methylphenylamin-Rest besteht, 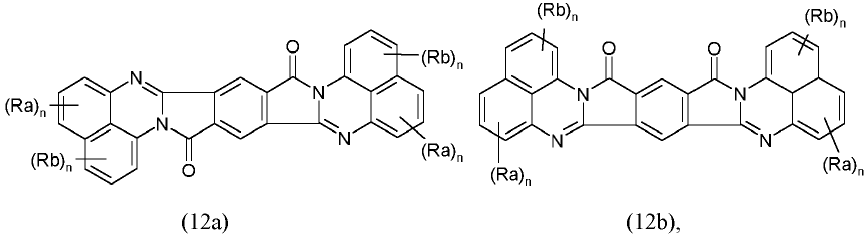
wobei
- Ra und Rb unabhängig voneinander für einen linearen oder verzweigten Alkylrest oder Halogen stehen,
- n unabhängig vom jeweiligen R für eine natürliche Zahl zwischen 0 und 3 steht, wobei der Rest für n=0 Wasserstoff ist, 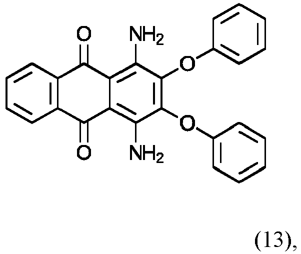
iv) optional ein oder mehrere weitere Farbmittel, ausgewählt aus der Gruppe, bestehend aus den gelben und orangen Farbmitteln der Formeln (14), (15), (16), (17) und/oder (18) 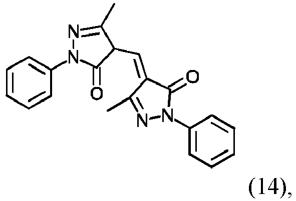 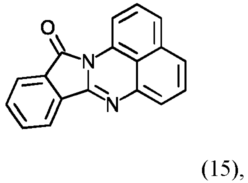 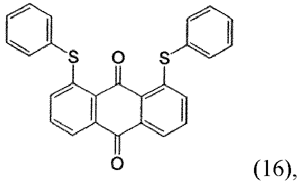 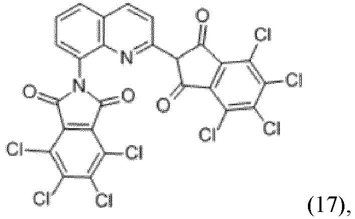 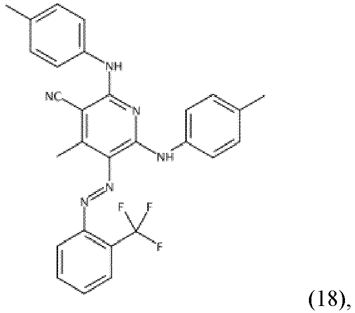
enthält, wobei die Summe der Farbmittel ii) bis iv) > 0,05 Gew.-% beträgt, und
wobei die Zusammensetzung
0 bis weniger als 30,0 Gew.-% weitere thermoplastische Polymere, ausgenommen Polymethylmethacrylat, und
0 bis weniger als 0,02 Gew.-% Ruß enthält,
wobei die Zusammensetzung neben den Farbmitteln der Gruppen ii) bis iv) weniger als 0,1 Gew.-% weitere Farbmittel enthält und
weniger als 0,1 Gew.-% Titandioxid enthält
und wobei die Dicke des Bereiches der Substratschicht aus der thermoplastischen Zusammensetzung 1,0 bis 7,0 mm beträgt.

2. Fahrzeug nach Anspruch 1, wobei die thermoplastische Zusammensetzung der Substratschicht weniger als 0,0005 Gew.-% Ruß enthält.

3. Fahrzeug nach einem der vorhergehenden Ansprüche, wobei die Zusammensetzung keinen Ruß enthält.

4. Fahrzeug nach einem der Ansprüche 1 bis 3, wobei die Summe der Farbmittel ii) bis iv) in der thermoplastischen Zusammensetzung der Substratschicht mindestens 0,10 Gew.-% beträgt.

5. Fahrzeug nach einem der vorhergehenden Ansprüche, wobei die Zusammensetzung keine weiteren thermoplastischen Polymere enthält.

6. Fahrzeug nach einem der Ansprüche 1 bis 5, wobei die Zusammensetzung weniger als 0,1 Gew.-% Weißpigment enthält.

7. Fahrzeug nach einem der Ansprüche 1 bis 6, wobei die Zusammensetzung der Substratschicht neben den Komponenten i), ii), iii) und optional iv), Ruß, weiterem thermoplastischen Polymer und/oder von den Farbmitteln der Gruppen ii) bis iv) verschiedenen Farbmitteln keine weiteren Komponenten enthält außer
v) ggf. Thermostabilisatoren, Entformungsmitteln, UV-Absorbern, Flammschutzmitteln, Antistatika und/oder Fließverbesserern.

8. Fahrzeug, umfassend
a) einen LiDAR-Sensor, der Laserpulse mit einer Wellenlänge im Bereich von 800 bis 2500 nm aussendet, und
b) eine den LiDAR-Sensor teilweise oder ganz umgebende Abdeckung mit einer Substratschicht, wobei die Substratschicht einen Bereich aus einer thermoplastischen Zusammensetzung mit einer Lichttransmission im Bereich von 380 bis 780 nm von weniger als 0,1 %, bestimmt bei einer Schichtdicke von 4 mm nach DIN ISO 13468-2:2006 (D65, 10°), umfasst, und der Bereich der Substratschicht in seiner jeweiligen Dicke eine Durchlässigkeit für IR-Strahlung im Bereich von 800 nm bis 2500 nm von mindestens 50 %, bestimmt nach DIN ISO 13468-2:2006, aufweist und wobei die Zusammensetzung aus
i) mindestens 85 Gew.-% thermoplastischem Polymer, ausgewählt aus der Gruppe, bestehend aus aromatischem Polycarbonat und/oder Polyestercarbonat,
ii) mindestens einem grünen und/oder einem blauen Farbmittel,
ausgewählt aus der Gruppe, bestehend aus den Farbmitteln der Formeln (1), (2a-c), (3), (4a), (4b), (5) und/oder (6) 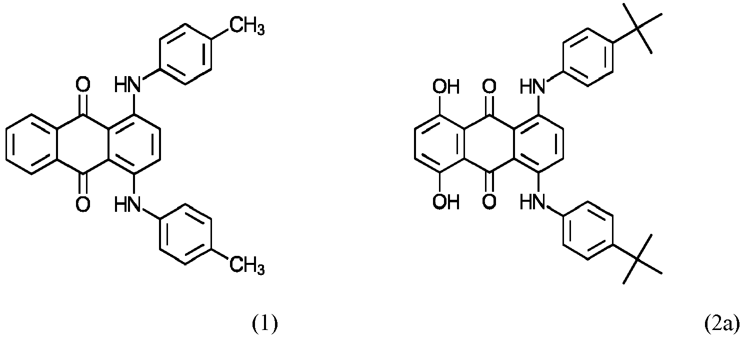 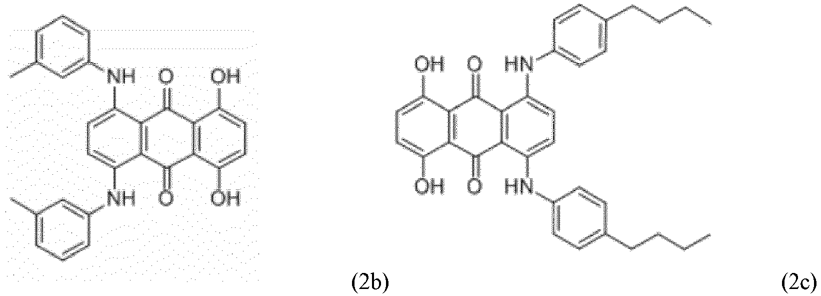 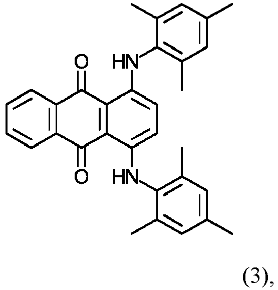 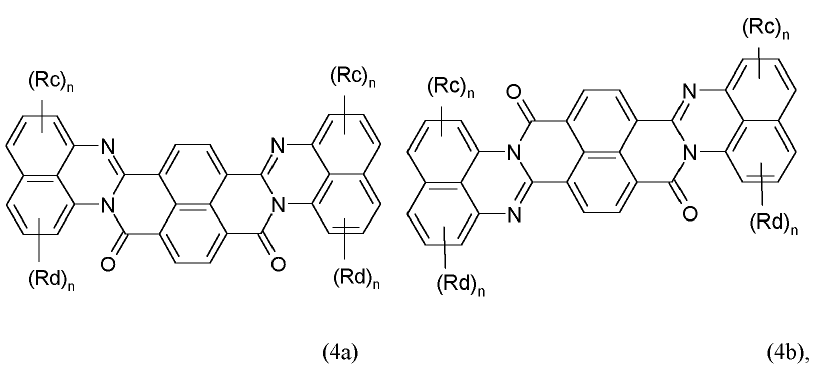 wobei
- Rc und Rd unabhängig voneinander für einen linearen oder verzweigten Alkylrest oder Halogen stehen,
- n unabhängig vom jeweiligen R für eine natürliche Zahl zwischen 0 und 3 steht, wobei der Rest für n=0 Wasserstoff ist, 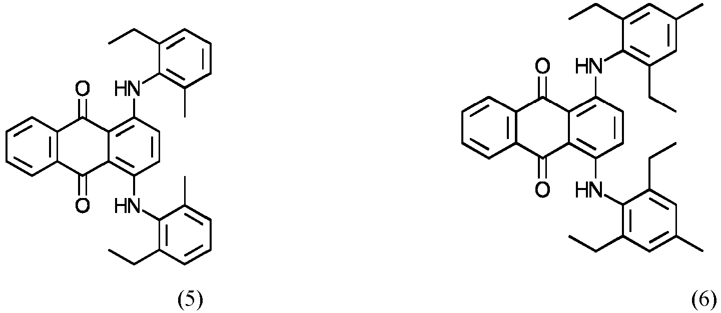 und
iii) mindestens einem roten und/oder violetten Farbmittel, ausgewählt aus der Gruppe, bestehend aus den Farbmitteln der Formeln (7), (8), (9), (10), (11), (12a), (12b) und/oder (13) 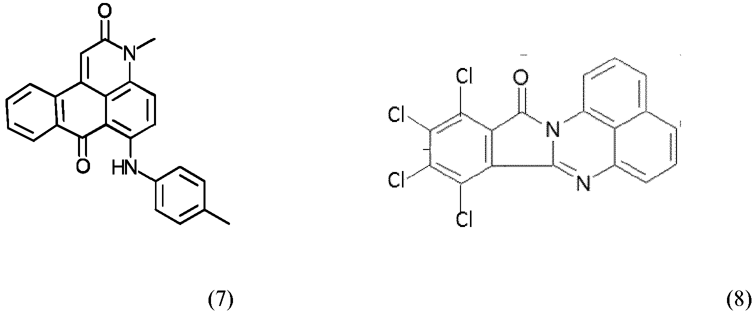 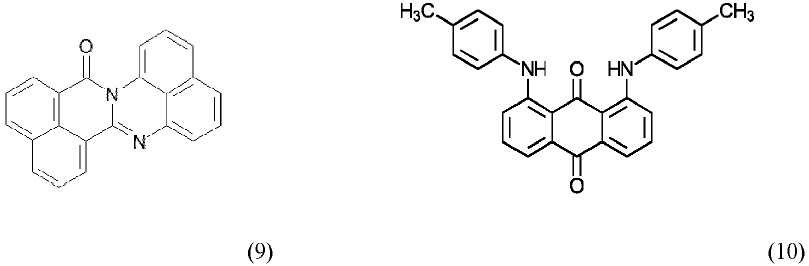 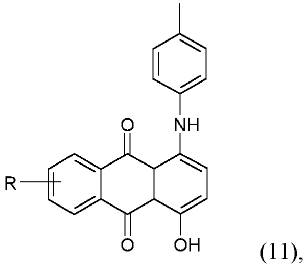 wobei R ausgewählt ist aus der Gruppe, die aus H und p-Methylphenylamin-Rest besteht, 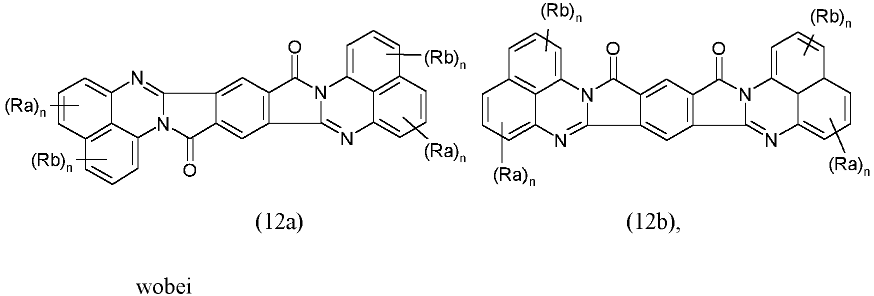
- Ra und Rb unabhängig voneinander für einen linearen oder verzweigten Alkylrest oder Halogen stehen,
- n unabhängig vom jeweiligen R für eine natürliche Zahl zwischen 0 und 3 steht, wobei der Rest für n=0 Wasserstoff ist, 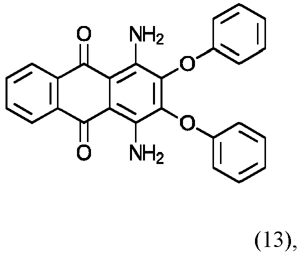
iv) optional weiteren Farbmitteln, ausgewählt aus der Gruppe, bestehend aus den Farbmitteln der Formeln (14), (15), (16), (17) und/oder (18) 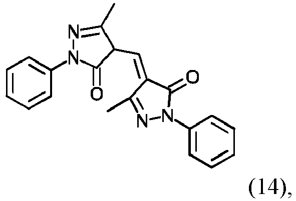 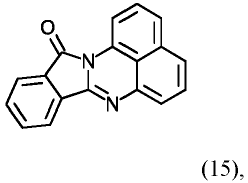 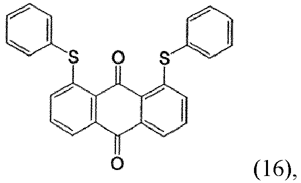 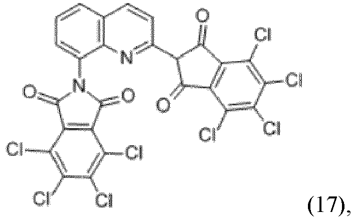 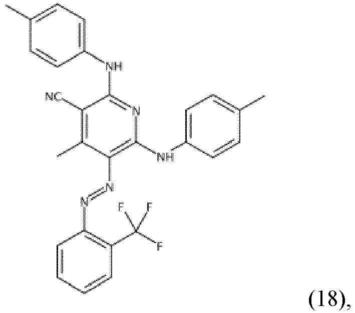
v) optional Thermostabilisatoren, Entformungsmitteln, UV-Absorbern, Antistatika und/oder Fließverbesserern,
vi) 0 bis weniger als 30,0 Gew.-% weiteren thermoplastischen Polymeren, ausgenommen Polymethylmethacrylat,
vii) 0 bis weniger als 0,02 Gew.-% Ruß,
weniger als 0,1 Gew.-% weiteren Farbmitteln und
weniger als 0,1 Gew.-% Titandioxid
besteht,
wobei die Summe der Farbmittel ii) bis iv) > 0,10 Gew.-% beträgt,
und wobei die Dicke des Bereichs der Substratschicht aus der thermoplastischen Zusammensetzung 1,0 bis 6,0 mm beträgt.

9. Fahrzeug nach einem der Ansprüche 1 bis 4 oder 6 bis 8, wobei die Zusammensetzung 0 bis weniger als 5,0 Gew.-% weitere thermoplastische Polymere enthält..

10. Fahrzeug nach einem der vorhergehenden Ansprüche, wobei die Dicke des Bereichs der Substratschicht aus der thermoplastischen Zusammensetzung 2 mm bis 4 mm beträgt.

11. Fahrzeug nach einem der vorhergehenden Ansprüche, wobei die Abdeckung neben der Substratschicht und einer ggf. auf einer oder mehreren Seiten vorhandenen Kratzfestbeschichtung keine weiteren Schichten aufweist.

12. Fahrzeug nach einem der vorhergehenden Ansprüche, wobei die Abdeckung ein Frontpanel, ein Heckpanel, ein Stoßfänger, ein Kühlergrill, ein Fahrzeugdach, ein Fahrzeugdachmodul oder ein Fahrzeugseitenteil ist.

13. Verwendung eines Formteils mit einer Substratschicht umfassend einen Bereich aus einer thermoplastischen Zusammensetzung auf Basis von aromatischem Polycarbonat und/oder Polyestercarbonat mit einer Dicke dieses Bereichs der Substratschicht von 1,0 bis 7,0 mm,
wobei die Zusammensetzung eine Lichttransmission im Bereich von 380 bis 780 nm von weniger als 25 %, bestimmt bei einer Schichtdicke von 4 mm nach DIN ISO 13468-2:2006 (D65, 10°), aufweist, und der Bereich der Substratschicht aus der thermoplastischen Zusammensetzung in seiner jeweiligen Dicke eine Durchlässigkeit für IR-Strahlung im Bereich von 800 nm bis 2500 nm von mindestens 50 %, bestimmt nach DIN ISO 13468-2:2006, aufweist,
und
wobei die Zusammensetzung
i) mindestens 70 Gew.-% eines Thermoplasten aus der Gruppe, bestehend aus aromatischem Polycarbonat und/oder Polyestercarbonat,
ii) mindestens ein grünes und/oder ein blaues Farbmittel, ausgewählt aus der Gruppe, bestehend aus den Farbmitteln der Formeln (1), (2a-c), (3), (4a), (4b), (5) und/oder (6) 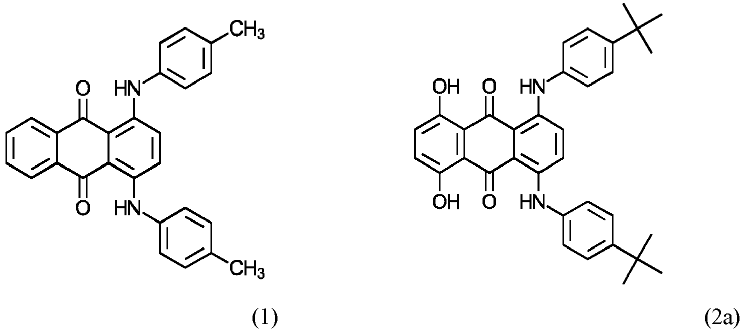 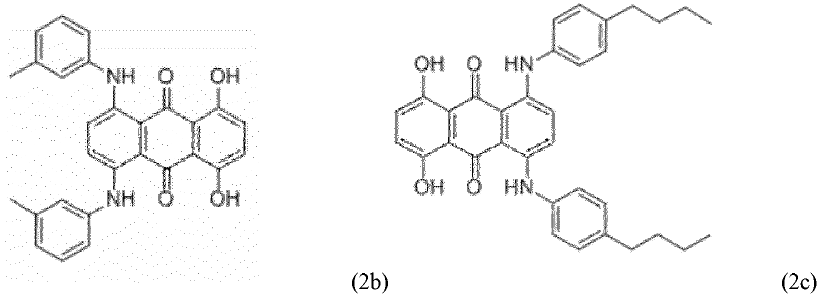 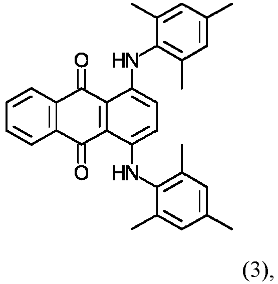 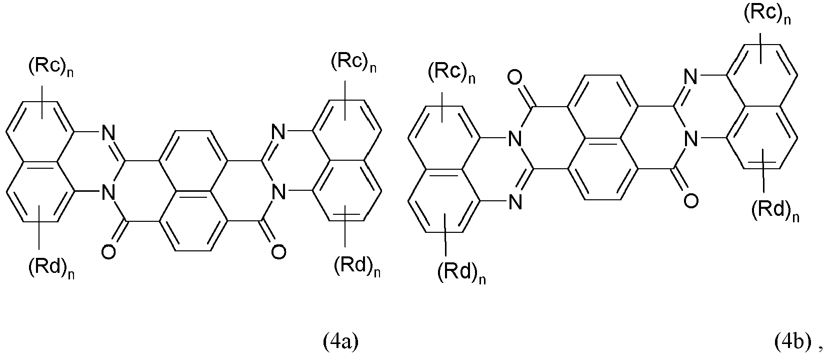 wobei
- Rc und Rd unabhängig voneinander für einen linearen oder verzweigten Alkylrest oder Halogen stehen,
- n unabhängig vom jeweiligen R für eine natürliche Zahl zwischen 0 und 3 steht, wobei der Rest für n=0 Wasserstoff ist, 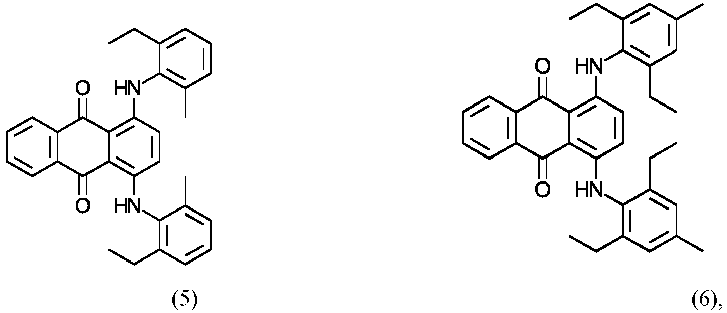 und
iii) mindestens ein rotes und/oder violettes Farbmittel, ausgewählt aus der Gruppe, bestehend aus den Farbmitteln der Formeln (7), (8), (9), (10), (11), (12a), (12b) und/oder (13) 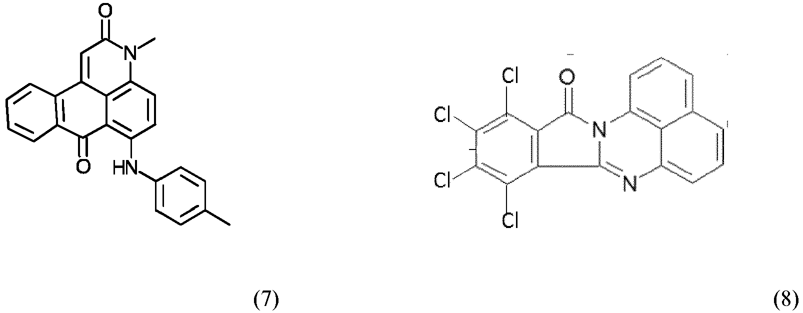 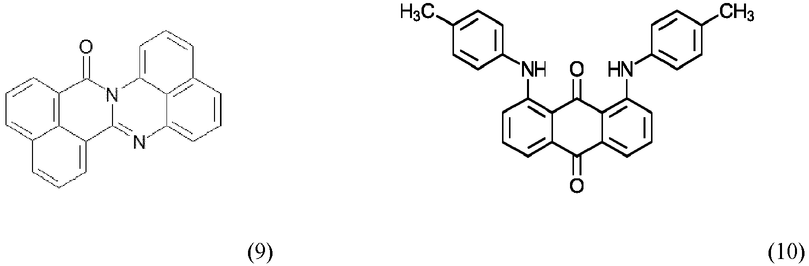 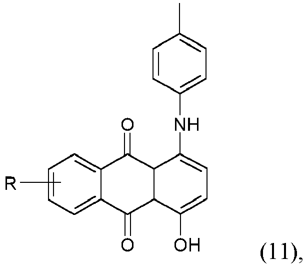 wobei R ausgewählt ist aus der Gruppe, die aus H und p-Methylphenylamin-Rest besteht 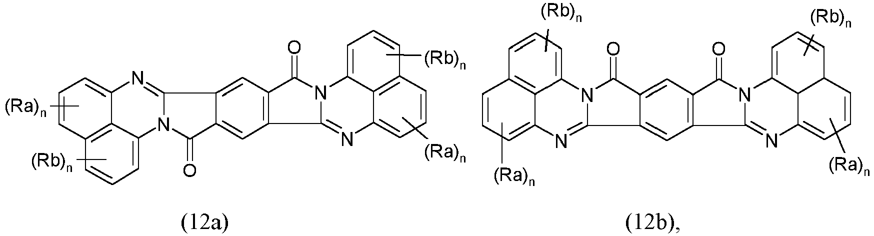 wobei
- Ra und Rb unabhängig voneinander für einen linearen oder verzweigten Alkylrest oder Halogen stehen,
- n unabhängig vom jeweiligen R für eine natürliche Zahl zwischen 0 und 3 steht, wobei der Rest für n=0 Wasserstoff ist, 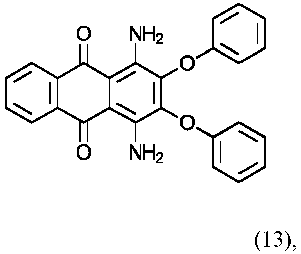
iv) optional ein oder mehrere weitere Farbmittel, ausgewählt aus der Gruppe, bestehend aus den gelben und orangen Farbmitteln der Formeln (14), (15), (16), (17) und/oder (18) 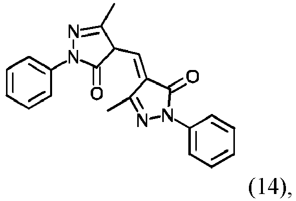 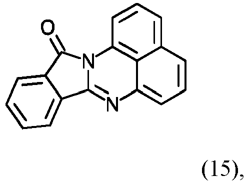 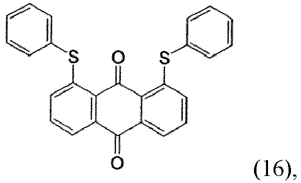 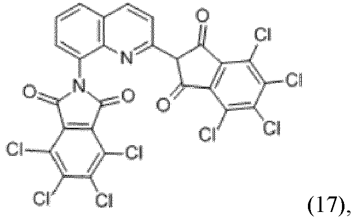 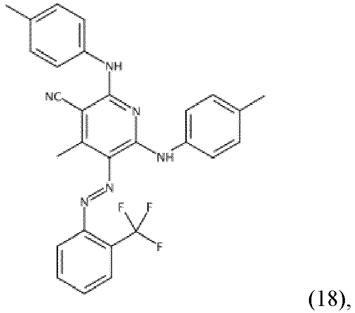 enthält,
wobei die Summe der Farbmittel ii) bis iv) > 0,05 Gew.-% beträgt und
wobei die Zusammensetzung 0 bis weniger als 30,0 Gew.-% weitere thermoplastische Polymere, ausgenommen Polymethylmethacrylat, 0 bis weniger als 0,02 Gew.-% Ruß, neben den Farbmitteln der Gruppen ii) bis iv) weniger als 0,1 Gew.-% weitere Farbmittel und weniger als 0,1 Gew.-% Weißpigment enthält,
zur teilweisen oder vollständigen Abdeckung eines LiDAR-Sensors, der Laserpulse mit einer Wellenlänge im Bereich von 800 bis 2500 nm aussendet.

## Claims

1. Vehicle comprising
a) a LiDAR sensor which emits laser pulses having a wavelength in the range from 800 to 2500 nm and
b) a cover partially or completely surrounding the LiDAR sensor having a substrate layer comprising a region made of a thermoplastic composition based on aromatic polycarbonate and/or polyester carbonate,
wherein the composition has a light transmission in the range from 380 to 780 nm of less than 25.0% determined at a layer thickness of 4 mm according to DIN ISO 13468-2: 2006 (D65, 10°) and
the region of the substrate layer made of the thermoplastic composition in its respective thickness has a permeability to IR radiation in the range from 800 nm to 2500 nm of at least 40% determined according to DIN ISO 13468-2:2006 and
wherein the thermoplastic composition of the substrate layer contains
i) at least 70% by weight of thermoplastic polymer from the group consisting of aromatic polycarbonate and/or polyester carbonate,
ii)at least one green and/or one blue colorant selected from the group consisting of the colorants of formulae (1), (2a-c), (3), (4a), (4b), (5) and/or (6) 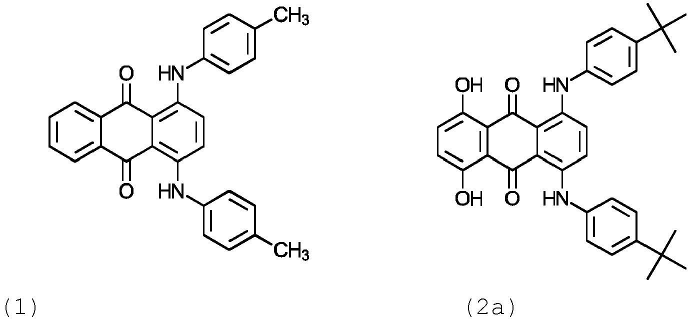 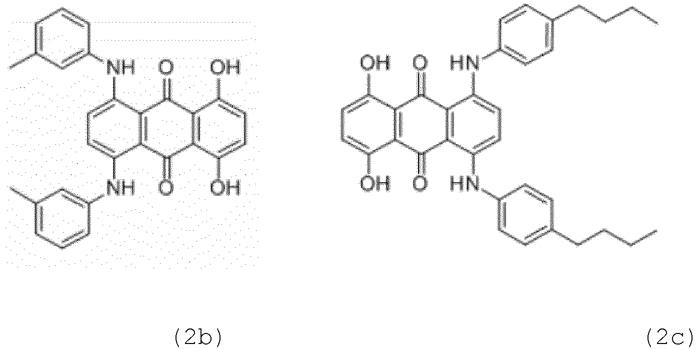 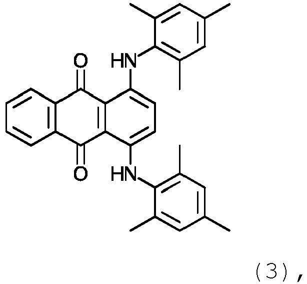 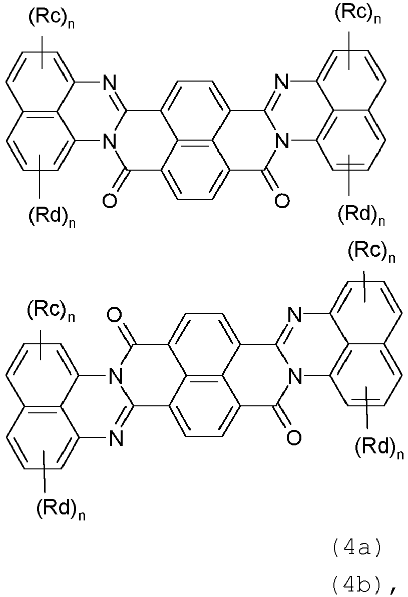 wherein
- Rc and Rd independently of one another represent a linear or branched alkyl radical or halogen,
- n independently of the respective R represents an integer between 0 and 3, wherein the radical for n=0 is hydrogen, 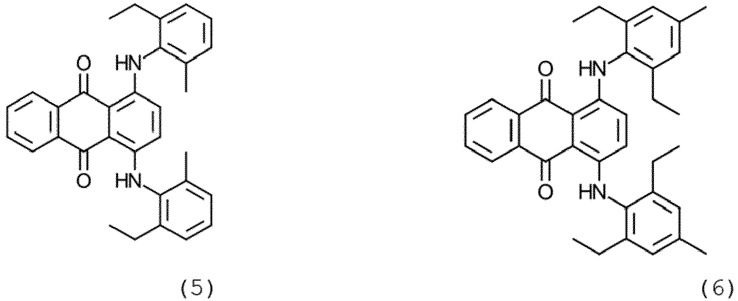
iii) at least one red and/or violet colorant selected from the group consisting of the colorants of formulae (7), (8), (9), (10), (11), (12a), (12b) and/or (13) 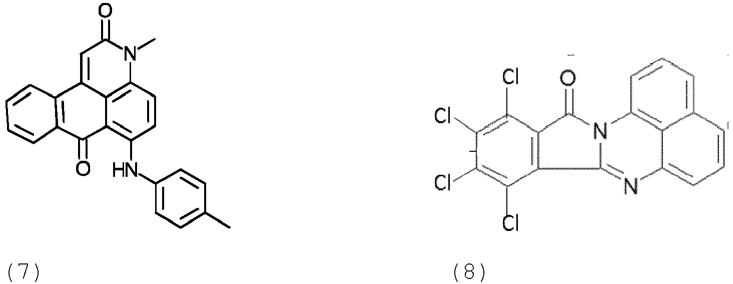 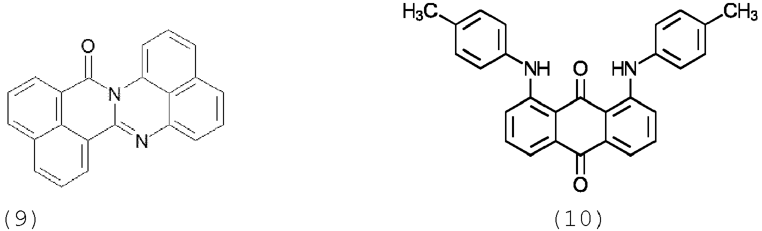 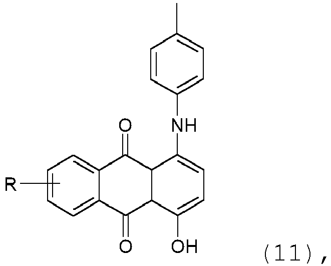 wherein R is selected from the group consisting of H and p-methylphenylamine radical, 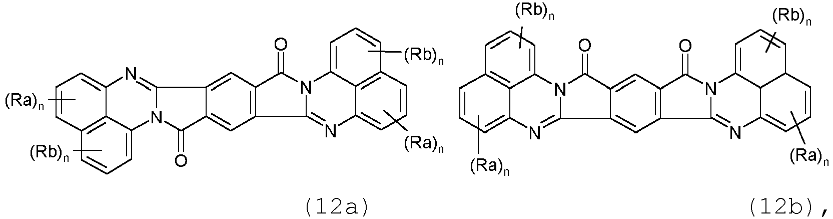 wherein
- Ra and Rb independently of one another represent a linear or branched alkyl radical or halogen,
- n independently of the respective R represents an integer between 0 and 3, wherein the radical for n=0 is hydrogen, 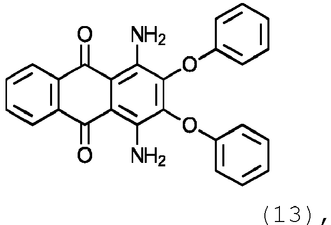
iv) optionally one or more further colorants selected from the group consisting of the yellow and orange colorants of formulae (14), (15), (16), (17) and/or (18) 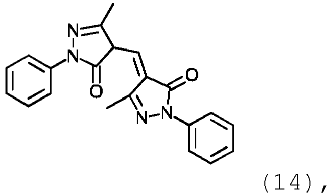 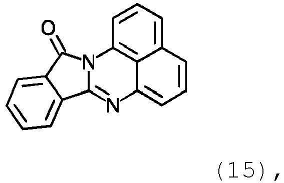 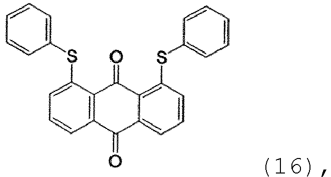 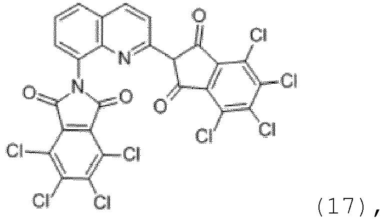 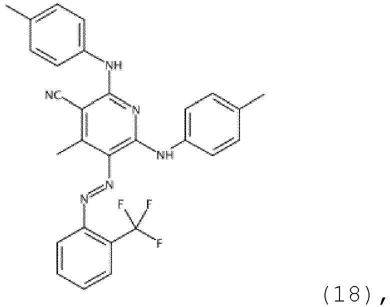
wherein the sum of the colorants ii) to iv) is > 0.05% by weight and
wherein the composition contains
0% to less than 30.0% by weight of further thermoplastic polymers excluding polymethyl methacrylate and
0% to less than 0.02% by weight of carbon black,
wherein the composition contains in addition to the colorants of groups ii) to iv) less than 0.1% by weight of further colorants and
less than 0.1% by weight of titanium dioxide and wherein the thickness of the region of the substrate layer made of the thermoplastic composition is 1.0 to 7.0 mm.

2. Vehicle according to Claim 1, wherein the thermoplastic composition of the substrate layer contains less than 0.0005% by weight of carbon black.

3. Vehicle according to any of the preceding claims, wherein the composition contains no carbon black.

4. Vehicle according to any of Claims 1 to 3, wherein the sum of the colorants ii) to iv) in the thermoplastic composition of the substrate layer is at least 0.10% by weight.

5. Vehicle according to any of the preceding claims, wherein the composition contains no further thermoplastic polymers.

6. Vehicle according to any of Claims 1 to 5, wherein the composition contains less than 0.1% by weight of white pigment.

7. Vehicle according to any of Claims 1 to 6, wherein, in addition to the components i), ii), iii) and optionally iv), carbon black, further thermoplastic polymer and/or colorants distinct from the colorants of groups ii) to iv), the composition of the substrate layer contains no further components with the exception of
v) optionally heat stabilizers, mold release agents, UV absorbers, flame retardants, antistats and/or flow enhancers.

8. Vehicle comprising
a) a LiDAR sensor which emits laser pulses having a wavelength in the range from 800 to 2500 nm and
b) a cover partially or completely surrounding the LiDAR sensor having a substrate layer, wherein the substrate layer comprises a region made of a thermoplastic composition having a light transmission in the range from 380 to 780 nm of less than 0.1% determined at a layer thickness of 4 mm according to DIN ISO 13468-2:2006 (D65, 10°), and the region of the substrate layer in its respective thickness has a permeability to IR radiation in the range from 800 nm to 2500 nm of at least 50% determined according to DIN ISO 13468-2:2006 and wherein the composition consists of
i) at least 85% by weight of thermoplastic polymer selected from the group consisting of aromatic polycarbonate and/or polyester carbonate,
ii) at least one green and/or one blue colorant selected from the group consisting of the colorants of formulae (1), (2a-c), (3), (4a), (4b), (5) and/or (6) 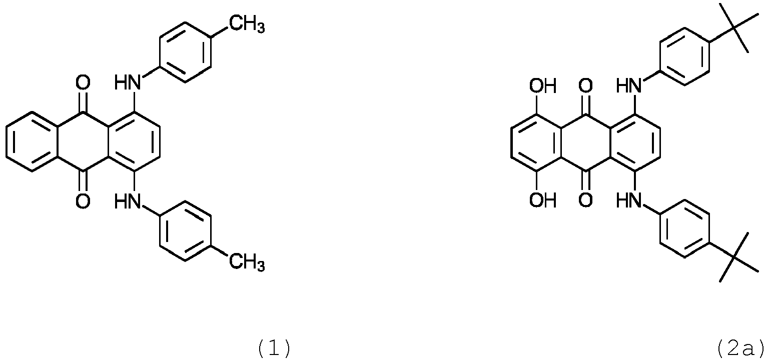 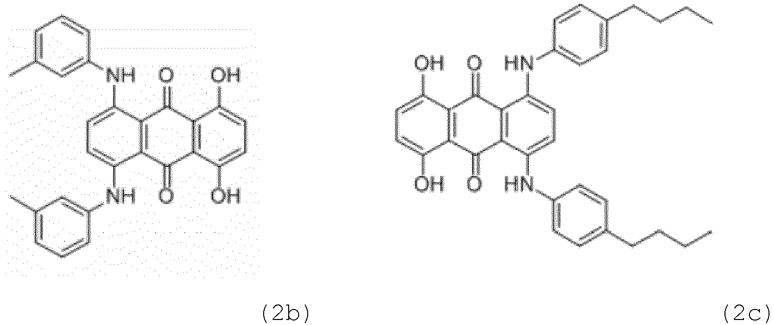 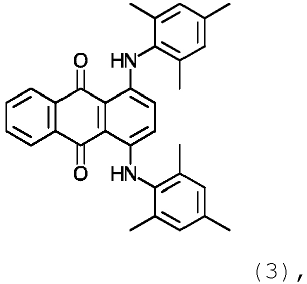 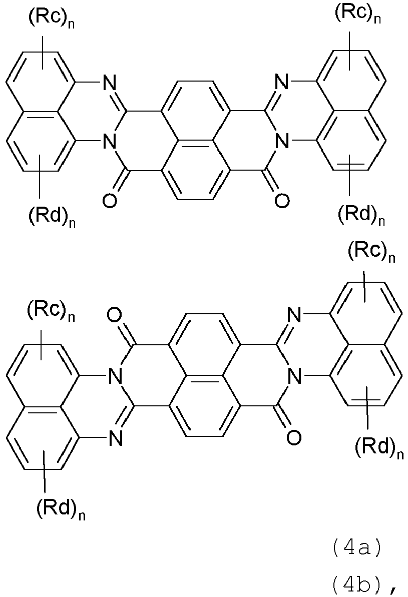 wherein
- Rc and Rd independently of one another represent a linear or branched alkyl radical or halogen,
- n independently of the respective R represents an integer between 0 and 3, wherein the radical for n=0 is hydrogen, 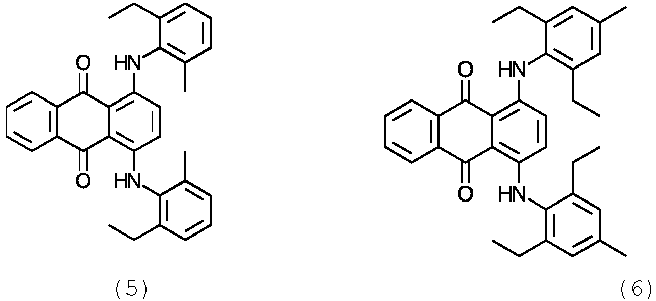
and
iii) at least one red and/or violet colorant selected from the group consisting of the colorants of formulae (7), (8), (9), (10), (11), (12a), (12b) and/or (13) 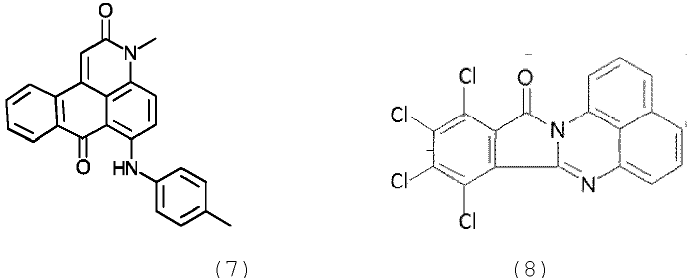 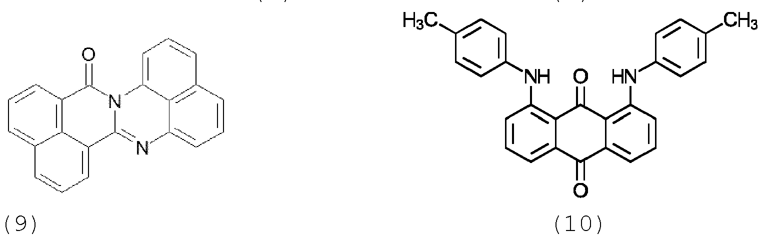 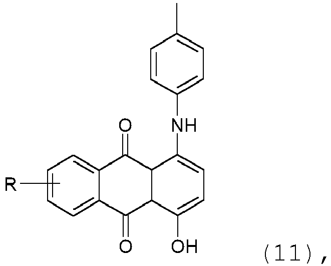 wherein R is selected from the group consisting of H and p-methylphenylamine radical, 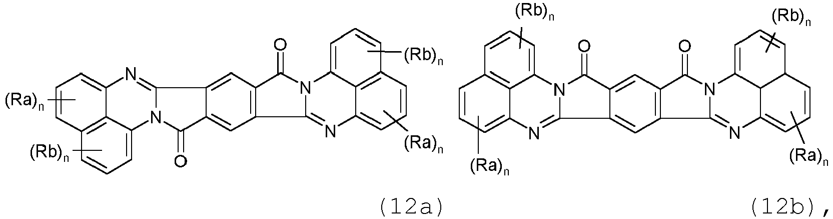 wherein
- Ra and Rb independently of one another represent a linear or branched alkyl radical or halogen,
- n independently of the respective R represents an integer between 0 and 3, wherein the radical for n=0 is hydrogen, 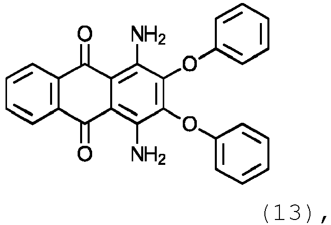
iv) optionally further colorants selected from the group consisting of the colorants of formulae (14), (15), (16), (17) and/or (18) 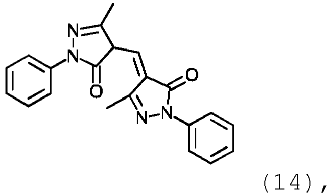 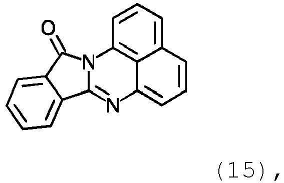 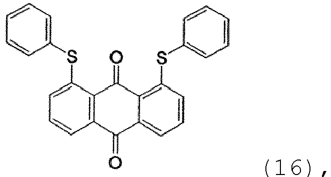 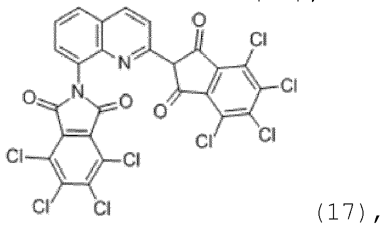 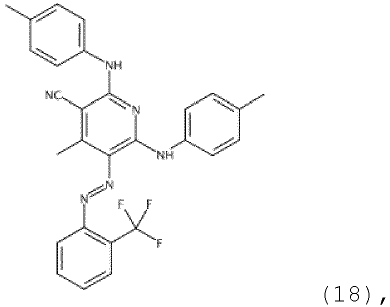
v) optionally heat stabilizers, mold release agents, UV absorbers, antistats and/or flow enhancers,
vi) 0% to less than 30.0% by weight of further thermoplastic polymers excluding polymethyl methacrylate,
vii) 0% to less than 0.02% by weight of carbon black,
less than 0.1% by weight of further colorants and less than 0.1% by weight of titanium dioxide,
wherein the sum of the colorants ii) to iv) is > 0.10% by weight,
and wherein the thickness of the region of the substrate layer made of the thermoplastic composition is 1.0 to 6.0 mm.

9. Vehicle according to any of Claims 1 to 4 or 6 to 8, wherein the composition contains 0% to less than 5.0% by weight of further thermoplastic polymers.

10. Vehicle according to any of the preceding claims, wherein the thickness of the region of the substrate layer made of the thermoplastic composition is 2 mm to 4 mm.

11. Vehicle according to any of the preceding claims, wherein in addition to the substrate layer and a scratch resistant coating optionally present on one or more sides the cover comprises no further layers.

12. Vehicle according to any of the preceding claims, wherein the cover is a front panel, a rear panel, a bumper, a radiator grill, a vehicle roof, a vehicle roof module or a vehicle side element.

13. Use of a molding having a substrate layer comprising a region made of a thermoplastic composition based on aromatic polycarbonate and/or polyester carbonate having a thickness of this region of the substrate layer of 1.0 to 7.0 mm,
wherein the composition has a light transmission in the range from 380 to 780 nm of less than 25% determined at a layer thickness of 4 mm according to DIN ISO 13468-2:2006 (D65, 10°) and the region of the substrate layer made of the thermoplastic composition in its respective thickness has a permeability to IR radiation in the range from 800 nm to 2500 nm of at least 50% determined according to DIN ISO 13468-2:2006 and
wherein the composition contains
i) at least 70% by weight of a thermoplastic from the group consisting of aromatic polycarbonate and/or polyester carbonate,
ii) at least one green and/or one blue colorant selected from the group consisting of the colorants of formulae (1), (2a-c), (3), (4a), (4b), (5) and/or (6) 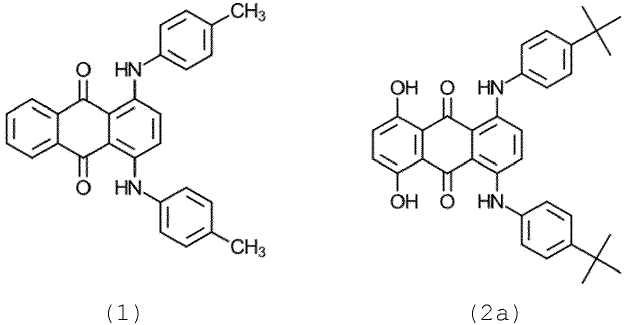 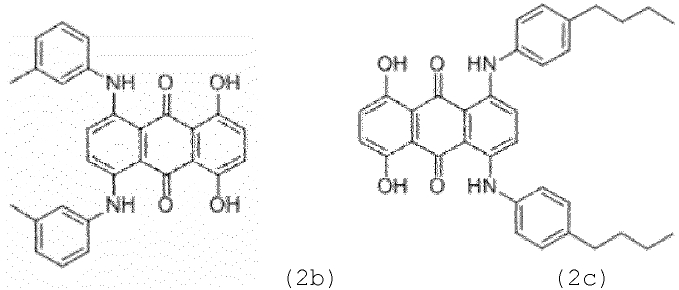 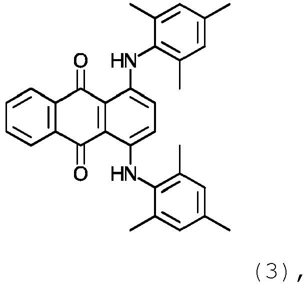 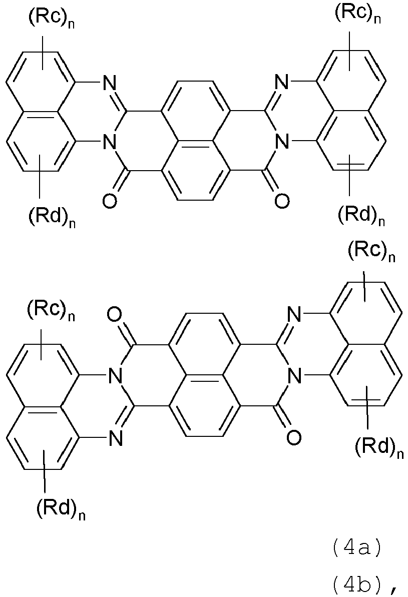 wherein
- Rc and Rd independently of one another represent a linear or branched alkyl radical or halogen,
- n independently of the respective R represents an integer between 0 and 3, wherein the radical for n=0 is hydrogen, 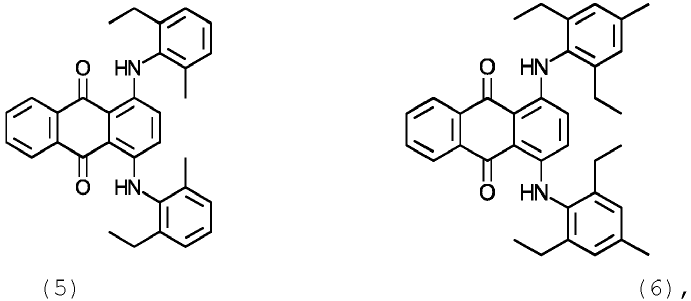
and
iii) at least one red and/or violet colorant selected from the group consisting of the colorants of formulae (7), (8), (9), (10), (11), (12a), (12b) and/or (13) 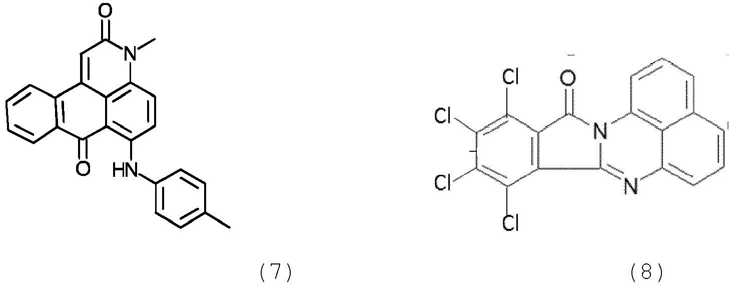 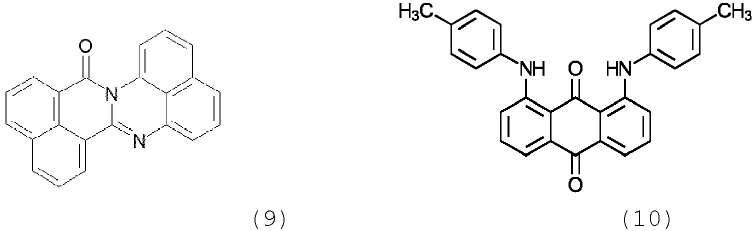 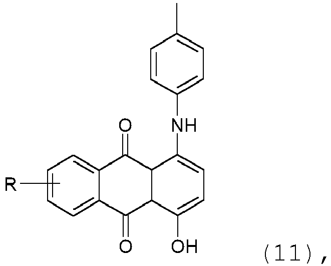 wherein R is selected from the group consisting of H and p-methylphenylamine radical 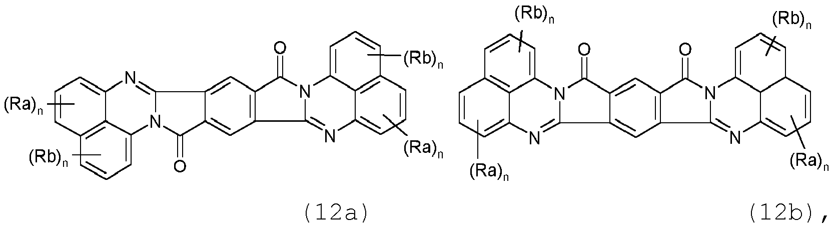 wherein
- Ra and Rb independently of one another represent a linear or branched alkyl radical or halogen,
- n independently of the respective R represents an integer between 0 and 3, wherein the radical for n=0 is hydrogen, 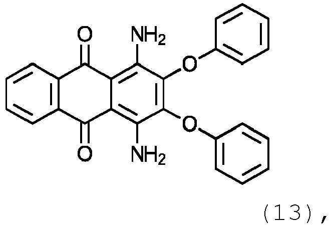
iv) optionally one or more further colorants selected from the group consisting of the yellow and orange colorants of formulae (14), (15), (16), (17) and/or (18) 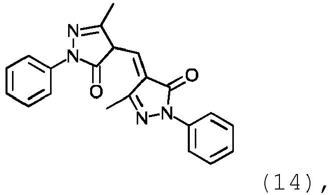 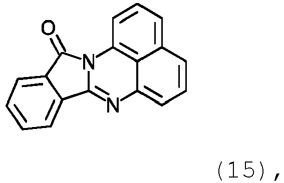 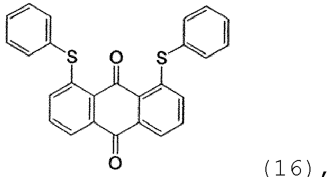 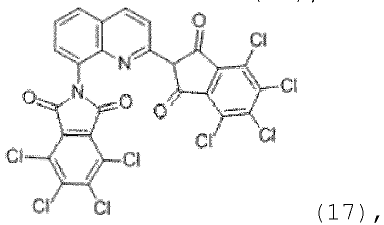 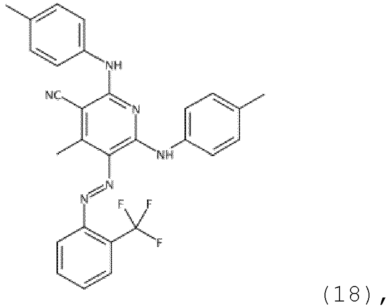
wherein the sum of the colorants ii) to iv) is > 0.05% by weight and
wherein the composition contains 0% to less than 30.0% by weight of further thermoplastic polymers, excluding polymethyl methacrylate, 0% to less than 0.02% by weight of carbon black, in addition to the colorants of groups ii) to iv) less than 0.1% by weight of further colorants and less than 0.1% by weight of white pigment,
for partially or completely covering a LiDAR sensor which emits laser pulses having a wavelength in the range from 800 to 2500 nm.

## Revendications

1. Véhicule, comprenant
a) un capteur LiDAR, qui émet des impulsions laser d'une longueur d'onde dans la plage de 800 à 2500 nm, et
b) un recouvrement, entourant partiellement ou totalement le capteur LiDAR, présentant une couche de substrat comprenant une zone en une composition thermoplastique à base d'un polycarbonate aromatique et/ou d'un polyestercarbonate aromatique,
la composition présentant une transmission de lumière dans la plage de 380 à 780 nm de moins de 25,0%, déterminée à une épaisseur de couche de 4 mm selon la norme DIN ISO 13468-2:2006 (D65, 10°), et
la zone de la couche de substrat en la composition thermoplastique présentant, dans son épaisseur respective, une transmission pour le rayonnement IR dans la plage 800 nm à 2500 nm d'au moins 40%, déterminée selon la norme DIN ISO 13468-2:2006, et
la composition thermoplastique de la couche de substrat contenant
i) au moins 70% en poids d'un polymère thermoplastique du groupe constitué par le polycarbonate aromatique et/ou le polyestercarbonate aromatique,
ii) au moins un colorant vert et/ou bleu, choisi dans le groupe constitué par les colorants des formules (1), (2a-c), (3), (4a), (4b), (5) et/ou (6) 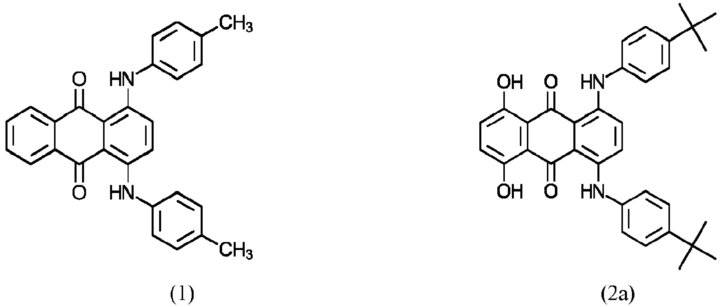 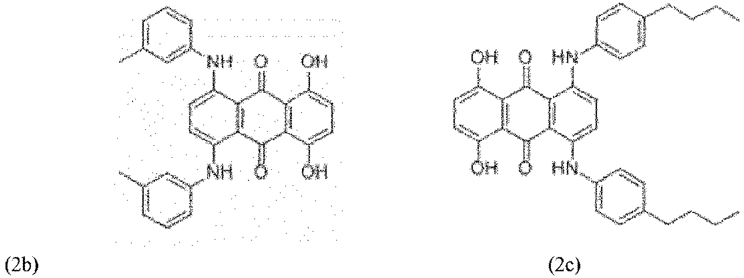 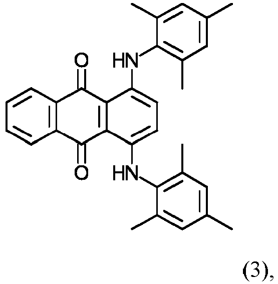 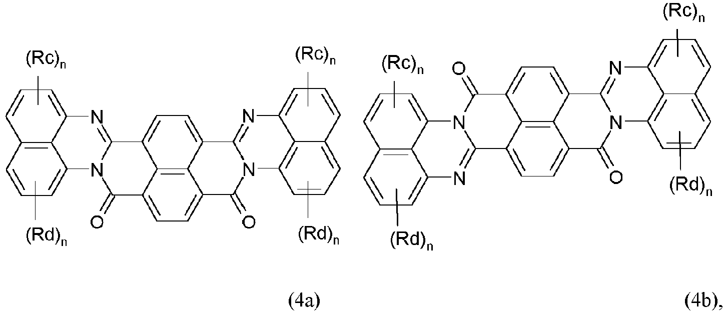 dans lesquelles
Rc et Rd représentent, indépendamment l'un de l'autre, un radical alkyle linéaire ou ramifié ou halogène,
n représente, indépendamment du radical R respectif, un nombre naturel entre 0 et 3, le radical pour n = 0 étant hydrogène, 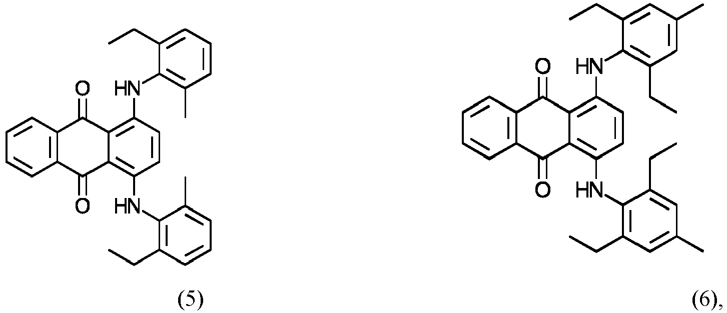
iii) au moins un colorant rouge et/ou violet, choisi dans le groupe constitué par les colorants des formules (7), (8), (9), (10), (11), (12a), (12b) et/ou (13) 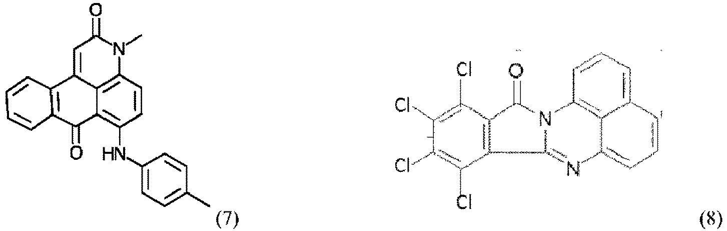 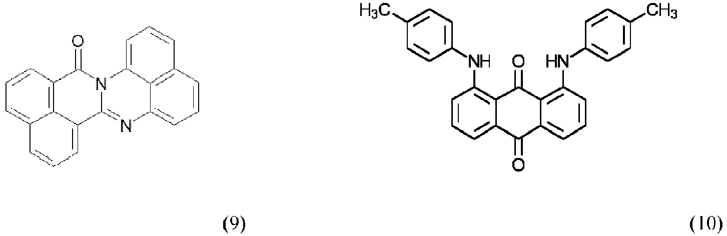 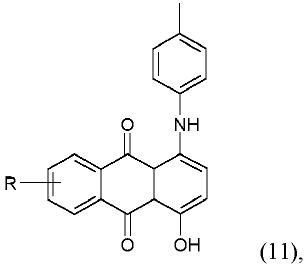 R étant choisi dans le groupe constitué par H et le radical p-méthylphénylamine, 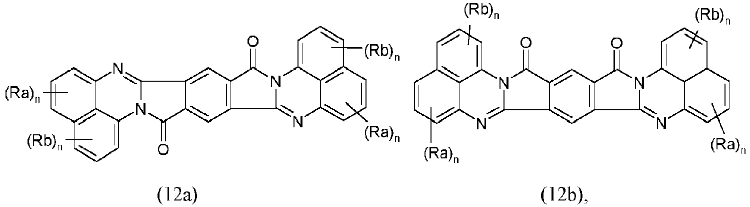 dans lesquelles
Ra et Rb représentent, indépendamment l'un de l'autre, un radical alkyle linéaire ou ramifié ou halogène,
n représente, indépendamment du radical R respectif, un nombre naturel entre 0 et 3, le radical pour n = 0 étant hydrogène, 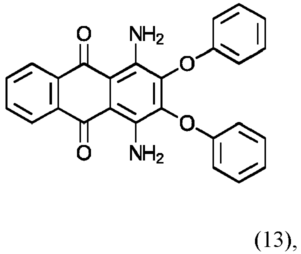
iv) éventuellement un ou plusieurs autres colorants, choisis dans le groupe constitué par les colorants jaunes et orange des formules (14), (15), (16), (17) et/ou (18) 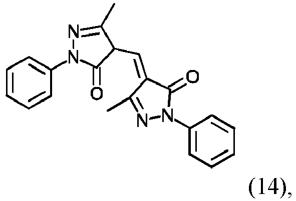 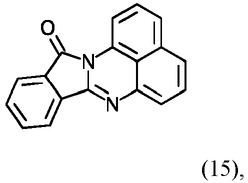 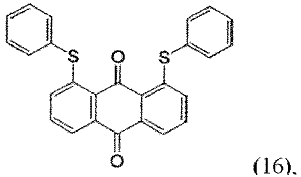 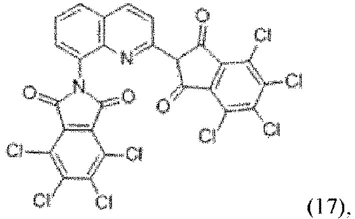 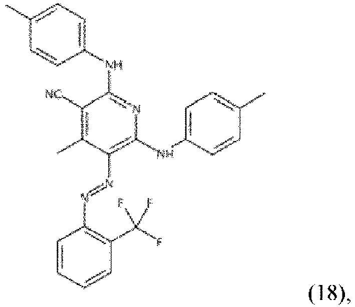 la somme des colorants ii) à iv) étant > 0,05% en poids, et la composition contenant
- 0 à moins de 30,0% en poids d'autres polymères thermoplastiques, à l'exception du poly(méthacrylate de méthyle) et
- 0 à moins de 0,02% en poids de suie,
la composition contenant, outre les colorants des groupes ii) à iv), moins de 0,1% en poids d'autres colorants et moins de 0,1% en poids de dioxyde de titane
et l'épaisseur de la zone de la couche de substrat en la composition thermoplastique étant de 1,0 à 7,0 mm.

2. Véhicule selon la revendication 1, la composition thermoplastique de la couche de substrat contenant moins de 0,0005% en poids de suie.

3. Véhicule selon l'une quelconque des revendications précédentes, la composition ne contenant pas de suie.

4. Véhicule selon l'une quelconque des revendications 1 à 3, la somme des colorants ii) à iv) dans la composition thermoplastique de la couche de substrat valant au moins 0,10% en poids.

5. Véhicule selon l'une quelconque des revendications précédentes, la composition ne contenant pas d'autres polymères thermoplastiques.

6. Véhicule selon l'une quelconque des revendications 1 à 5, la composition contenant moins de 0,1% en poids de pigment blanc.

7. Véhicule selon l'une quelconque des revendications 1 à 6, la composition de la couche de substrat ne contenant, outre les composants i), ii), iii) et éventuellement iv), de la suie, du polymère thermoplastique supplémentaire et/ou des colorants différents des colorants des groupes ii) à iv), pas d'autres composants, à l'exception de
v) le cas échéant des stabilisants thermiques, des agents de démoulage, des absorbants des UV, des agents ignifuges, des antistatiques et/ou des agents d'amélioration de l'écoulement.

8. Véhicule, comprenant
a) un capteur LiDAR, qui émet des impulsions laser d'une longueur d'onde dans la plage de 800 à 2500 nm, et
b) un recouvrement, entourant partiellement ou totalement le capteur LiDAR, présentant une couche de substrat, la couche de substrat comprenant une zone en une composition thermoplastique présentant une transmission de lumière dans la plage de 380 à 780 nm de moins de 0,1%, déterminée à une épaisseur de couche de 4 mm selon la norme DIN ISO 13468-2:2006 (D65, 10°), et la zone de la couche de substrat présentant, dans son épaisseur respective, une transmission pour le rayonnement IR dans la plage de 800 nm à 2500 nm d'au moins 50%, déterminée selon la norme DIN ISO 13468-2:2006, et la composition étant constituée par
i) au moins 85% en poids d'un polymère thermoplastique choisi dans le groupe constitué par le polycarbonate aromatique et/ou le polyestercarbonate aromatique,
ii) au moins un colorant vert et/ou bleu,
choisi dans le groupe constitué par les colorants des formules (1), (2a-c), (3), (4a), (4b), (5) et/ou (6) 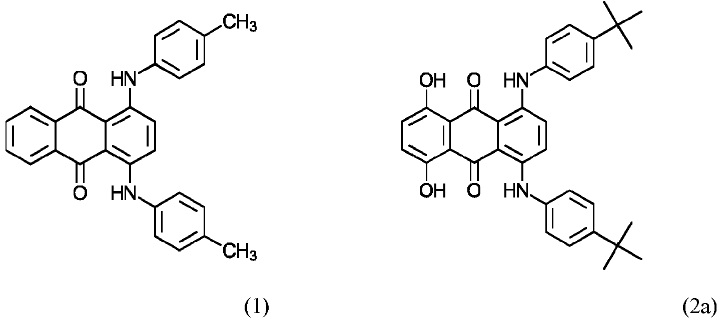 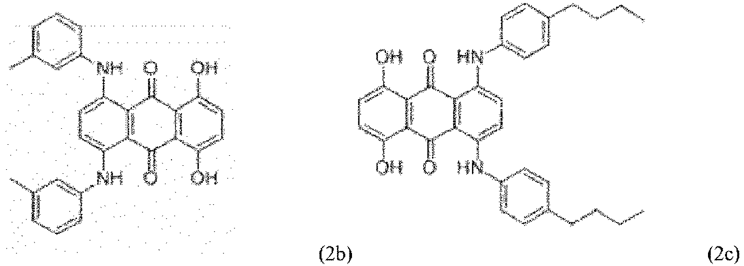 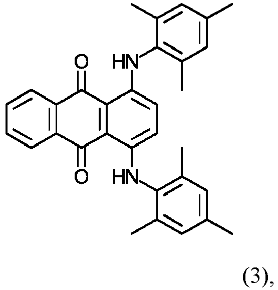 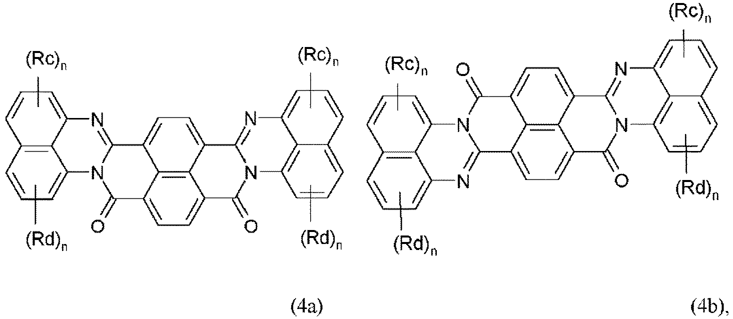 dans lesquelles
Rc et Rd représentent, indépendamment l'un de l'autre, un radical alkyle linéaire ou ramifié ou halogène,
n représente, indépendamment du radical R respectif, un nombre naturel entre 0 et 3, le radical pour n = 0 étant hydrogène, 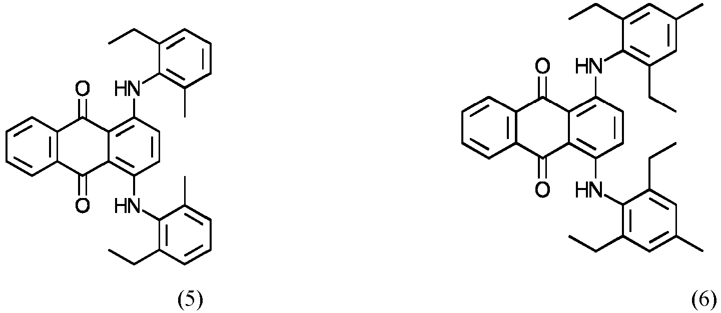 et
iii) au moins un colorant rouge et/ou violet, choisi dans le groupe constitué par les colorants des formules (7), (8), (9), (10), (11), (12a), (12b) et/ou (13) 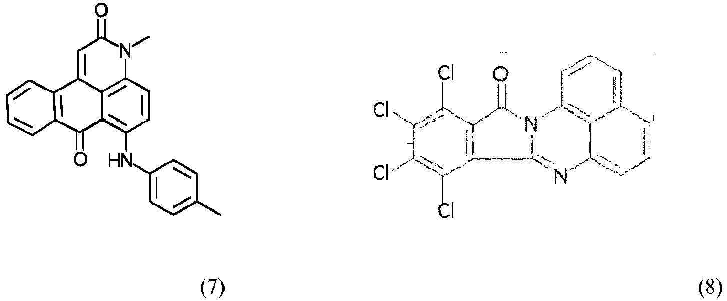 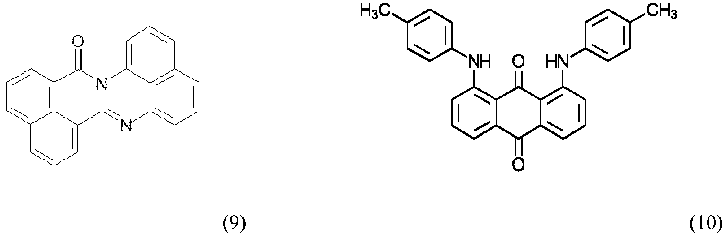 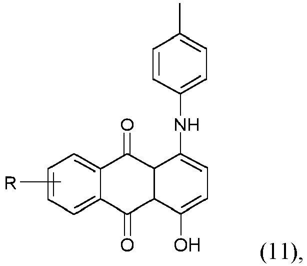 R étant choisi dans le groupe constitué par H et le radical p-méthylphénylamine, 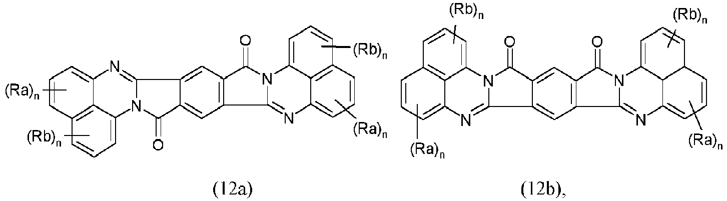 dans lesquelles
Ra et Rb représentent, indépendamment l'un de l'autre, un radical alkyle linéaire ou ramifié ou halogène,
n représente, indépendamment du radical R respectif, un nombre naturel entre 0 et 3, le radical pour n = 0 étant hydrogène, 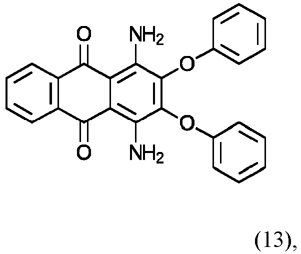
iv) éventuellement d'autres colorants, choisis dans le groupe constitué par les colorants des formules (14), (15), (16), (17) et/ou (18) 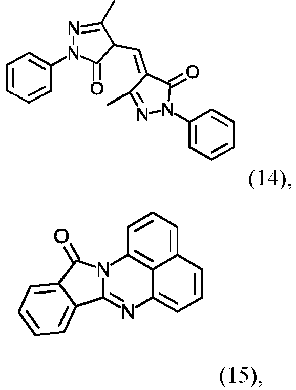 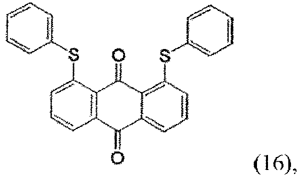 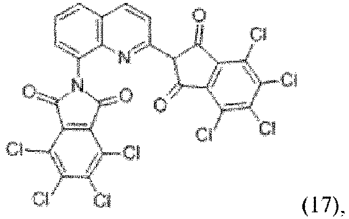 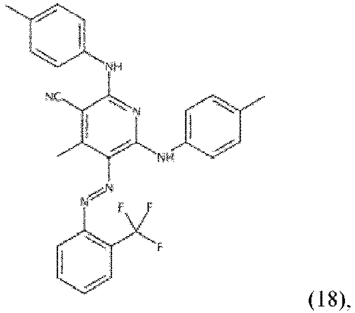
v) éventuellement des stabilisants thermiques, des agents de démoulage, des absorbants des UV, des antistatiques et/ou des agents d'amélioration de l'écoulement,
vi) 0 à moins de 30,0% en poids d'autres polymères thermoplastiques, à l'exception du poly(méthacrylate de méthyle),
vii) 0 à moins de 0,02% en poids de suie,
moins de 0,1% en poids d'autres colorants et moins de 0,1% en poids de dioxyde de titane,
la somme des colorants ii) à iv) étant > 0,10% en poids,
et l'épaisseur de la zone de la couche de substrat en la composition thermoplastique étant de 1,0 à 6,0 mm.

9. Véhicule selon l'une quelconque des revendications 1 à 4 ou 6 à 8, la composition contenant 0 à moins de 5,0% en poids d'autres polymères thermoplastiques.

10. Véhicule selon l'une quelconque des revendications précédentes, l'épaisseur de la zone de la couche de substrat en la composition thermoplastique étant de 2 mm à 4 mm.

11. Véhicule selon l'une quelconque des revendications précédentes, le recouvrement ne présentant, outre la couche de substrat et le cas échéant un revêtement résistant aux rayures présent sur une ou plusieurs faces, pas d'autres couches.

12. Véhicule selon l'une quelconque des revendications précédentes, le recouvrement étant un panneau avant, un panneau arrière, un pare-chocs, une grille de radiateur, un toit de véhicule, un module de toit de véhicule ou une partie de siège de véhicule.

13. Utilisation d'une pièce moulée présentant une couche de substrat comprenant une zone en une composition thermoplastique à base d'un polycarbonate aromatique et/ou d'un polyestercarbonate aromatique, présentant une épaisseur de cette zone de la couche de substrat de 1,0 à 7,0 mm,
la composition présentant une transmission de lumière dans la plage de 380 à 780 nm de moins de 25%, déterminée à une épaisseur de couche de 4 mm selon la norme DIN ISO 13468-2:2006 (D65, 10°), et la zone de la couche de substrat en la composition thermoplastique présentant, dans son épaisseur respective, une transmission pour le rayonnement IR dans la plage de 800 nm à 2500 nm d'au moins 50%, déterminée selon la norme DIN ISO 13468-2:2006 et
la composition comprenant
i) au moins 70% en poids d'un polymère thermoplastique du groupe constitué par le polycarbonate aromatique et/ou le polyestercarbonate aromatique,
ii) au moins un colorant vert et/ou bleu, choisi dans le groupe constitué par les colorants des formules (1), (2a-c), (3), (4a), (4b), (5) et/ou (6) 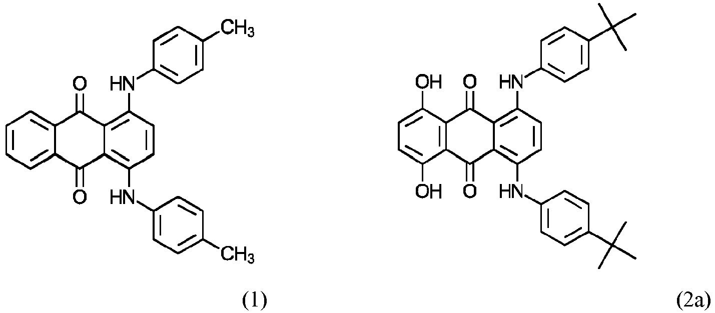 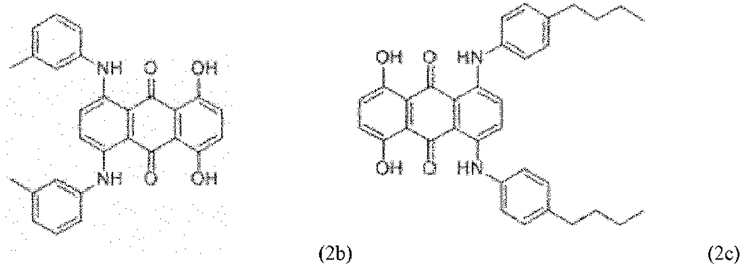 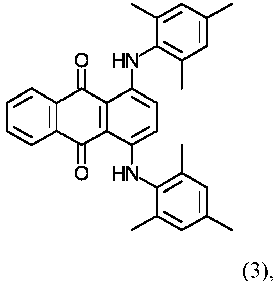 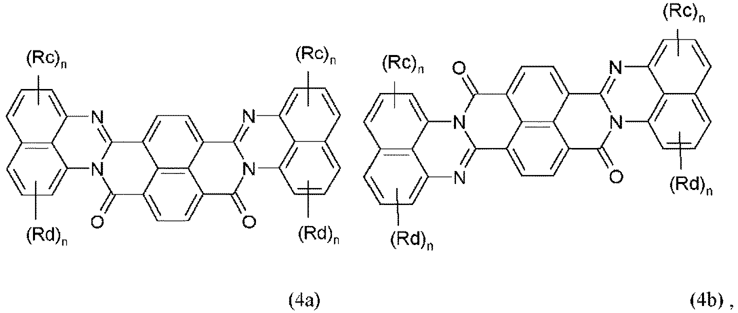 dans lesquelles
Rc et Rd représentent, indépendamment l'un de l'autre, un radical alkyle linéaire ou ramifié ou halogène,
n représente, indépendamment du radical R respectif, un nombre naturel entre 0 et 3, le radical pour n = 0 étant hydrogène, 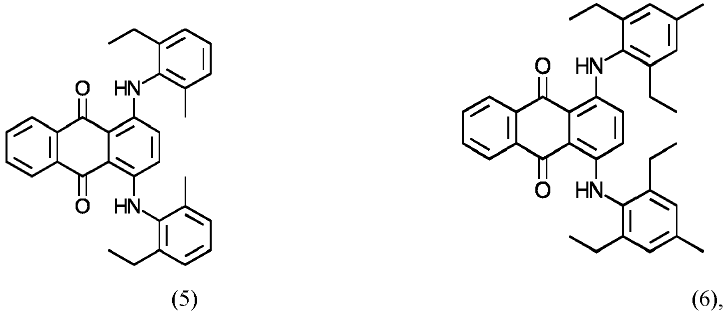 et
iii) au moins un colorant rouge et/ou violet, choisi dans le groupe constitué par les colorants des formules (7), (8), (9), (10), (11), (12a), (12b) et/ou (13) 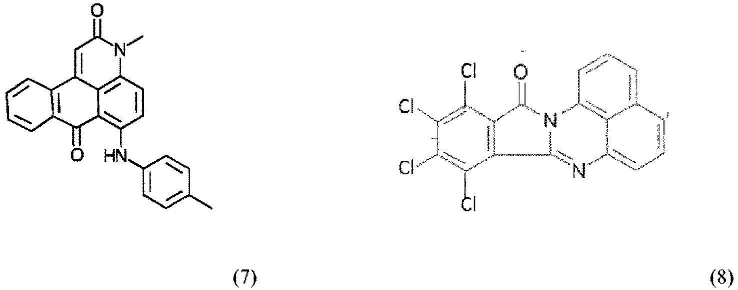 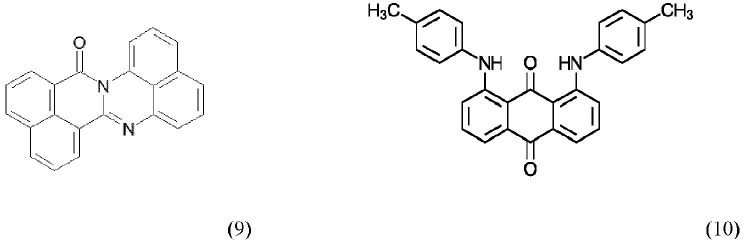 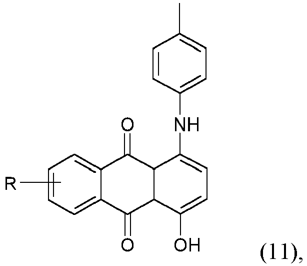 R étant choisi dans le groupe constitué par H et le radical p-méthylphénylamine, 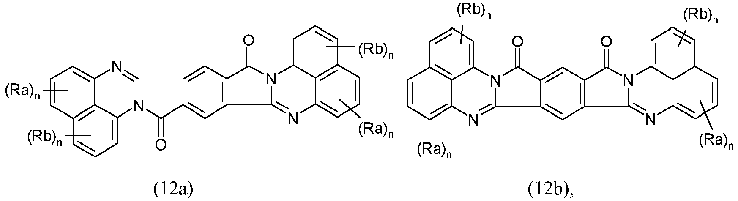 dans lesquelles
Ra et Rb représentent, indépendamment l'un de l'autre, un radical alkyle linéaire ou ramifié ou halogène,
n représente, indépendamment du radical R respectif, un nombre naturel entre 0 et 3, le radical pour n = 0 étant hydrogène, 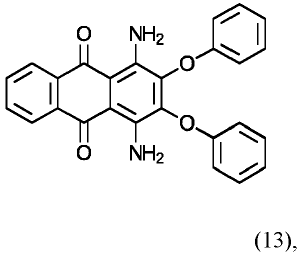
iv) éventuellement un ou plusieurs autres colorants, choisis dans le groupe constitué par les colorants jaunes et orange des formules (14), (15), (16), (17) et/ou (18) 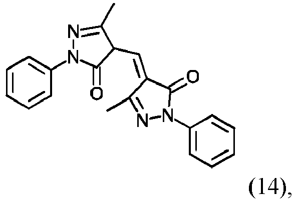 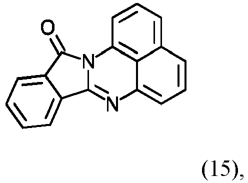 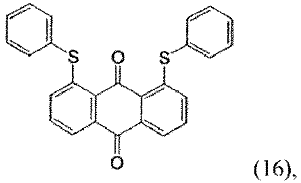 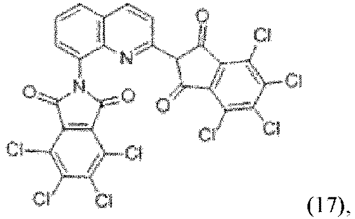 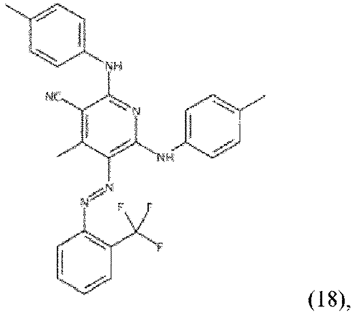
la somme des colorants ii) à iv) étant > 0,05% en poids et
la composition contenant 0 à moins de 30,0% en poids d'autres polymères thermoplastiques, à l'exception du poly(méthacrylate de méthyle), 0 à moins de 0,02% en poids de suie, outre les colorants des groupes ii) à iv) moins de 0,1% en poids d'autres colorants et moins de 0,1% en poids de pigment blanc,
pour le recouvrement partiel ou total d'un capteur LiDAR, qui émet des impulsions laser d'une longueur d'onde dans la plage de 800 à 2500 nm.
